# EUROPÄISCHE PATENTSCHRIFT

(11) **EP 2 652 088 B1**
(45) Veröffentlichungstag und Bekanntmachung des Hinweises auf die Patenterteilung: **15.10.2014**
(21) Anmeldenummer: 11793665.8
(22) Anmeldetag: 02.12.2011
(51) Int. Cl.: C09K 19/32, C09K 19/54, C09K 19/34, C09K 19/44, C09K 19/04, C09K 19/12, C09K 19/30

(54) **FLÜSSIGKRISTALLINES MEDIUM**
LIQUID-CRYSTALLINE MEDIUM
MILIEU CRISTALLIN LIQUIDE

(30) Priorität: 17.12.2010 DE 102010054982
(43) Veröffentlichungstag der Anmeldung: 23.10.2013
(73) Patentinhaber: Merck Patent GmbH, 64293 Darmstadt (DE)
(72) Erfinder: MANABE, Atsutaka, 64625 Bensheim (DE); FISCHER, Mila, 64283 Darmstadt (DE); MONTENEGRO, Elvira, 69469 Weinheim (DE); KLASEN-MEMMER, Melanie, 67259 Heuchelheim (DE); BREMER, Matthias, 64295 Darmstadt (DE); MEYER, Volker, 64560 Riedstadt (DE)
(86) Internationale Anmeldenummer: PCT/EP2011/006045
(87) Internationale Veröffentlichungsnummer: WO 2012/079710

(56) Entgegenhaltungen:
- EP-A1- 1 768 117
- WO-A1-2004/048500
- US-B1- 6 444 278

## Beschreibung

Die Erfindung betrifft ein flüssigkristallines Medium auf der Basis eines Gemisches von polaren Verbindungen mit negativer dielektrischer Anisotropie, welches mindestens eine Verbindung der Formel I, 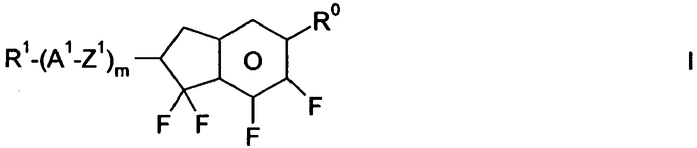 und
mindestens eine Verbindung ausgewählt aus der Gruppe der Verbindungen der Formeln IA*, IB*, IC* und ID*, 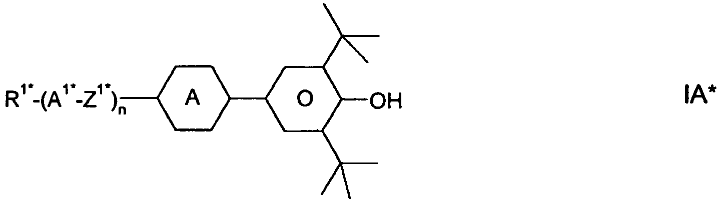 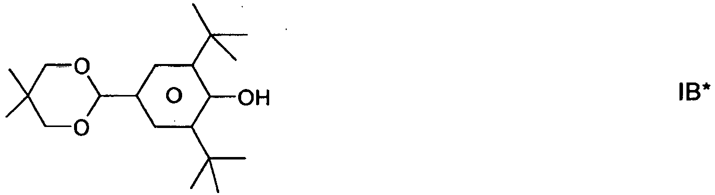 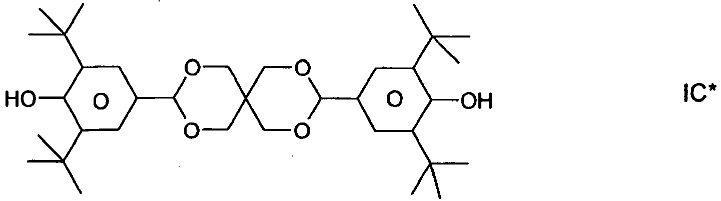 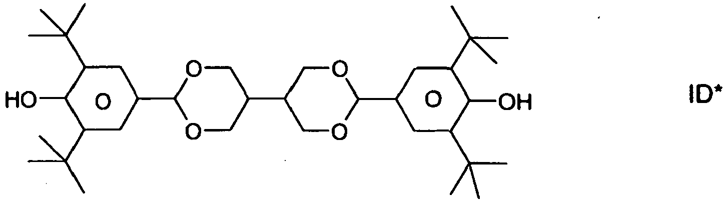 worin
- R¹, R^{1*} und R⁰: jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 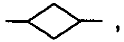 -C≡C-, -OC-O- oder -O-CO-so ersetzt sein können, dass O-Atome nicht direkt miteinander verknüpft sind,
- A¹ und A^{1*}: jeweils unabhängig voneinander
- a): einen 1,4-Cyclohexenylen- oder 1,4-Cyclohexylenrest, worin eine oder zwei nicht benachbarte CH₂-Gruppen durch -O- oder -S- ersetzt sein können,
- b): einen 1,4-Phenylenrest, worin eine oder zwei CH-Gruppen durch N ersetzt sein können,
- c): einen Rest aus der Gruppe Piperidin-1,4-diyl-, 1,4-Bicyclo[2,2,2]-octylen-, Naphthalin-2,6-diyl, Decahydronaphthalin-2,6-diyl, 1,2,3,4-Tetrahydro-naphthalin-2,6-diyl, Phenanthren-2,7-diyl, Fluoren-2,7-diyl,
wobei die Reste a), b) und c) ein oder mehrfach durch Halogenatome substituiert sein können,
- Z¹ und Z¹: jeweils unabhängig voneinander-CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- oder eine Einfachbindung,
- m und n: jeweils unabhängig voneinander 0, 1 oder 2, und 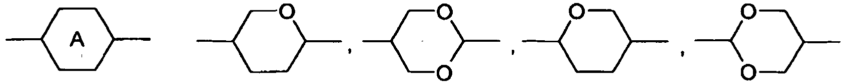 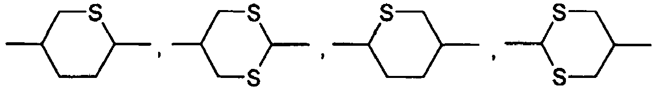 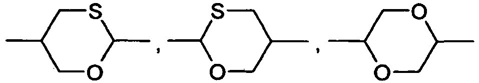
bedeuten,
enthält.

Derartige Medien sind insbesondere für elektrooptische Anzeigen mit einer Aktivmatrix-Addressierung basierend auf dem ECB-Effekt sowie für IPS-Anzeigen (In plane switching) oder FFS-Anzeigen (Fringe Field Switching) zu verwenden.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε von -0,5 bis -5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN- (Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFTs auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Wesentlich bessere Blickwinkelabhängigkeiten weisen VA-Displays auf und werden daher hauptsächlich für Fernseher und Monitore verwendet. Hier besteht jedoch weiterhin der Bedarf die Schaltzeiten zu verbessern, insbesondere im Hinblick auf die Verwendung für Fernseher mit "Frame Rates" (Bildwechselfrequenz/Wiederholraten) von mehr als 60 Hz. Dabei dürfen allerdings die Eigenschaften, wie beispielsweise die Tieftemperaturstabilität nicht verschlechtert werden.

Der Erfindung liegt die Aufgabe zugrunde, stabile FlüssigkristallMischungen, insbesondere für Monitor- und TV-Anwendungen, welche auf dem ECB- oder auf dem IPS- oder FFS-Effekt beruhen, bereitzustellen, die die oben angegebenen Nachteile nicht oder nur in geringerem Maße aufweisen. Insbesondere muss für Monitore und Fernseher gewährleistet sein, dass diese auch bei extrem hohen und extrem niedrigen Temperaturen arbeiten und gleichzeitig niedrige Schaltzeiten aufweisen und gleichzeitig ein verbessertes Reliability-Verhalten, insbesondere kein oder ein deutlich verringertes Image-Sticking nach langen Laufzeiten aufweisen.

Flüssigkristalline Medien enthaltend Indan-Verbindungen, wie sie z. B. in der WO 03/010120 und WO 2004/048500 offenbart werden, weisen zwar niedrige Rotationsviskositäten auf, haben aber den Nachteil, dass sie häufig nicht temperaturstabil sind. Unter Wärmeeinfluss, d. h. Temperaturen ≥ 100 °C, können sich Indan-Verbindungen zersetzen, die LC-Mischungen verfärben sich gelblich und die Holding Ratio (100 °C) der Mischung sinkt auf Werte unter 80 %.

Die Stabilisierung von flüssigkristallinen Mischungen mit einem Antioxidans wird beispielsweise in der EP 1 768 117 A1 offenbart.

Überraschenderweise ist es möglich die Stabilität von Indian-haltigen Mischungen zu verbessern, wenn man Indan-Verbindungen in Kombination mit sterisch gehinderten Phenol-Verbindungen in LC-Mischungen mit negativer dielektrischer Anisotropie, vorzugsweise VA-Mischungen, einsetzt. Geeignete Phenol-Verbindungen sind z.B. aus der U.S. 6,444,278 B1 bekannt.

Gegenstand der Erfindung ist somit ein flüssigkristallines Medium auf der Basis eines Gemisches von polaren Verbindungen mit negativer dielektrischer Anisotropie, welches mindestens eine Verbindung der Formel I und mindestens einen Stabilisator ausgewählt aus der Gruppe der Verbindungen der Formeln IA*, IB*, IC* und ID* enthält.

Die erfindungsgemäßen Mischungen zeigen sehr günstige Werte für die kapazitive Schwelle, relativ hohe Werte für die Holding Ratio und gleichzeitig eine sehr gute Tieftemperaturstabilität sowie sehr geringe Rotationsviskositäten.

Bevorzugt sind flüssigkristalline Medien, die ein, zwei, drei, vier oder mehr, vorzugsweise ein oder zwei Verbindungen der Formel I enthalten.

Der Anteil an Verbindungen der Formel I im Gesamtgemisch beträgt vorzugsweise ≥ 5 Gew.%, insbesondere 5-30 Gew.% und ≥ besonders bevorzugt 5-25 Gew.%.

R¹ in der Formel I bedeutet vorzugsweise geradkettiges Alkyl, Vinyl, 1 E-Alkenyl oder 3-Alkenyl.

Falls R¹ Alkenyl bedeutet, so ist es vorzugsweise. CH₂=CH, CH₃-CH=CH, C₃H₇-CH=CH, CH₂=CH-C₂H₄ oder CH₃-CH=CH-C₂H₄.

R⁰ bedeutet vorzugsweise H oder geradkettiges Alkyl mit 1 bis 6 C-Atomen, insbesondere Methyl, Ethyl oder Propyl. Ganz besonders bevorzugt bedeutet R⁰ H.

Bevorzugte Verbindungen der Formel I sind ausgewählt aus den Teilformeln I1 bis 118, 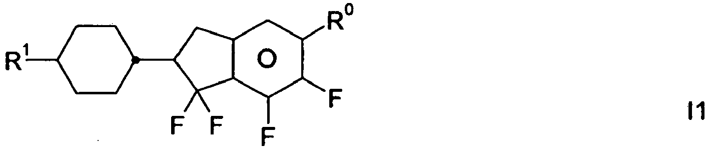 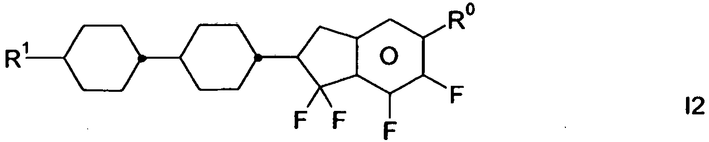 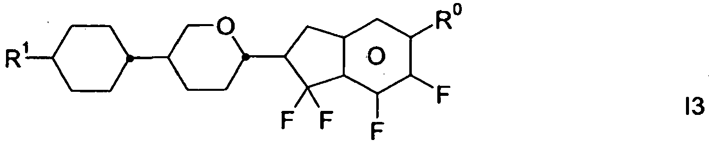 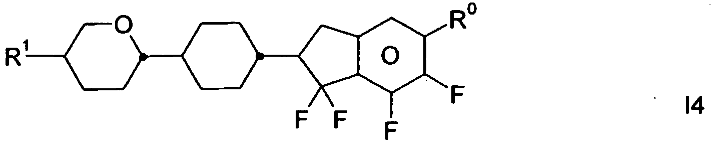 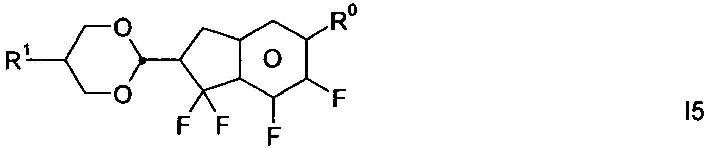 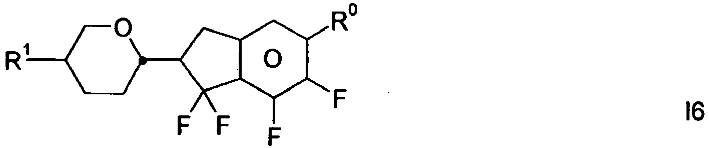 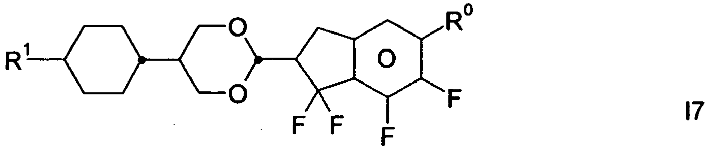 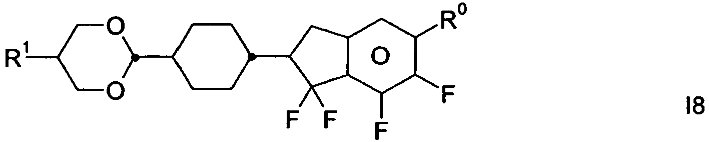 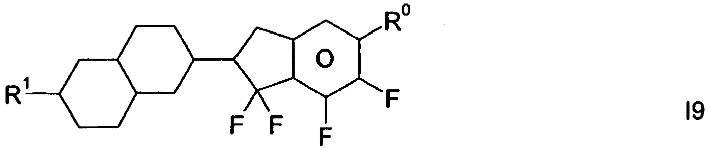 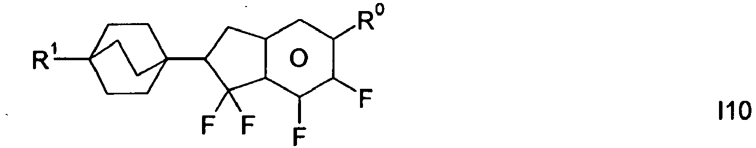 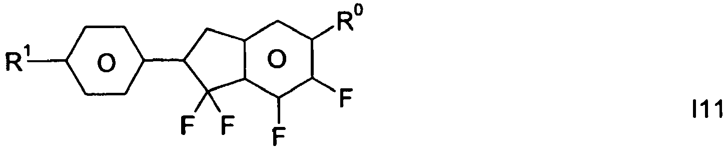 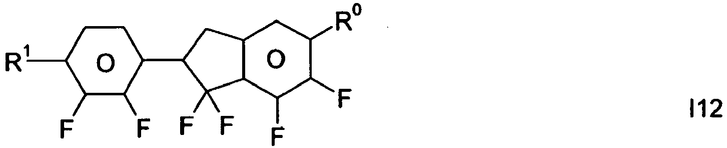 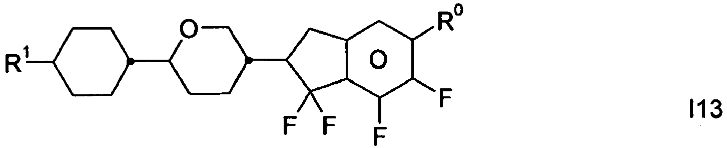 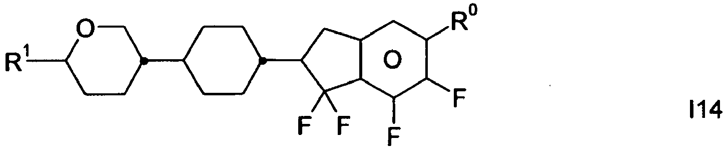 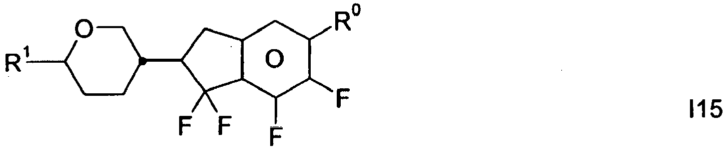 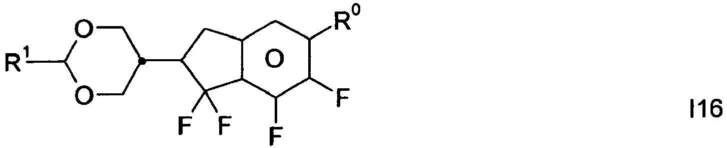 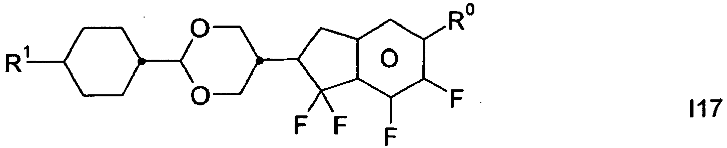 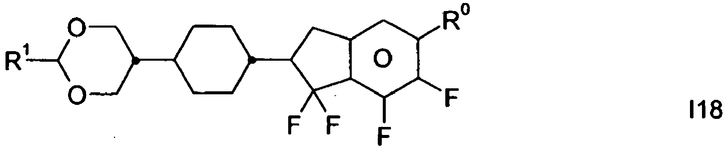 worin R¹ und R⁰ die oben angegebenen Bedeutungen haben.

Besonders bevorzugte Medien enthalten eine oder mehrere Verbindungen ausgewählt aus der Gruppe der Verbindungen der Formeln Ia bis Ii:

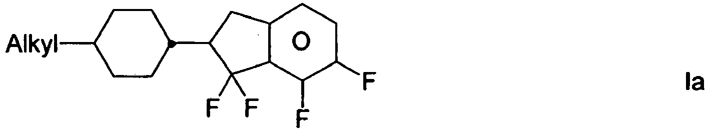

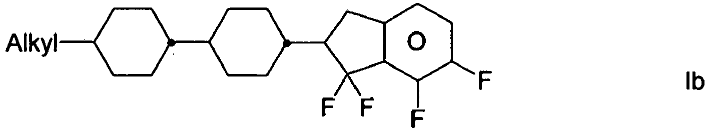

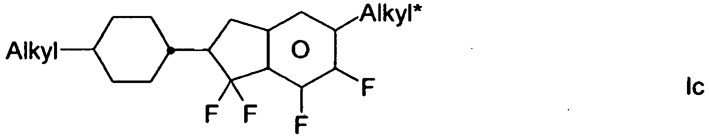

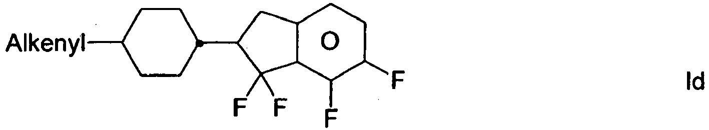

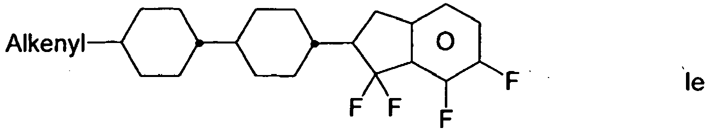

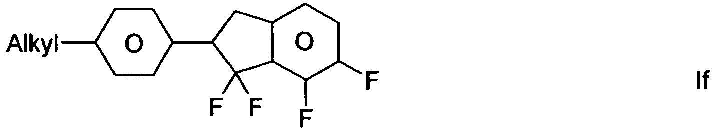

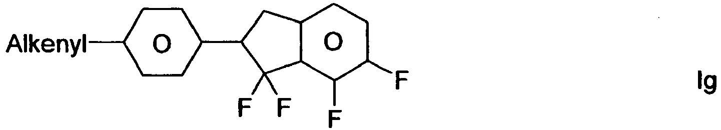

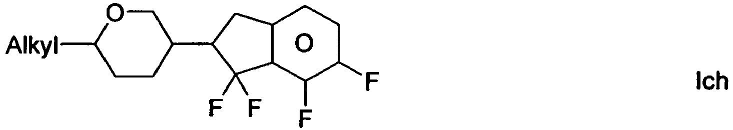

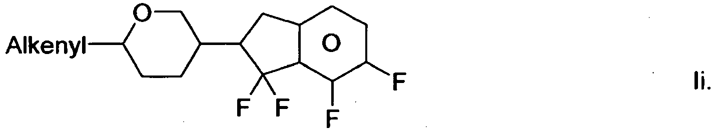

Insbesondere bevorzugt sind Medien, die mindestens eine Verbindung der Formel Ia und/oder Ih enthalten.

Bevorzugte Stabilisatoren der Formel IA* werden nachfolgend genannt:

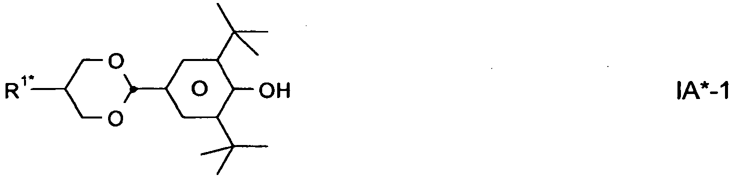

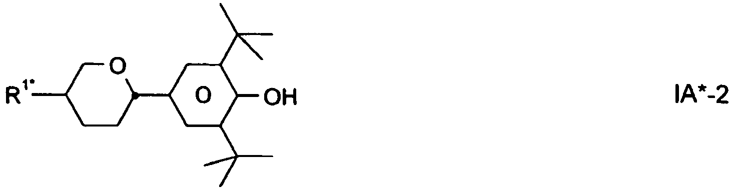

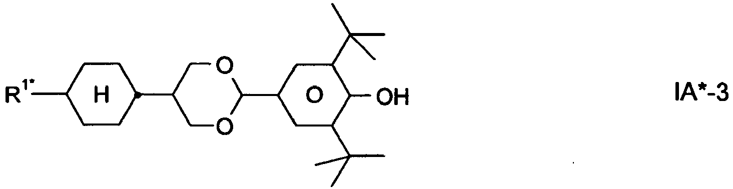

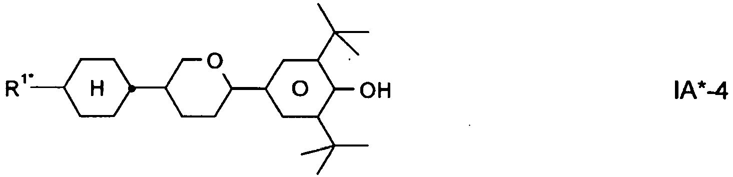

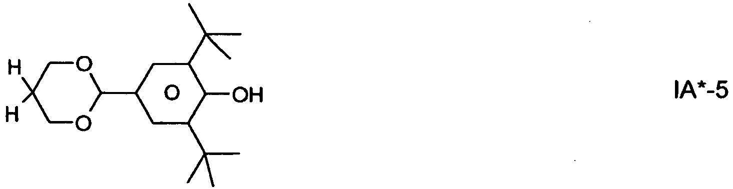

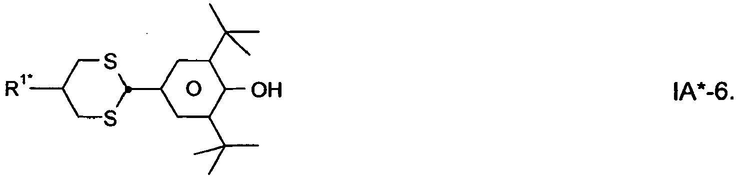

Vorzugsweise werden ein oder mehrere Verbindungen aus der Gruppe der Verbindungen der Formel IA*, IB*, IC* und ID* in Mengen von 0,001 - 6 %, insbesondere 0,001 - 3 %, bezogen auf die LC-Mischung eingesetzt.

Besonders bevorzugt ist die Verbindung der Formel IA*-1, insbesondere worin R^{1*} C₂H₅, n-C₃H₇ oder n-C₅H₁₁ bedeutet.

Die Verbindungen der Formel IA*, IB*, IC* können beispielsweise wie folgt hergestellt werden:

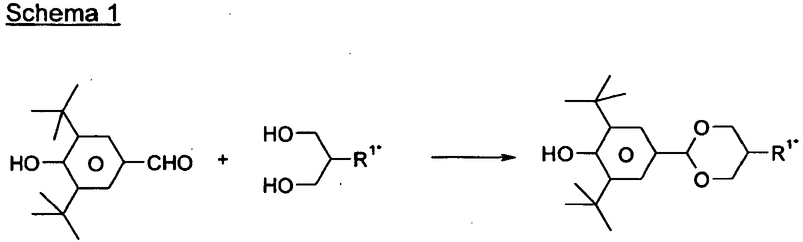

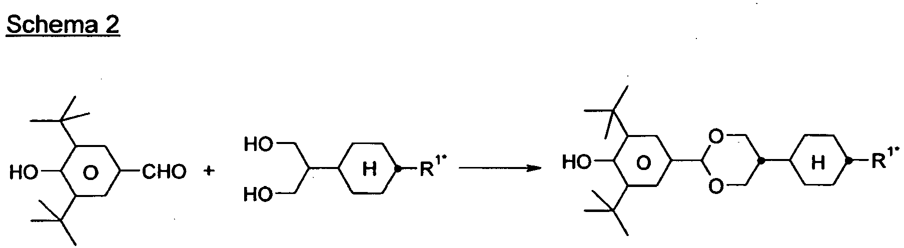

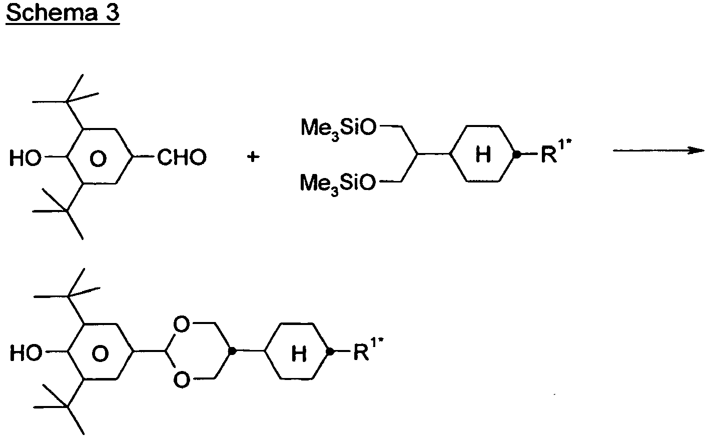

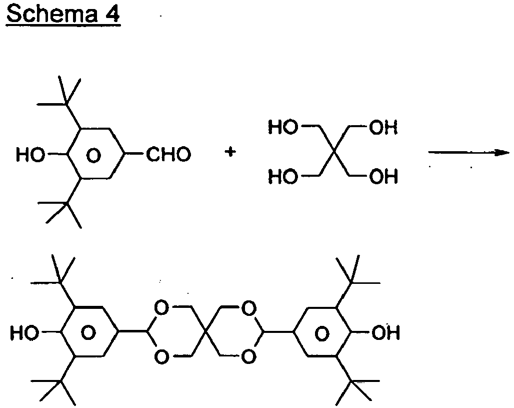

Bevorzugte Indan-Verbindungen können beispielsweise wie in WO 03/010120 oder in Schema 5 beschrieben, hergestellt werden.

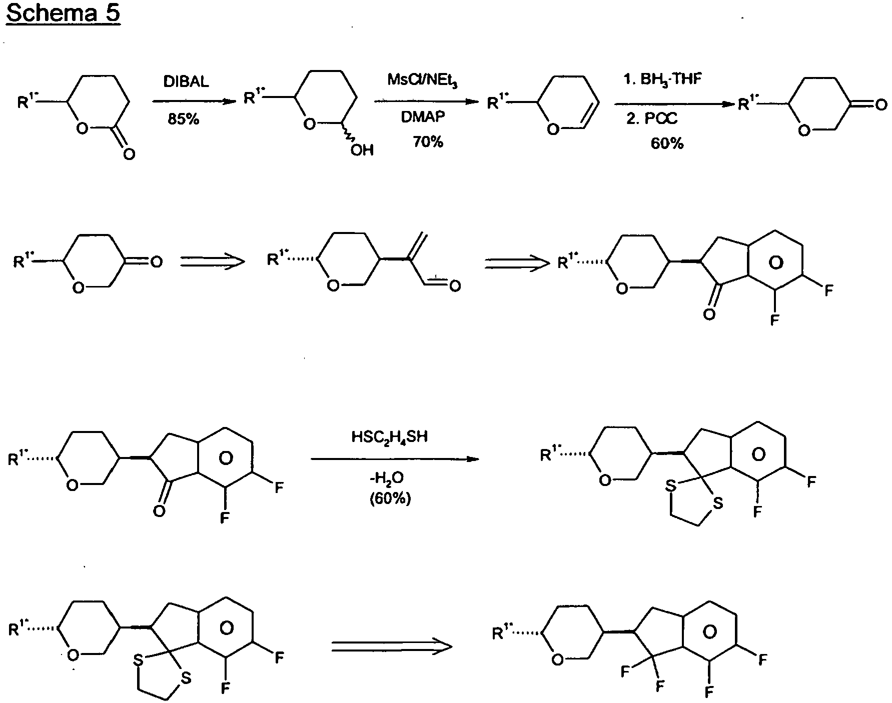

Im Folgenden werden bevorzugte Ausführungsformen für das erfindungsgemäße flüssigkristalline Medium angeführt:
a) Flüssigkristallines Medium, welches zusätzlich eine oder mehrere Verbindungen ausgewählt aus der Gruppe der Verbindungen der Formeln IIA, IIB und IIC enthält, 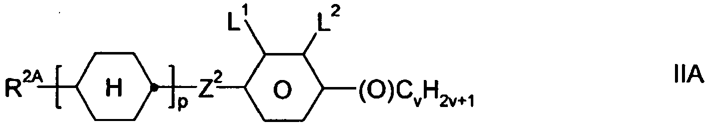 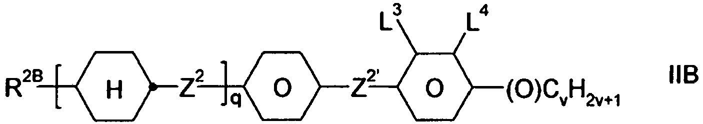 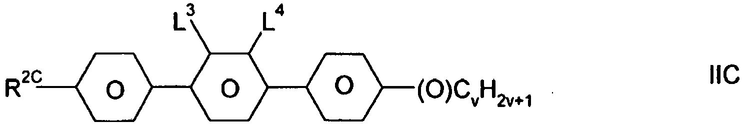 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 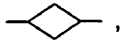 -C≡C-, -CF₂O-, -OCF₂-, -OC-O- oder -O-CO- so ersetzt sein können, dass O-Atome nicht direkt miteinander verknüpft sind,
   - L¹⁻⁴: jeweils unabhängig voneinander F, Cl, CF₃ oder CHF₂,
   - Z² und Z^{2'}: jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
   - p: 1 oder 2, und im Fall Z² = Einfachbindung kann p auch 0 bedeuten,
   - q: 0 oder 1, und
   - v: 1 bis 6
bedeuten.

In den Verbindungen der Formeln IIA und IIB können Z² gleiche oder unterschiedliche Bedeutungen haben. In den Verbindungen der Formel IIB können Z² und Z^{2'} gleiche oder verschiedene Bedeutungen aufweisen.

In den Verbindungen der Formeln IIA, IIB und IIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁.

In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIA und IIB vorzugsweise jeweils unabhängig voneinander eine Einfachbindung, ferner eine -C₂H₄-Brücke.

Sofern in der Formel IIB Z² = -C₂H₄- ist, ist Z^{2'} vorzugsweise eine Einfachbindung bzw. falls Z^{2'} = -C₂H₄- bedeutet, ist Z² vorzugsweise eine Einfachbindung. In den Verbindungen der Formeln IIA und IIB bedeutet (O)CᵥH₂ᵥ₊₁ vorzugsweise OCᵥH₂ᵥ₊₁, ferner C_{V}H₂ᵥ₊₁. In den Verbindungen der Formel IIC bedeutet (O)CᵥH₂ᵥ₊₁ vorzugsweise CᵥH_{2v+1.} In den Verbindungen der Formel IIC bedeuten L³ und L⁴ vorzugsweise jeweils F.

Bevorzugte Verbindungen der Formeln IIA, IIB und IIC werden nachfolgend genannt, 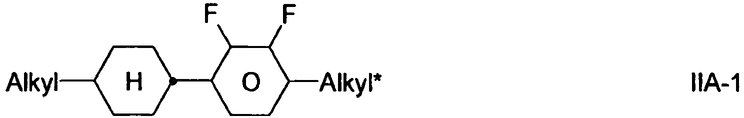 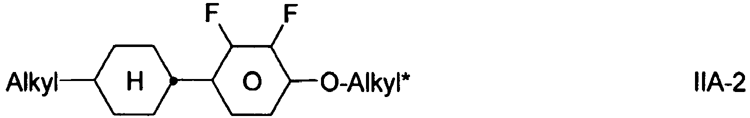 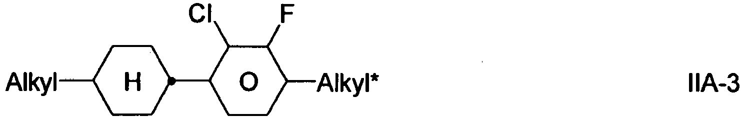 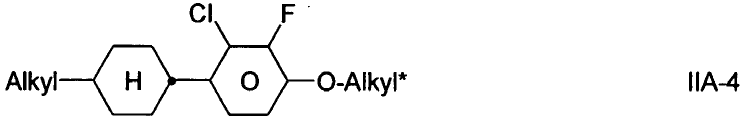 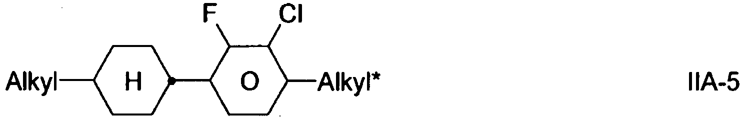 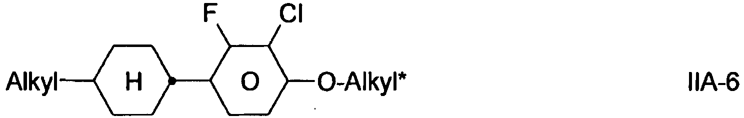 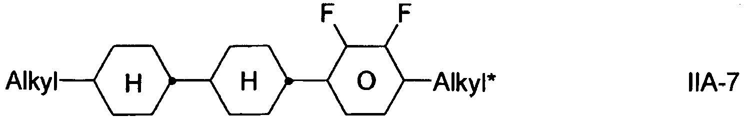 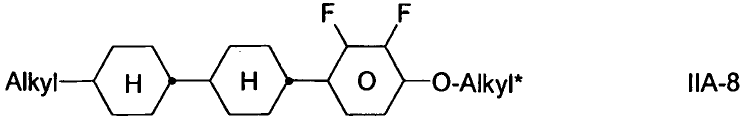 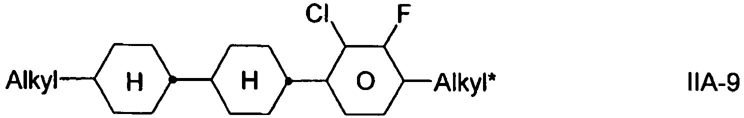 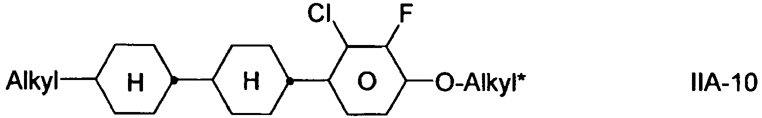 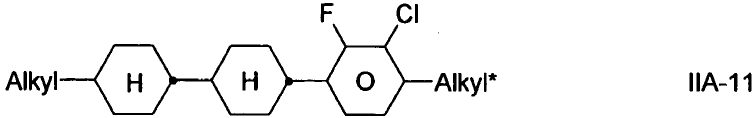 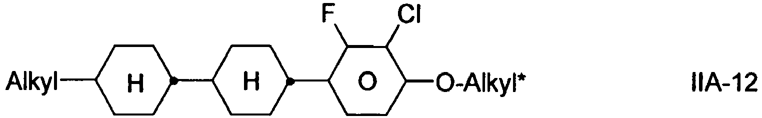 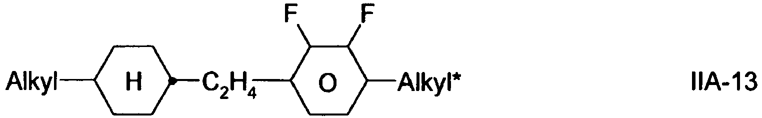 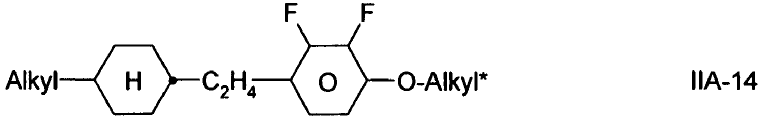 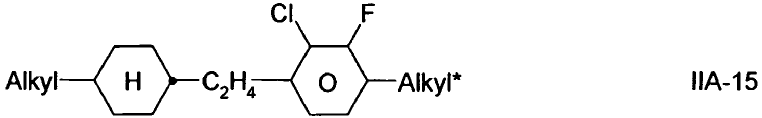 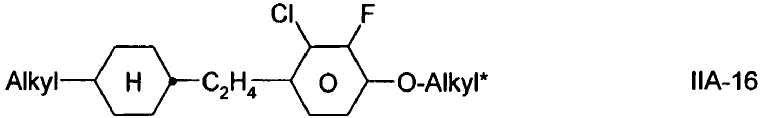 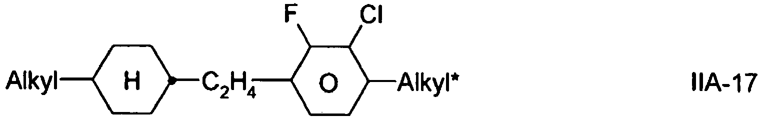 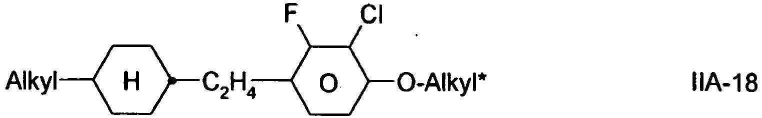 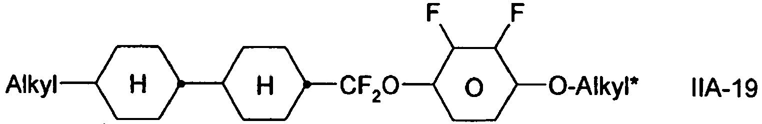 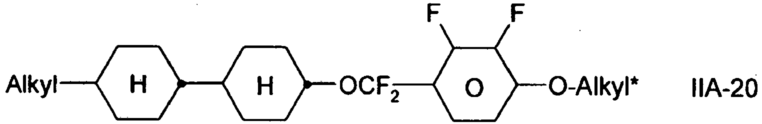 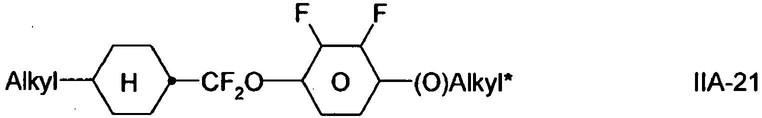 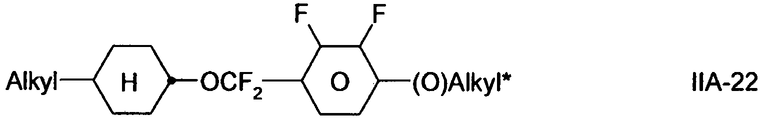 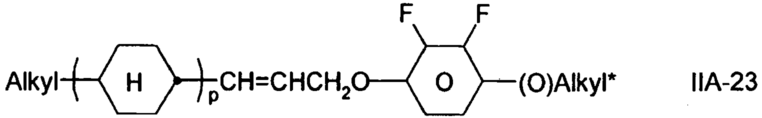 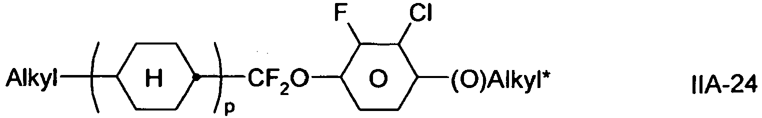 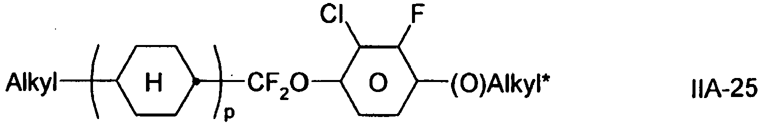 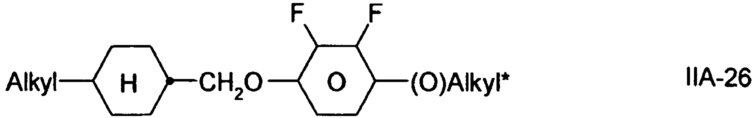 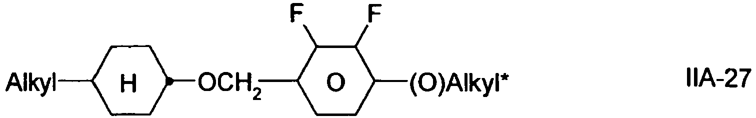 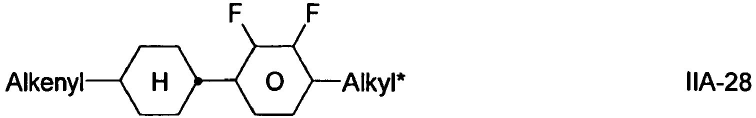 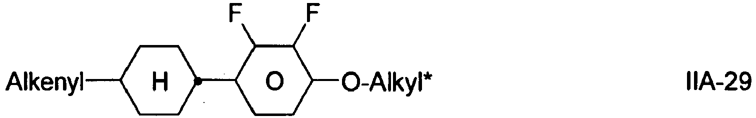 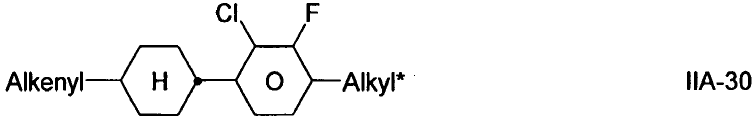 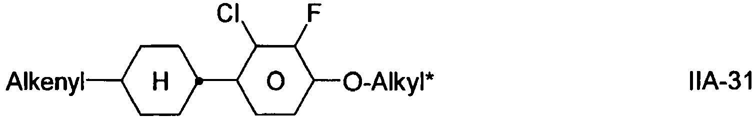 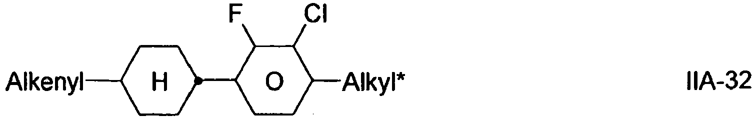 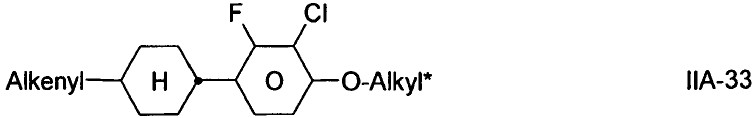 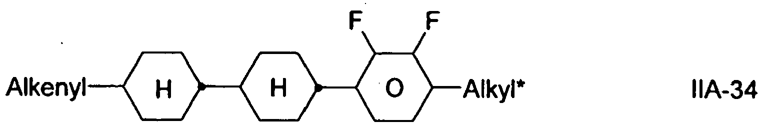 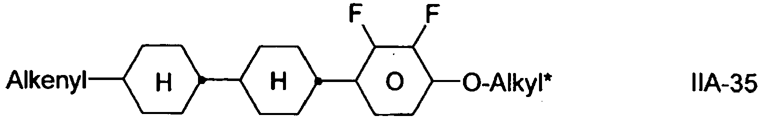 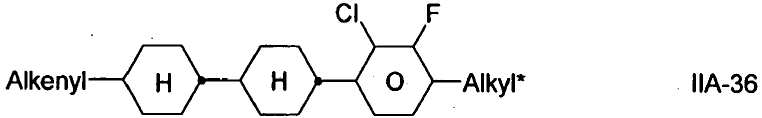 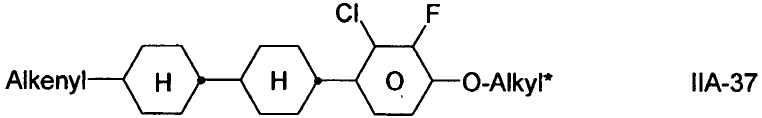 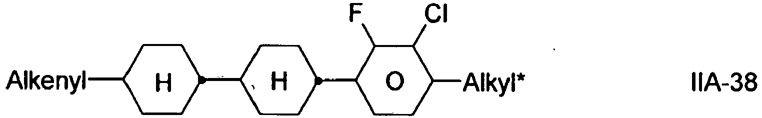 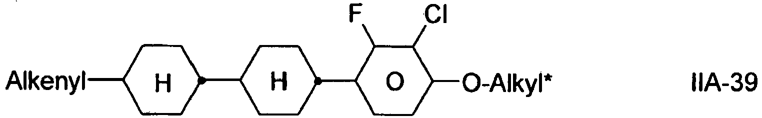 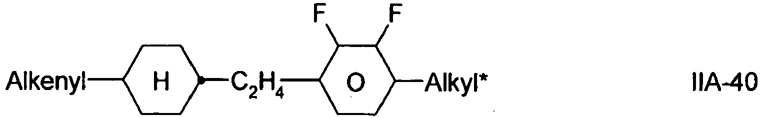 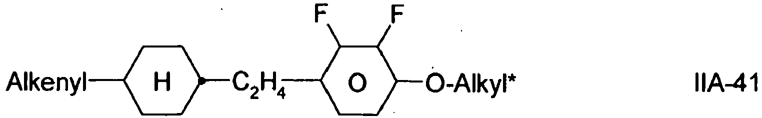 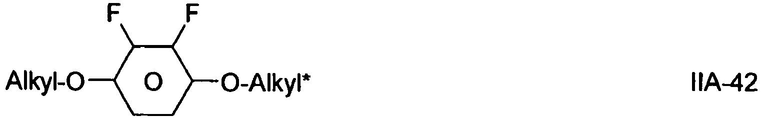 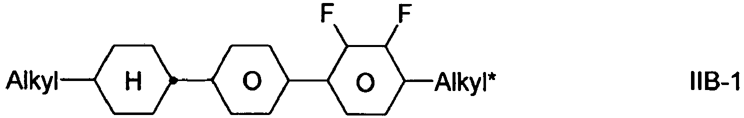 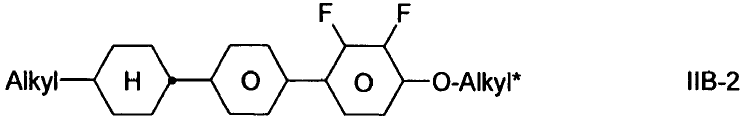 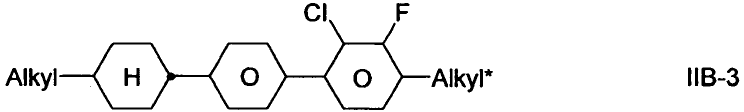 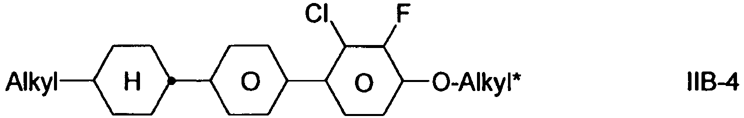 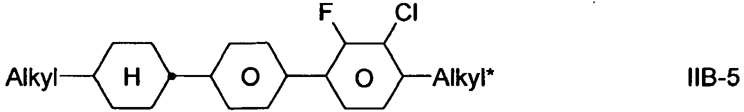 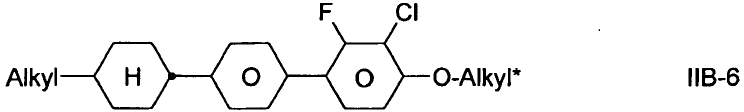 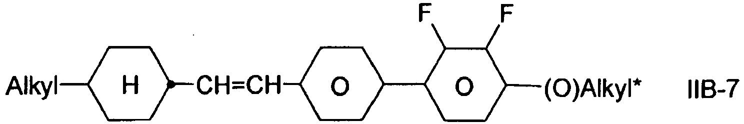 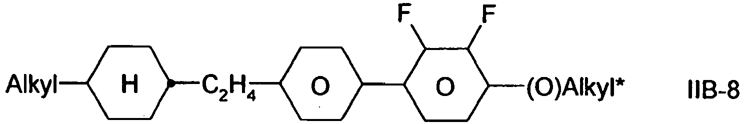 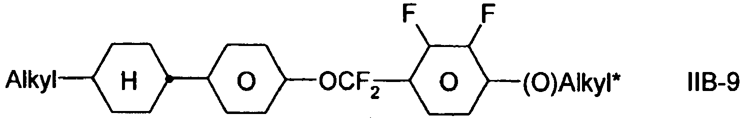 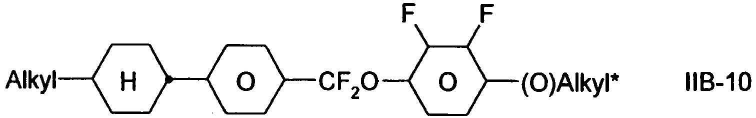 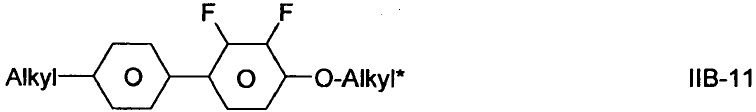 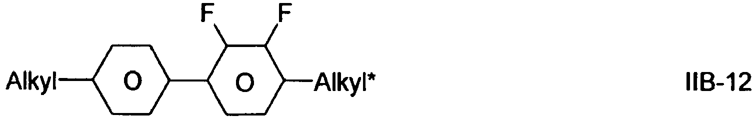 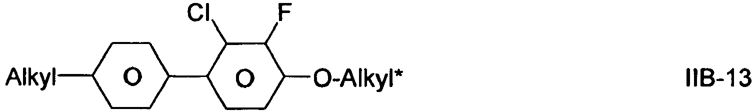 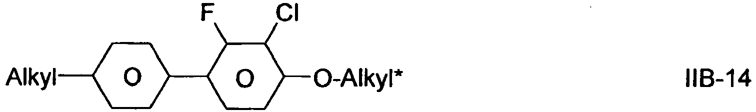 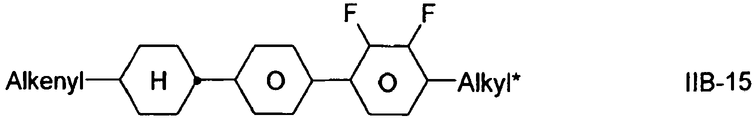 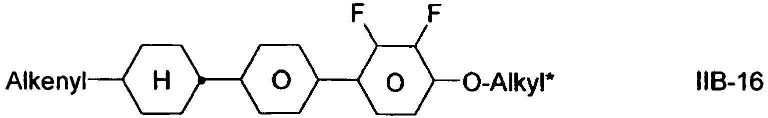 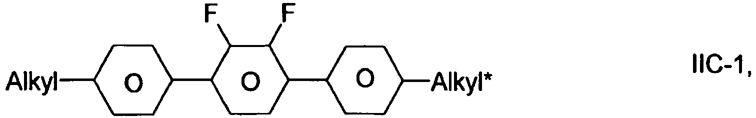 worin Alkyl und Alkyl* jeweils unabhängig voneinander einen geradkettigen Alkylrest mit 1-6 C-Atomen bedeuten.

Besonders bevorzugte erfindungsgemäße Mischungen enthalten eine oder mehrere Verbindungen der Formeln IIA-2, IIA-8, IIA-14, IIA-29, IIA-35, IIB-2, IIB-11, IIB-16 und IIC-1.

Vorzugsweise beträgt der Anteil an Verbindungen der Formeln IIA und/oder IIB im Gesamtgemisch mindestens 20 Gew.%.

Besonders bevorzugte erfindungsgemäße Medien enthalten mindestens eine Verbindung der Formel IIC-1, 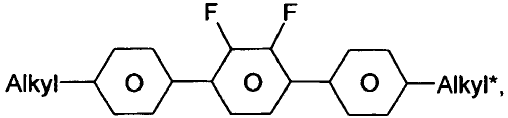 worin Alkyl und Alkyl*' die oben angegebenen Bedeutungen haben, vorzugsweise in Mengen von ≥ 3 Gew.%, insbesondere ≥ 5 Gew.% und besonders bevorzugt von 5-25 Gew.%.
b) Flüssigkristallines Medium, welches zusätzlich eine oder mehrere Verbindungen der Formel III 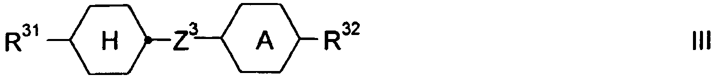
enthält,
worin
- R³¹ und R³²: jeweils unabhängig voneinander einen geradkettigen Alkyl-, Alkoxyalkyl- oder Alkoxyrest mit bis zu 12 C-Atomen, 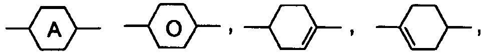 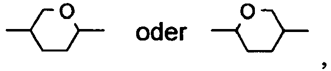
- Z³: Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF-
bedeuten.

Bevorzugte Verbindungen der Formel III werden nachfolgend genannt, 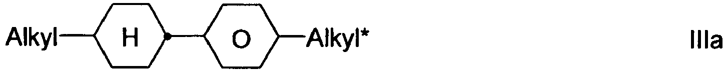 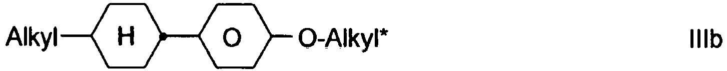 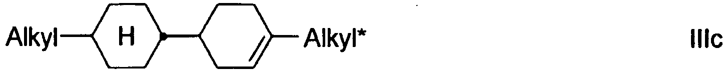 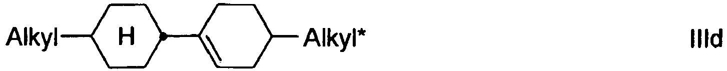 worin
Alkyl und
- Alkyl*: jeweils unabhängig voneinander einen geradkettigen Alkylrest mit 1-6 C-Atomen
bedeuten.

Vorzugsweise enthält das erfindungsgemäße Medium mindestens eine Verbindung der Formel IIIa und/oder Formel IIIb.

Der Anteil an Verbindungen der Formel III im Gesamtgemisch beträgt vorzugsweise mindestens 5 Gew.%.
c) Flüssigkristallines Medium enthaltend zusätzlich eine Verbindung der Formel 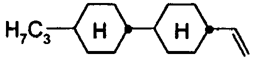 und / oder 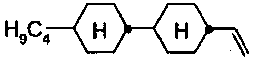 und / oder 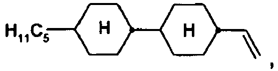 vorzugsweise in Gesamtmengen von ≥ 5 Gew.%, insbesondere von ≥ 10 Gew.%. Weiterhin bevorzugt sind erfindungsgemäße Mischungen enthaltend die Verbindung 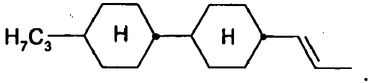
d) Flüssigkristallines Medium, welches zusätzlich eine oder mehrere Vierkernverbindungen der Formeln, 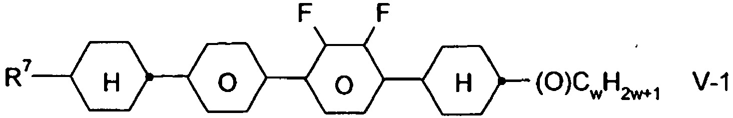 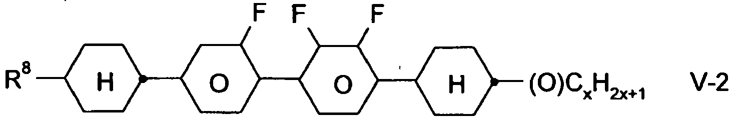 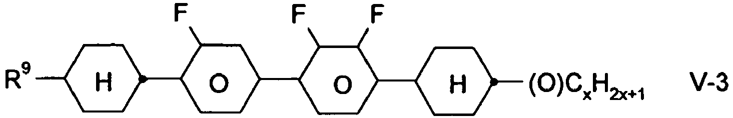 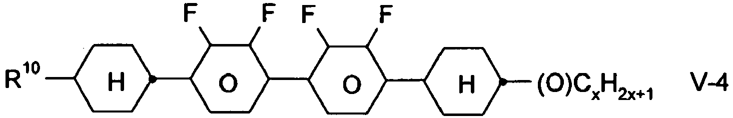 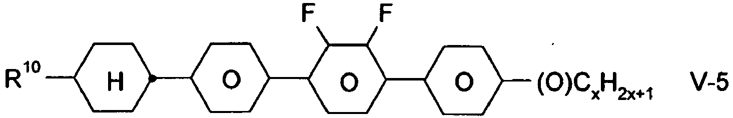 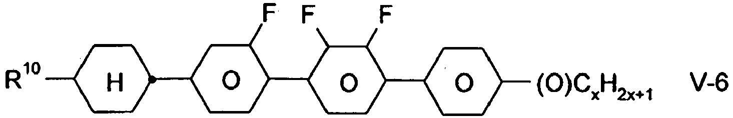 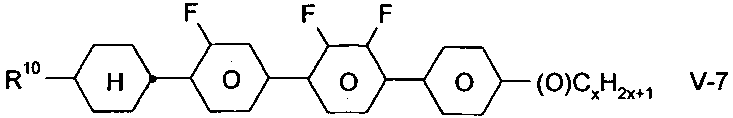 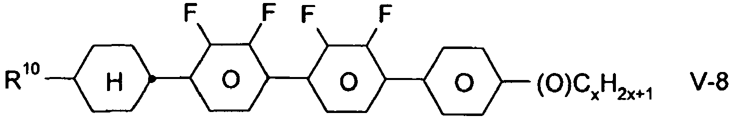 worin
   - R⁷⁻¹⁰: jeweils unabhängig voneinander eine der in Anspruch 6 für R^{2A} angegebenen Bedeutung haben, und
   - w und x: jeweils unabhängig voneinander 1 bis 6,
   bedeuten,
   enthält.
e) Flüssigkristallines Medium, welches zusätzlich eine oder mehrere Verbindungen der Formeln Y-1 bis Y-6, 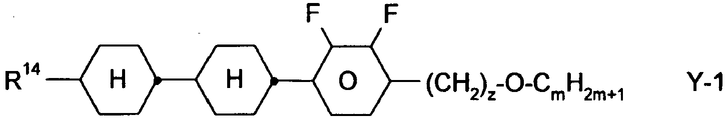 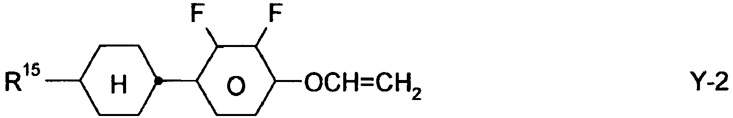 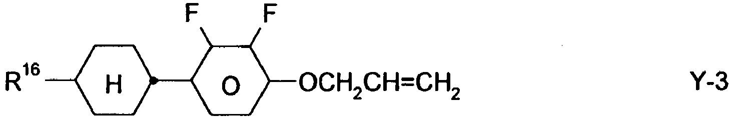 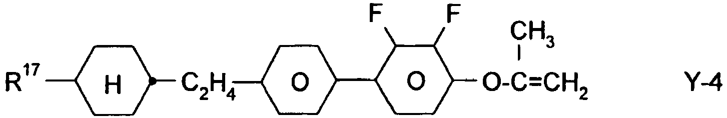 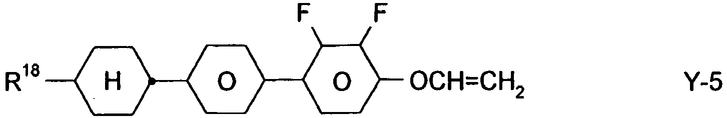 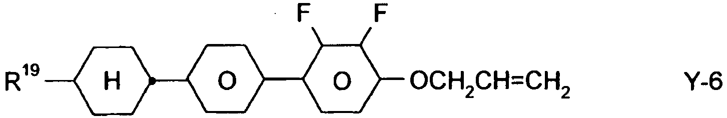 enthält,
   worin R¹⁴-R¹⁹ jeweils unabhängig voneinander einen Alkyl- oder Alkoxyrest mit 1-6 C-Atomen bedeuten; z und m bedeuten jeweils unabhängig voneinander 1-6; x bedeutet 0, 1, 2 oder 3.
   Insbesondere bevorzugt enthält das erfindungsgemäße Medium eine oder mehrere Verbindungen der Formel Y-1 bis Y-6, vorzugsweise in Mengen von ≥ 5 Gew.%.
f) Flüssigkristallines Medium enthaltend zusätzlich ein oder mehrere fluorierte Terphenyle der Formeln T-1 bis T-21, 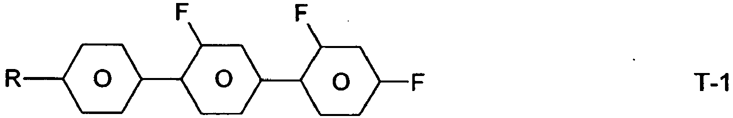 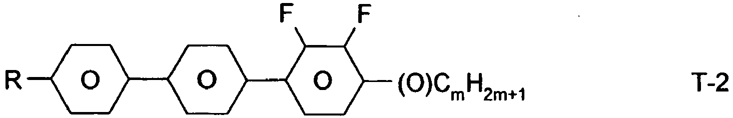 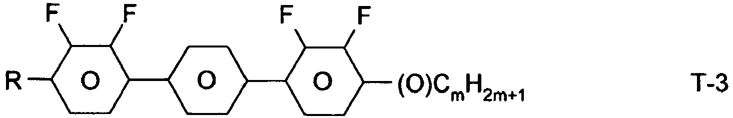 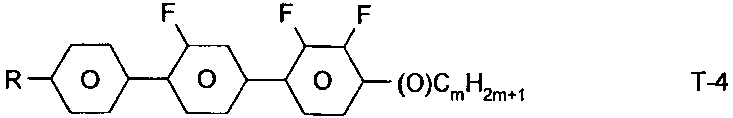 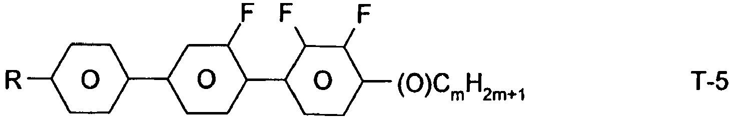 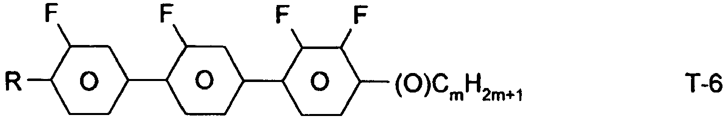 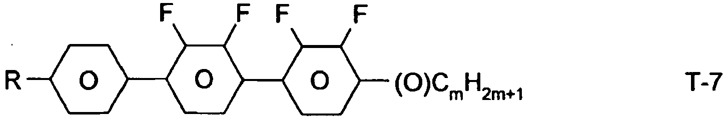 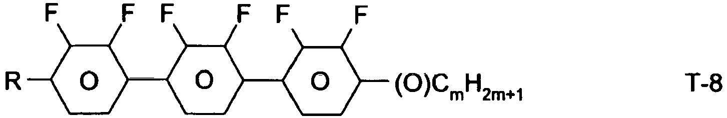 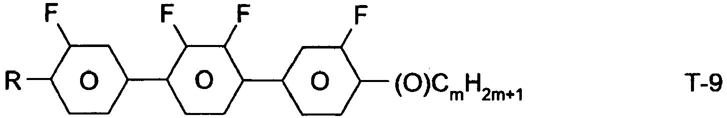 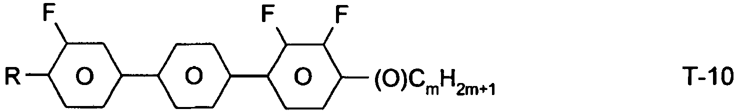 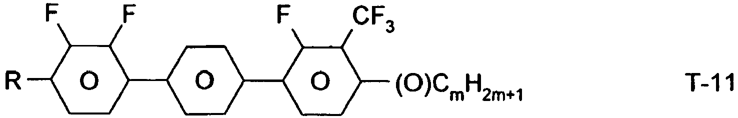 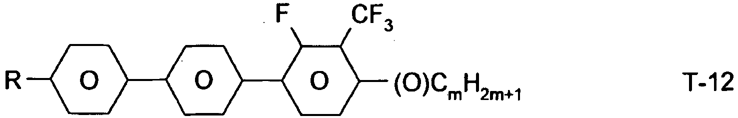 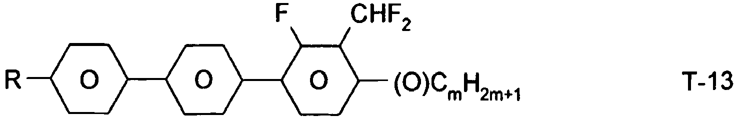 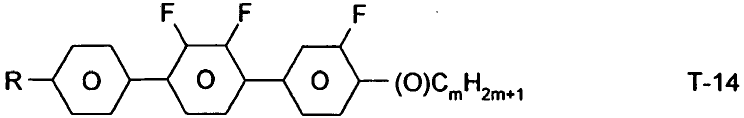 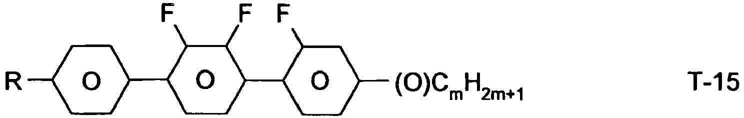 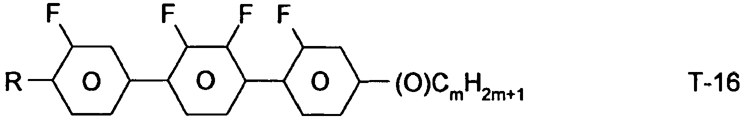 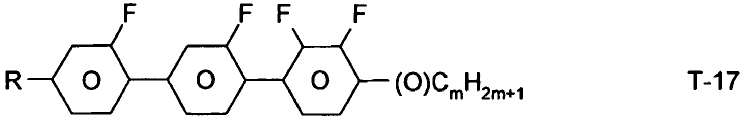 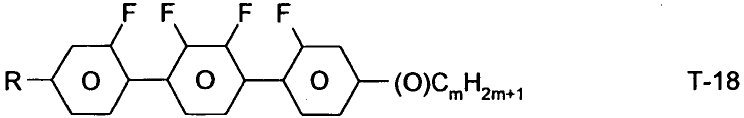 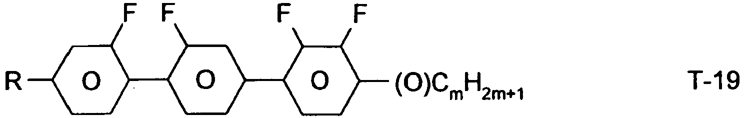 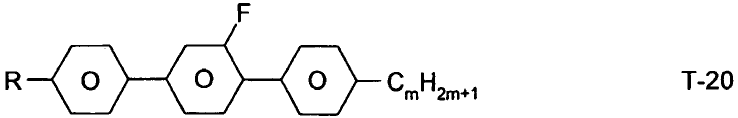 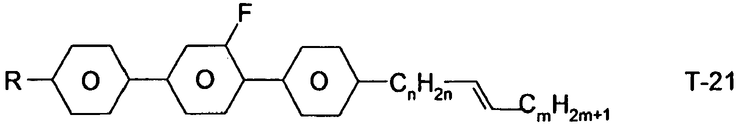 worin
   R geradkettiger Alkyl- oder Alkoxyrest mit 1-7 C-Atomen bedeutet, und m = 0, 1, 2, 3, 4, 5 oder 6 und n 0, 1, 2, 3 oder 4 bedeuten,
   enthält.
   Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-21 vorzugsweise in Mengen von 2-30 Gew.%, insbesondere von 5-20 Gew.%.
   Besonders bevorzugt sind Verbindungen der Formeln T-1, T-2, T-20 und T-21. In diesen Verbindungen bedeutet R vorzugsweise Alkyl, ferner Alkoxy jeweils mit 1-5 C-Atomen. In den Verbindungen der Formel T-20 bedeutet R vorzugsweise Alkyl oder Alkenyl, insbesondere Alkyl. In der Verbindung der Formel T-21 bedeutet R vorzugsweise Alkyl.
   Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-21.
g) Flüssigkristallines Medium enthaltend zusätzlich ein oder mehrere Biphenyle der Formeln B-1 bis B-3, 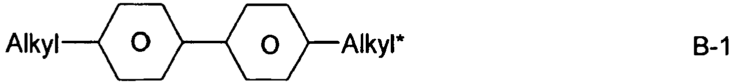 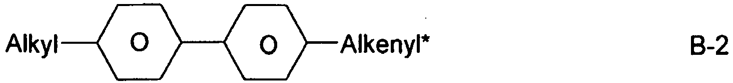 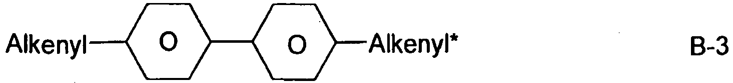 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen
bedeuten.

Der Anteil der Biphenyle der Formeln B-1 bis B-3 in der Gesamtmischung beträgt vorzugsweise mindestens 3 Gew.%, insbesondere ≥ 5 Gew.%.

Von den Verbindungen der Formeln B-1 bis B-3 sind die Verbindungen der Formel B-2 insbesondere bevorzugt.

Besonders bevorzugte Biphenyle sind 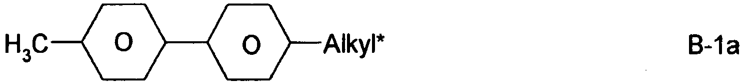 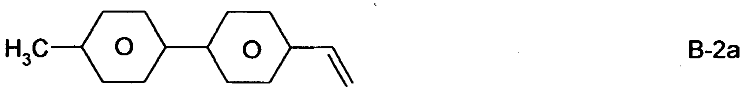 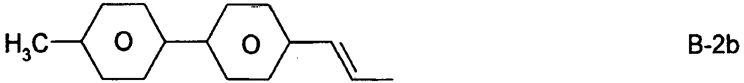 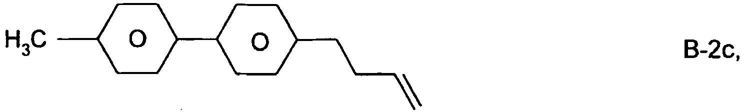 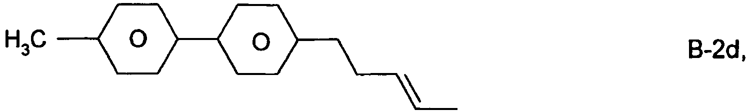 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
h) Flüssigkristallines Medium enthaltend mindestens eine Verbindung der Formeln Z-1 bis Z-7, 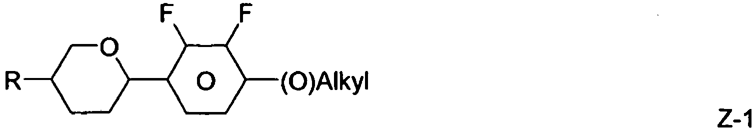 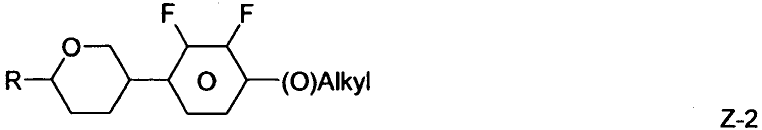 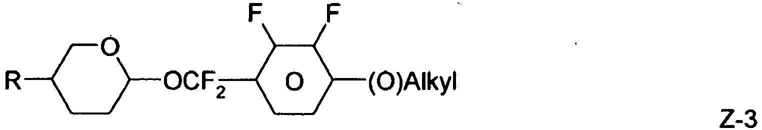 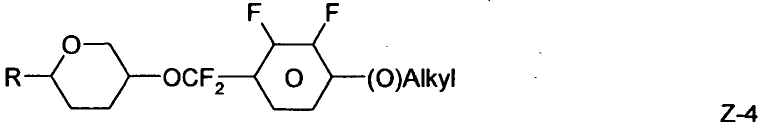 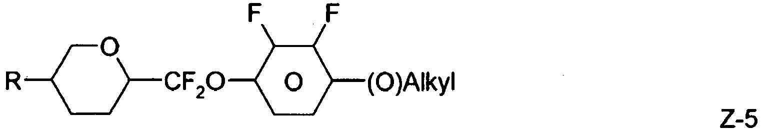 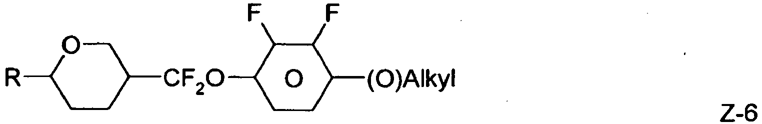 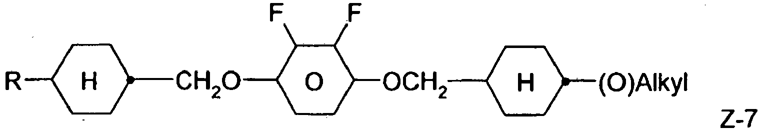 worin R und Alkyl die oben angegebenen Bedeutungen haben.
i) Flüssigkristallines Medium enthaltend mindestens eine Verbindung der Formeln O-1 bis O-16, 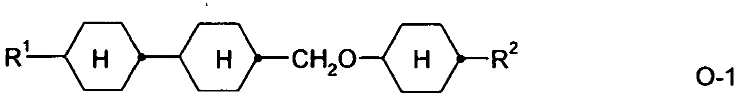 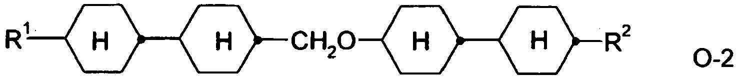 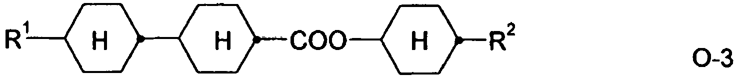 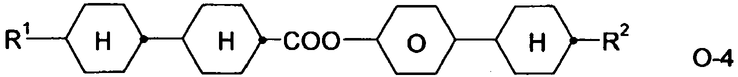 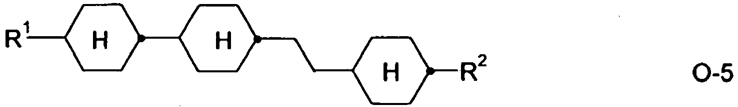 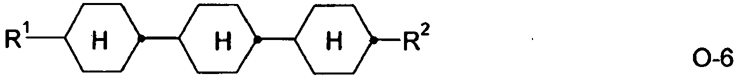 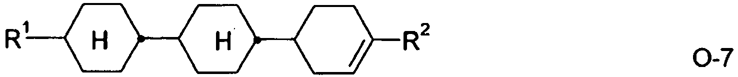 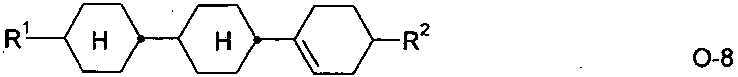 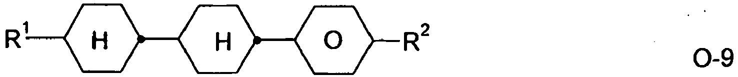 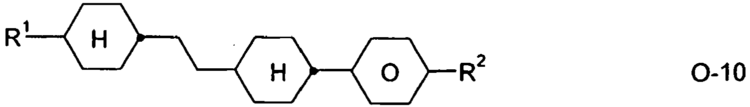 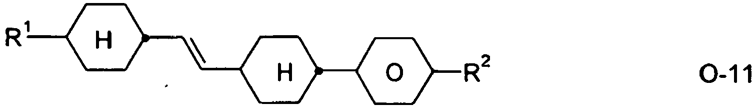 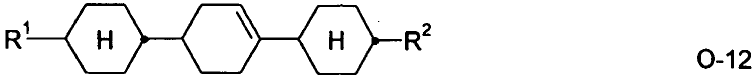 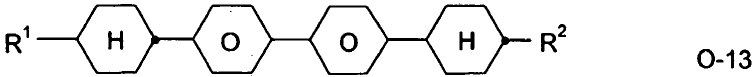 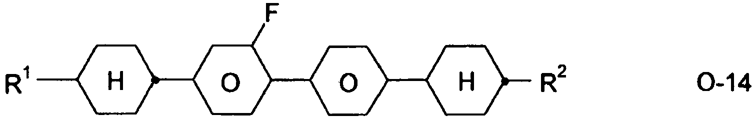 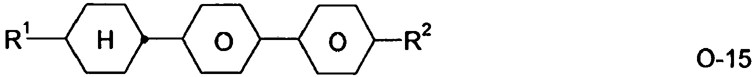 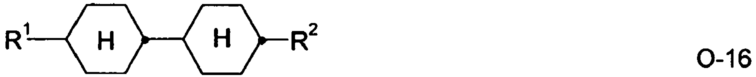
worin R¹ und R² die für R^{2A} angegebenen Bedeutungen haben. Vorzugsweise bedeuten R¹ und R² jeweils unabhängig voneinander geradkettiges Alkyl.

Bevorzugte Medien enthalten eine oder mehrere Verbindungen der Formeln O-1, O-3, O-4, O-5, O-9, O-13, O-14, O-15 und/oder O-16.

Erfindungsgemäße Mischungen enthalten ganz besonders bevorzugt die Verbindungen der Formel O-9, O-15 und/oder O-16, inbesondere in Mengen von 5-30 %.

Bevorzugte Verbindungen der Formeln O-15 und O-16 werden nachfolgend genannt:

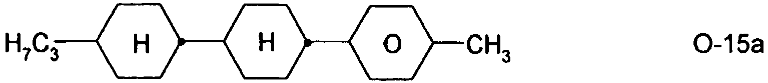

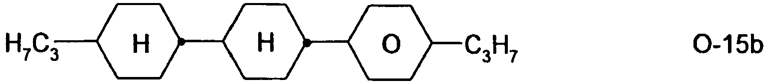

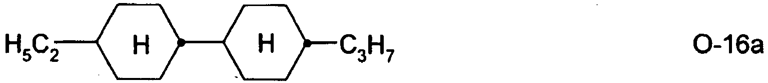

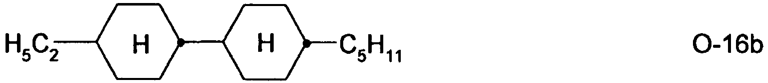

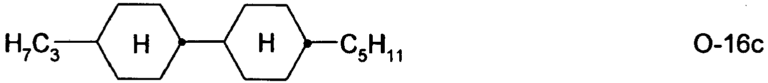

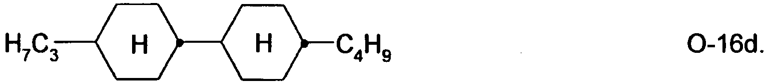

Besonders bevorzugt enthält das erfindungsgemäße Medium die Dreikern-Verbindungen der Formel O-15a und/oder der Formel O-15b in Kombination mit einer oder mehreren Zweikern-Verbindungen der Formeln 0-16a bis O-16d. Vorzugsweise beträgt der Gesamtanteil der Verbindungen der Formel O-15a und/oder O-15b in Kombination mit einer oder mehreren Verbindungen ausgewählt aus den Zweikern-verbindungen der Formeln O-16a bis O-16d 5-40 %, ganz besonders bevorzugt 15-35 %.

Ganz besonders bevorzugte Mischungen enthalten die Verbindungen O-15a und O-16a:

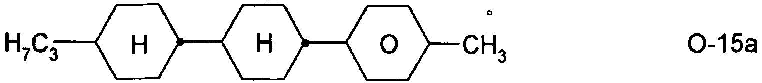

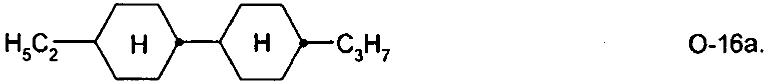

Vorzugsweise sind die Verbindungen O-15a und O-16a in der Mischung in einer Konzentration von 15-35 %, besonders bevorzugt von 15-25 % und insbesondere bevorzugt von 18-22 % bezogen auf die Gesamtmischung, enthalten.

Ganz besonders bevorzugte Mischungen enthalten die Verbindungen O-15b und O-16a:

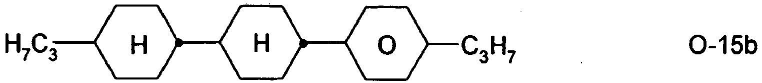

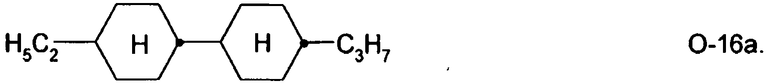

Vorzugsweise sind die Verbindungen O-15b und O-16a in der Mischung in einer Konzentration von 15-35 %, besonders bevorzugt von 15-25 % und insbesondere bevorzugt von 18-22 % bezogen auf die Gesamtmischung, enthalten.

Ganz besonders bevorzugte Mischungen enthalten folgende drei Verbindungen:

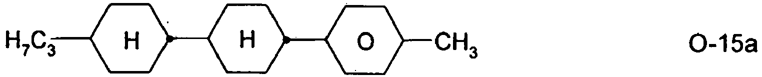

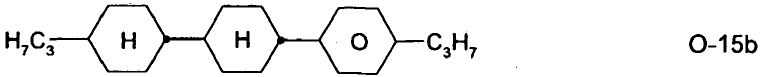

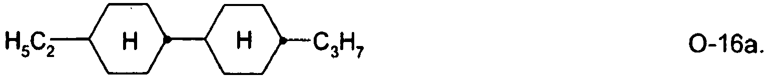

Vorzugsweise sind die Verbindungen O-15a, O-15b uns O-16a in der Mischung in einer Konzentration von 15-35 %, besonders bevorzugt von 15-25 % und insbesondere bevorzugt von 18-22 % bezogen auf die Gesamtmischung, enthalten.
j) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 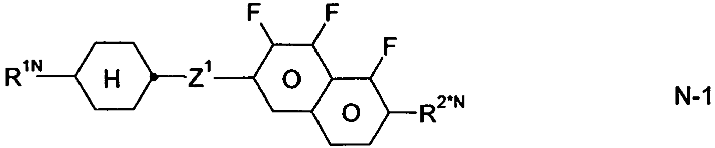 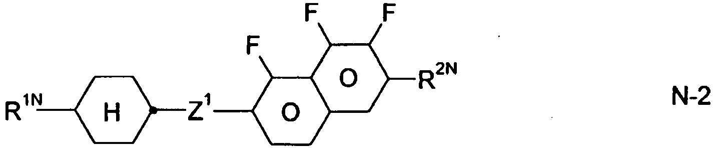 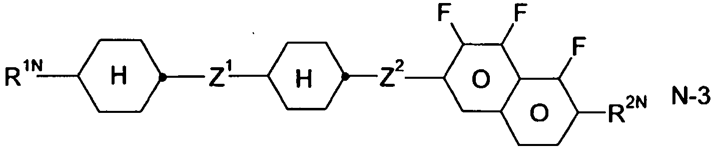 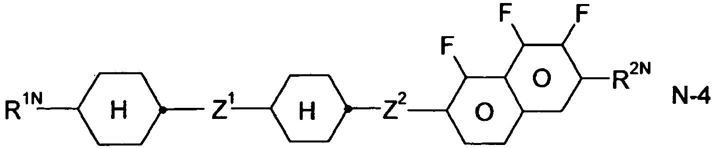 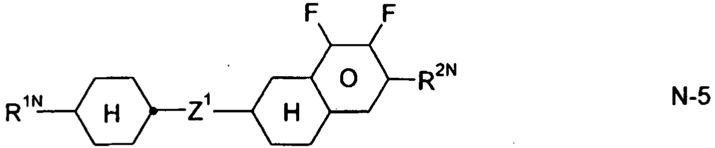 worin R^{1N} und R^{2N} jeweils unabhängig voneinander die für R^{2A} angegebenen Bedeutungen haben, vorzugsweise geradkettiges Alkyl, geradkettiges Alkoxy oder geradkettiges Alkenyl bedeuten, und
   - Z¹ und Z²: jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
k) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, fluorierte Dibenzofurane der Formeln BF, 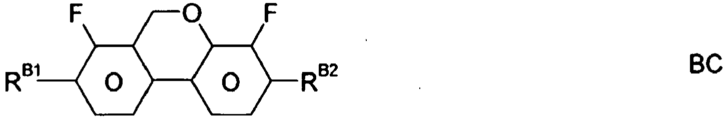 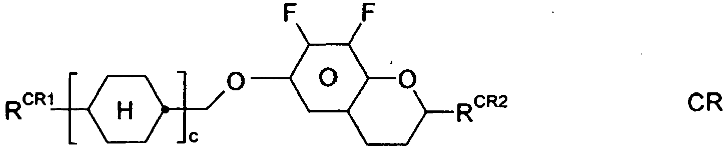 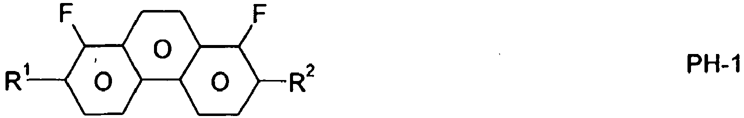 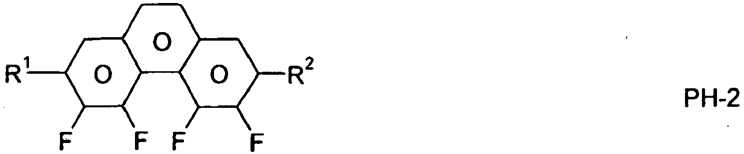 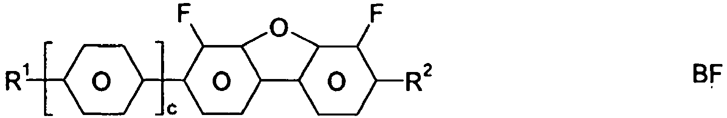 worin
   R^{B1}, R^{B2}, R^{CR1}, R^{CR2} R¹, R² jeweils unabhängig voneinander die Bedeutung von R^{2A} aufweisen. c ist 0, 1 oder 2.

Die erfindungsgemäßen Mischungen enthalten die Verbindungen der Formeln BC, CR, PH-1, PH-2 und/oder BF vorzugsweise in Mengen von 3 bis 20 Gew.%, insbesondere in Mengen von 3 bis 15 Gew.%. Besonders bevorzugte Verbindungen der Formeln BC und CR sind die Verbindungen BC-1 bis BC-7 und CR-1 bis CR-5, 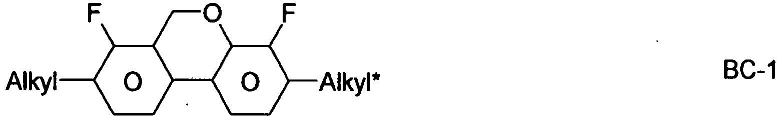 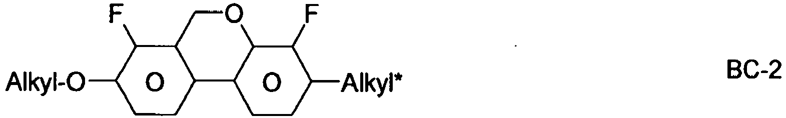 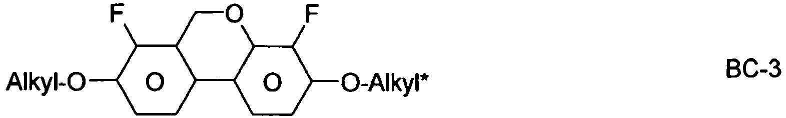 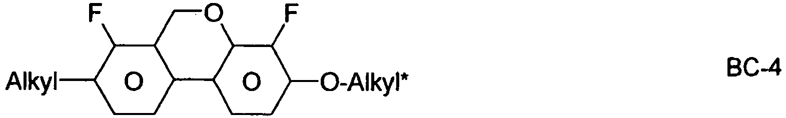 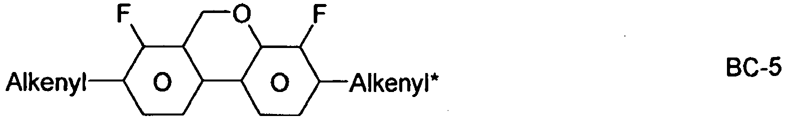 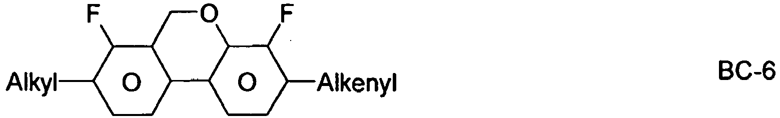 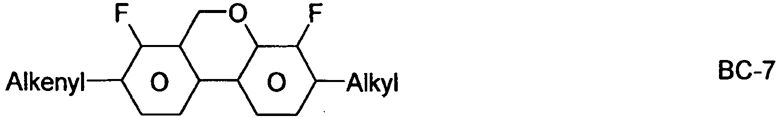 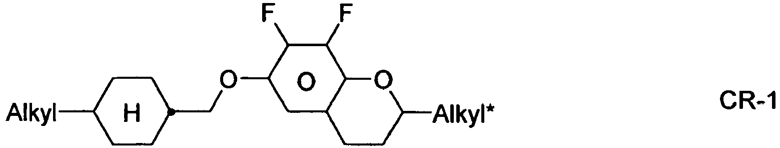 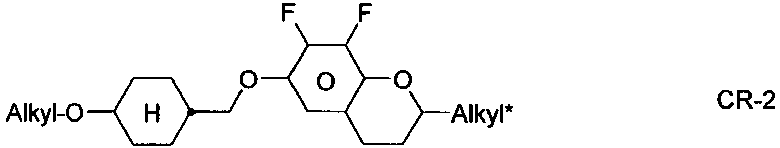 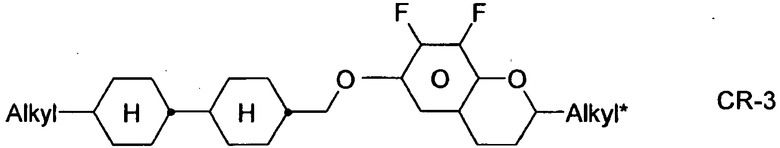 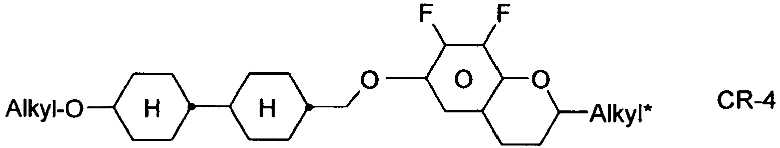 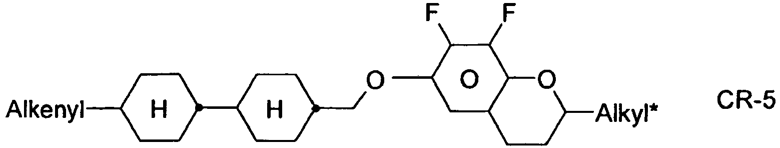 worin
- Alkyl und Alkyl*: jeweils unabhängig voneinander einen geradkettigen Alkylrest mit 1-6 C-Atomen, und
- Alkenyl und Alkenyl*: jeweils unabhängig voneinander einen geradkettigen Alkenylrest mit 2-6 C-Atomen,
bedeuten.

Ganz besonders bevorzugt sind Mischungen enthaltend eine, zwei oder drei Verbindungen der Formel BC-2.

Bevorzugte Mischungen enthalten eine oder mehrere Verbindungen der Formeln EK-1 bis EK-3: 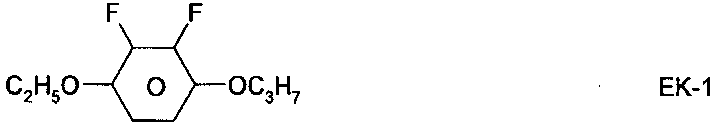 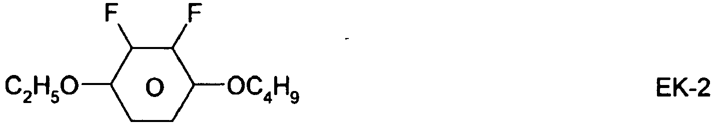 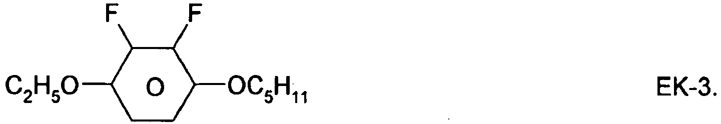
l) Bevorzugte Mischungen enthalten zusätzlich eine oder mehrere Verbindungen der Formeln L-1 bis L-11, 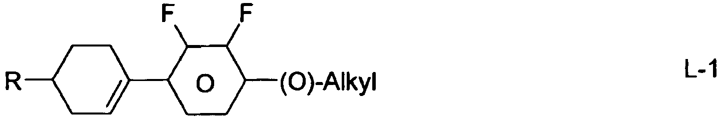 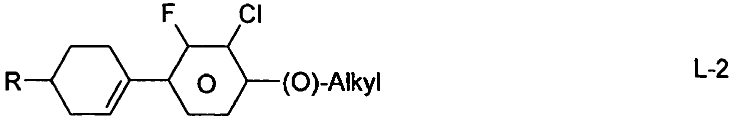 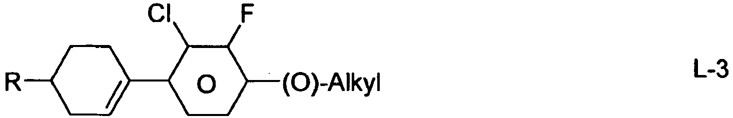 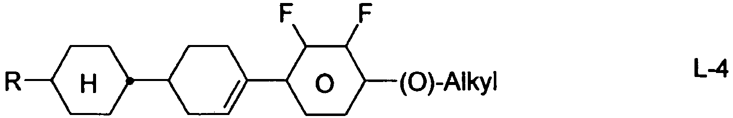 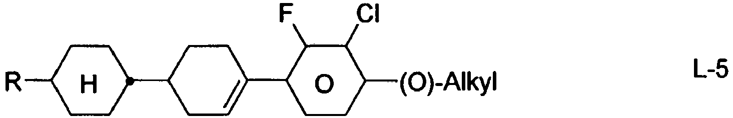 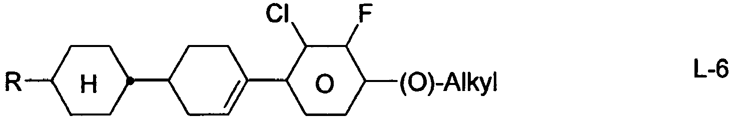 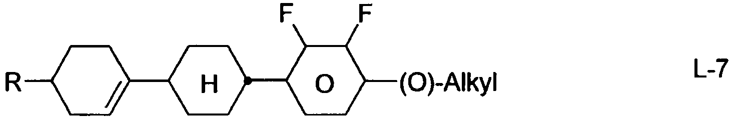 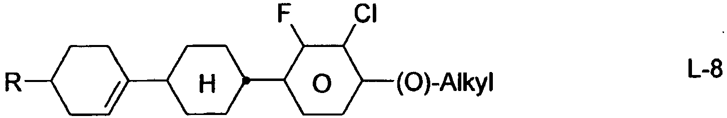 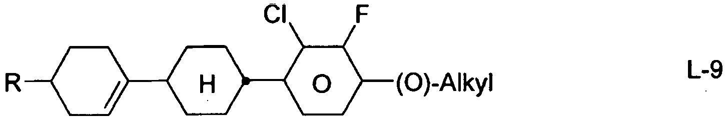 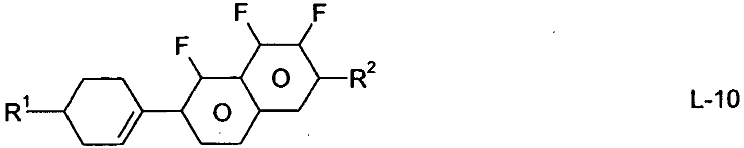 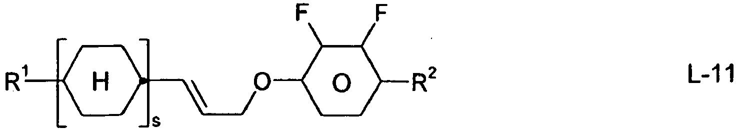
worin
R, R¹ und R² jeweils unabhängig voneinander die für R^{2A} in Anspruch 2 angegebenen Bedeutungen haben und Alkyl ein Alkylrest mit 1-6 C-Atomen bedeutet. s bedeutet 1 oder 2.

Besonders bevorzugt sind die Verbindungen der Formeln L-1 und L-4, insbesondere L-4.

Die Verbindungen der Formeln L-1 bis L-11 werden vorzugsweise in Konzentrationen von 5 - 50 Gew.%, insbesondere 5 - 40 Gew.% und ganz besonders bevorzugt 10 - 40 Gew.% eingesetzt.
l) Bevorzugte Mischungen enthalten eine oder mehrere Tolan-Verbindungen der Formeln To-1 bis To-3, 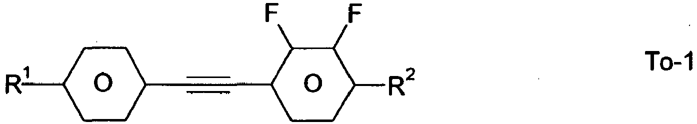 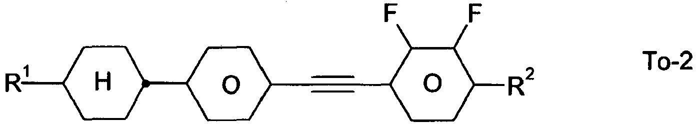 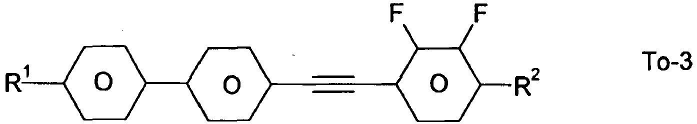 worin R¹ und R² die oben angegebenen Bedeutungen haben. Vorzugsweise bedeutet R¹ geradkettiges Alkyl mit 1-6 C-Atomen. R² bedeutet vorzugsweise Alkoxy mit 1-5 C-Atomen, insbesondere OC₂H₅, OC₃H₇, OC₄H₉, OC₅H₁₁, ferner OCH₃.

Die Verbindungen der Formeln To-1 bis To-3 werden vorzugsweise in Konzentrationen von 3 - 40 Gew.%, insbesondere von 5 - 25 Gew.% und ganz besonders bevorzugt von 10 - 20 Gew.% eingesetzt.

Die Tolan-Verbindungen werden vorzugsweise für flüssigkristalline Mischungen in Passiv-Matrix VA-Anwendungen eingesetzt. Bevorzugte Mischungen enthalten ein oder mehrere Quaterphenyle der Formel Q, 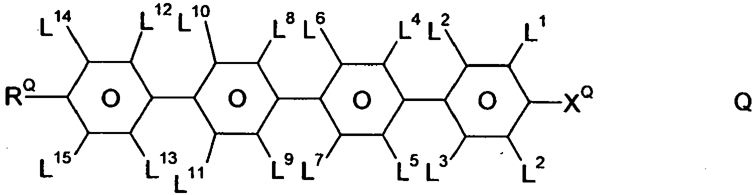
- R^{Q}: jeweils unabhängig voneinander einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 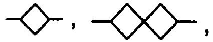 -O-, -CO-O-, -O-COso ersetzt sein können, dass O-Atome nicht direkt miteinander verknüpft sind, und worin auch ein oder mehrere H-Atome durch Halogen ersetzt sein können,
- X: geradkettiger Alkylrest mit 1-6 C-Atomen, F, Cl, OCF₃, OCHF₂, OCH=CHF, O CF=CHF, OCF=CF₂, OCH=CF₂, vorzugsweise F, der Alkylrest
- L¹⁻¹⁵: jeweils unabhängig voneinander H oder F,

Die Verbindungen werde vorzugsweise in Mengen von 0,2 - 5,0 Gew.%, insbesondere von 0,3 - 3,0 Gew.% eingesetzt.

VA- und PS-VA-Mischungen, die mindestens eine Verbindung der Formel Q enthalten, zeigen eine erhöhte Stabilität, wie UV-Stabilität und erhöhte Stabilität bei Backlicht.

Bevorzugte Verbindungen der Formel Q werden nachfolgend genannt:

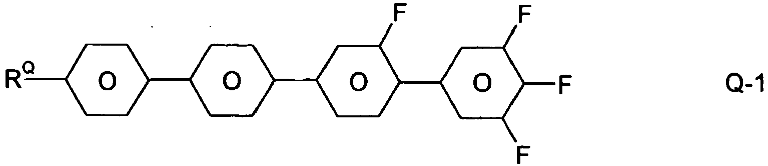

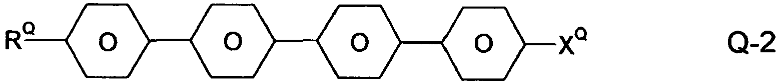

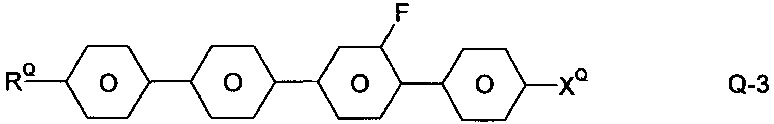

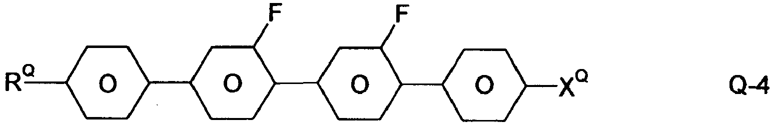

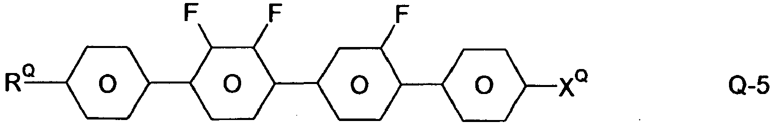

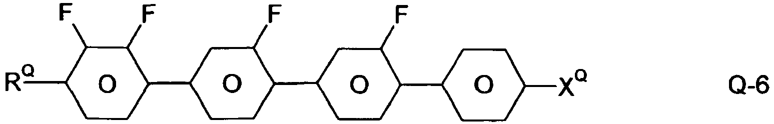

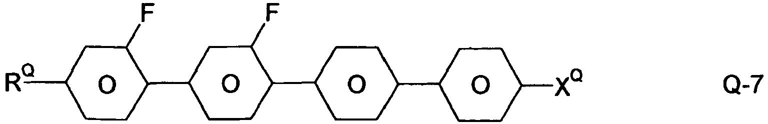

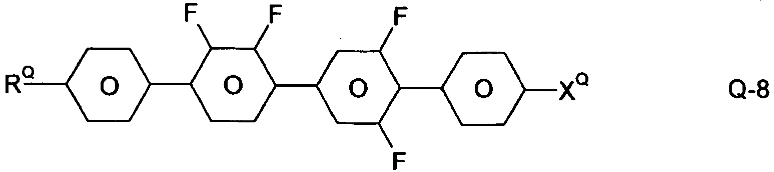

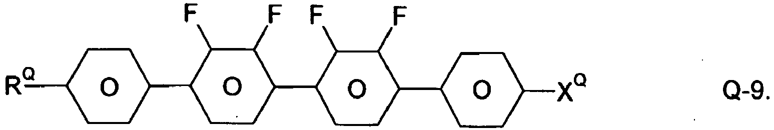

In den Verbindungen der Formeln Q-2 bis Q-9 bedeutet X^{Q} vorzugsweise einen geradkettigen Alkylrest mit 1-6 C-Atomen, vorzugsweise 2-5 C-Atomen.

Besonders bevorzugte Mischungskonzepte werden nachfolgend genannt: (Die verwendeten Acronyme sind in Tabelle A erklärt. n und m bedeuten hier jeweils unabhängig voneinander 1-6.)

Die erfindungsgemäßen Mischungen enthalten vorzugsweise
- die Verbindung der Formel I, worin L¹ = L² = F und R¹ = R^{1*} = Alkoxy bedeuten,
- CPY-n-Om, insbesondere CPY-2-02, CPY-3-02 und/oder CPY-5-O2, vorzugsweise in Konzentrationen > 5 %, insbesondere 10-30 %, bezogen auf die Gesamtmischung,
   und/oder
- CY-n-Om, vorzugsweise CY-3-O2, CY-3-O4, CY-5-O2 und/oder CY-5-O4, vorzugsweise in Konzentrationen > 3 %, insbesondere 10-50 %, bezogen auf die Gesamtmischung,
   und/oder
- CCY-n-Om, vorzugsweise CCY-4-02, CCY-3-O1, CCY-3-02, CCY-3-O3
   und/oder
   CCY-5-O2, vorzugsweise in Konzentrationen > 5 %, insbesondere 10-30 %, bezogen auf die Gesamtmischung,
   und/oder
- CLY-n-Om, vorzugsweise CLY-2-O4, CLY-3-02 und/oder CLY-3-03, vorzugsweise in Konzentrationen > 5 %, insbesondere 10-30 %, bezogen auf die Gesamtmischung,
   und/oder
- CK-n-F und/oder AlK-n-F, vorzugsweise CK-3-F, CK-4-F und/oder CK-5-F, vorzugsweise > 5 %, insbesondere 5-25 %, bezogen auf die Gesamtmischung.

Weiterhin bevorzugt sind erfindungsgemäße Mischungen, die folgende Mischungskonzepte enthalten:
(n und m bedeuten jeweils unabhängig voneinander 1-6.)
- CPY-n-Om und CY-n-Om, vorzugsweise in Konzentrationen von 10-80 % bezogen auf die Gesamtmischung,
   und/oder
- CPY-n-Om und CK-n-F, vorzugsweise in Konzentrationen von 10-70 % bezogen auf die Gesamtmischung,
   und/oder
- CPY-n-Om und CLY-n-Om, vorzugsweise in Konzentrationen von 10-80 % bezogen auf die Gesamtmischung.

Ein weiterer Gegenstand der Erfindung ist eine elektrooptische Anzeige mit einer Aktivmatrix-Adressierung basierend auf dem ECB-, VA-, PS-VA, PVA-, IPS- oder FFS-Effekt, dadurch gekennzeichnet, dass sie als Dielektrikum ein flüssigkristallines Medium nach einem oder mehreren der Ansprüche 1 bis 12 enthält.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität ν₂₀ von maximal 30 mm² · s⁻¹ bei 20 °C auf.

Die Werte der Doppelbrechung An in der Flüssigkristallmischung liegen in der Regel zwischen 0,07 und 0,16, vorzugsweise zwischen 0,08 und 0,12.

Die erfindungsgemäße Flüssigkristallmischung weist ein Δε von -0,5 bis -8,0, insbesondere von -2,5 bis -6,0 auf, wobei Δε die dielektrische Anisotropie bedeutet. Die Rotationsviskosität γ₁ bei 20 °C ist vorzugsweise ≤ 165 mPa·s, insbesondere ≤ 140 mPa·s.

Die erfindungsgemäßen Flüssigkristallmedien weisen relativ kleine Werte für die Schwellenspannung (V₀) auf. Vorzugsweise sind sie im Bereich von 1,7 V bis 3,0 V, besonders bevorzugt ≤ 2,5 V und ganz besonders bevorzugt ≤ 2,3 V.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Außerdem weisen die erfindungsgemäßen Flüssigkristallmedien hohe Werte für die Voltage Holding Ratio in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Alle angegebenen Werte für Temperaturen für die vorliegende Erfindung sind in °C.

Die erfindungsgemäßen Mischungen sind für alle VA-TFT-Anwendungen geeignet, wie z.B. VAN, MVA, (S)-PSA, ASV, PSA (polymer sustained VA) und PS-VA (polymer stabilized VA). Weiterhin sind sie für IPS (In plane switching) und FFS (Fringe field switching) mit negativem Δε geeignet. Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formel I und mindestens einem Stabilisator aus der Gruppe IA*-ID* als weitere Verbindungen mindestens eine oder mehrere Verbindungen der Formeln IIA, IIB und/oder IIC, ferner Verbindungen der Formeln III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm² s⁻¹, vorzugsweise nicht mehr als 25 mm² ˙s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm² ˙ s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Optional kann die Mischung auch eine Komponente C enthalten, wobei es sich um Verbindungen mit einer dielektrischen Anisotropie von Δε ≥1,5 handelt. Diese sogenannten positiven Verbindungen sind in der Regel in einer Mischung mit negativer dielektrischer Anisotropie in Mengen von ≤ 20 Gew.% bezogen auf die Gesamtmischung enthalten.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen neben einer oder mehreren Verbindungen der Formel I, 4 bis 15, insbesondere 5 bis 12, und besonders bevorzugt < 10, Verbindungen der Formeln IIA, IIB und/oder IIC und optional III.

Neben Verbindungen der Formeln I und den Verbindungen der Formeln IIA, IIB und/oder IIC und optional III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexyl-biphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R²⁰-L-G-E-R²¹ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C=C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor oder -CN, und R²⁰ und R²¹ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R²⁰ und R²¹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, PS-VA-, PSA-, IPS- oder FFS- Mischung auch Verbindungen enthalten kann, worin beispielsweise H, N, O, Cl, F durch die entsprechenden Isotope ersetzt sind.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,01 - 5 Gew.%, besonders bevorzugt 0,1 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. Ciba, wird vorzugsweise der Mischung enthaltend polymerisierbare Verbindungen in Mengen von 0-1 % zugesetzt. Derartige Mischungen können für sogenannte Polymer Stabilized VA-Modes (PS-VA) oder PSA (Polymer sustained VA), bei denen eine Polymerisierung der reaktiven Mesogene in der flüssigkristallinen Mischung erfolgen soll, verwendet werden.

In einer bevorzugten Ausführungsform der Erfindung sind die polymerisierbaren Verbindungen ausgewählt aus den Verbindungen der Formel M

R^{Ma}-A^{M1}-(Z^{M1}-A^{M2})ₘ₁-R^{Mb} M

worin die einzelnen Reste folgende Bedeutung haben:
- R^{Ma} und R^{Mb}: jeweils unabhängig voneinander P, P-Sp-, H, Halogen, SF₅, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
- P: eine polymerisierbare Gruppe,
- Sp: eine Abstandsgruppe oder eine Einfachbindung,
- A^{M1} und A^{M2}: jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfasst oder enthalten kann, und die optional ein- oder mehrfach durch L substitutiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SF₅, NO₂, eine Alkyl-, Alkenyl- oder Alkinylgruppe,
- Y¹: Halogen,
- Z^{M1}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C=C-, -CH=CH-, -COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4 und
- n1: 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält.

Besonders bevorzugte Verbindungen der Formel M sind solche, worin
- R^{Ma} und R^{Mb}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{Ma} und R^{Mb} eine Gruppe P oder P-Sp- bedeutet oder enthält,
- A^{M1} und A^{M2}: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS,-OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel M, worin einer von R^{Ma} und R^{Mb} oder beide P oder P-Sp- bedeuten.

Geeignete und bevorzugte Comonomere für die Verwendung in erfindungsgemäßen flüssigkristallinen Medien und PS-VA-Anzeigen oder PSA-Anzeigen sind beispielsweise ausgewählt aus den folgenden Formeln: 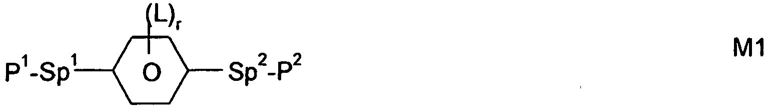 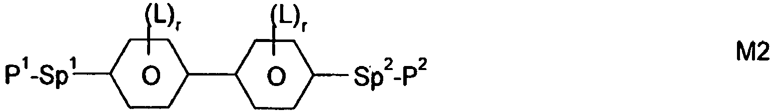 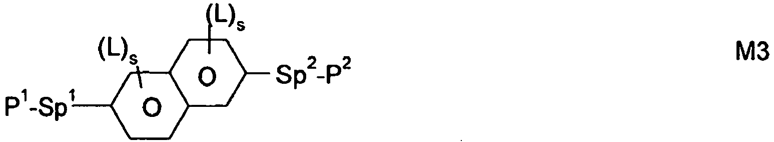 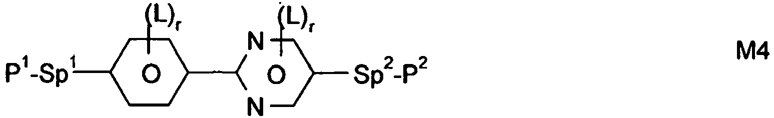 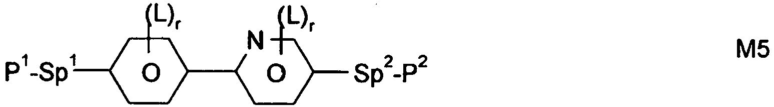 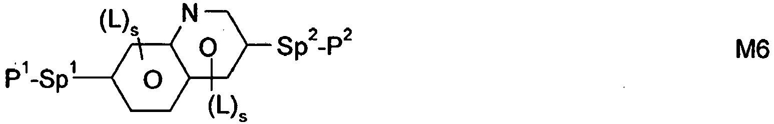 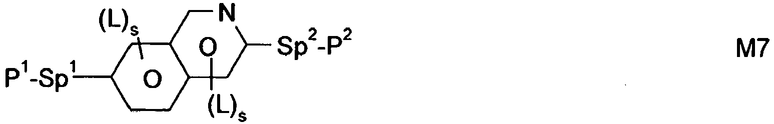 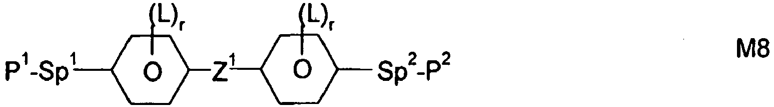 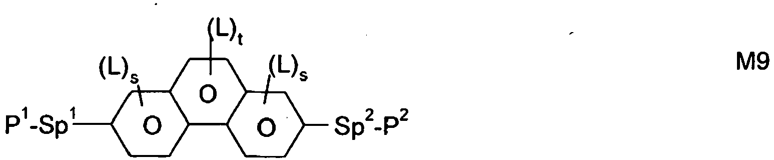 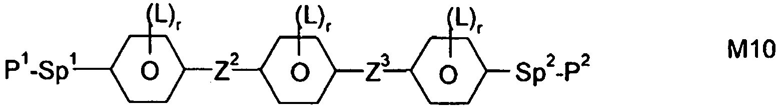 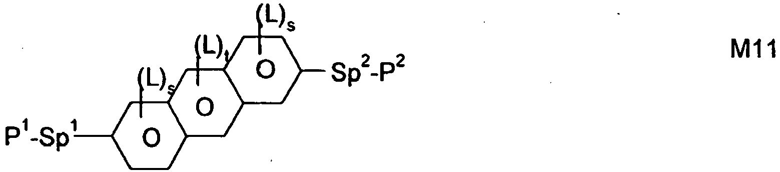 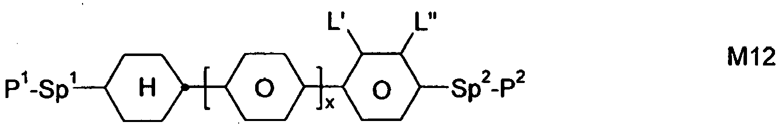 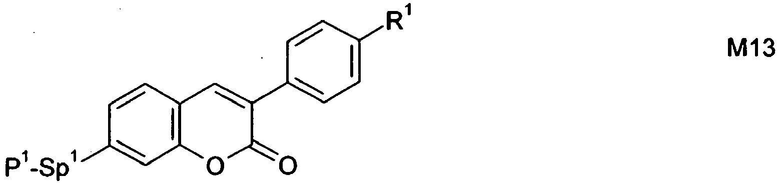 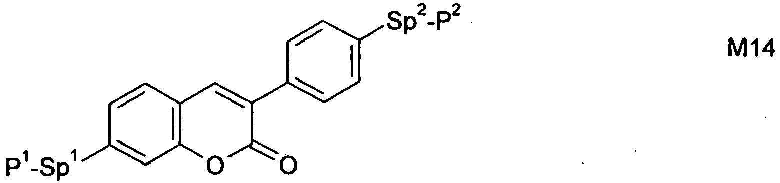 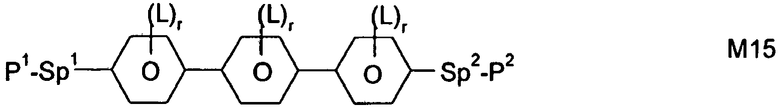 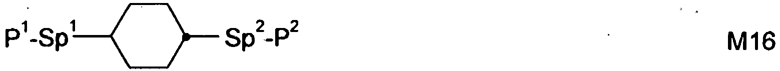 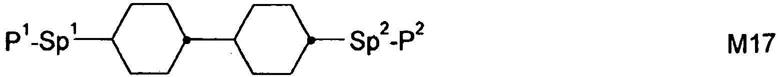 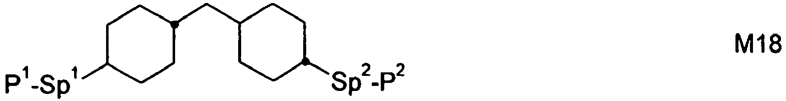 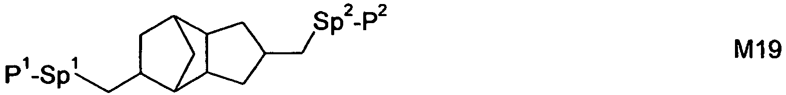 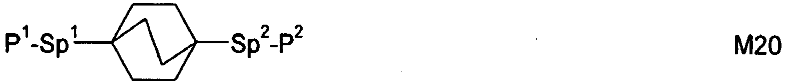 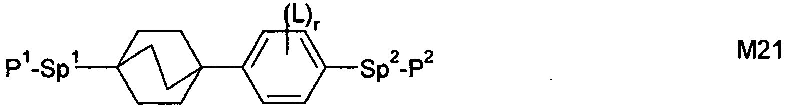 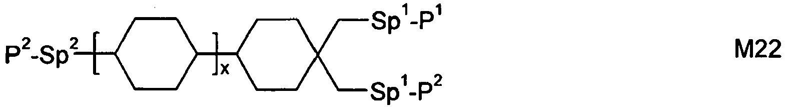 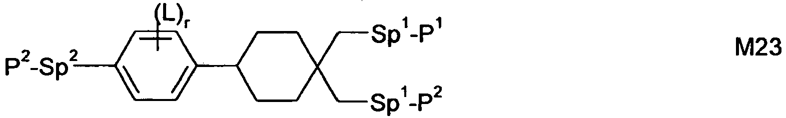 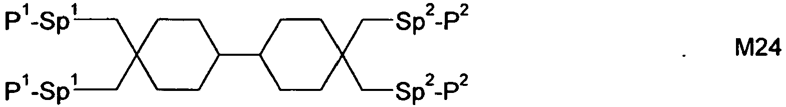 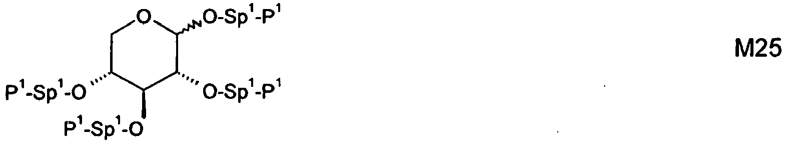 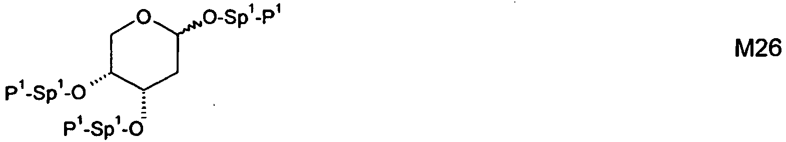 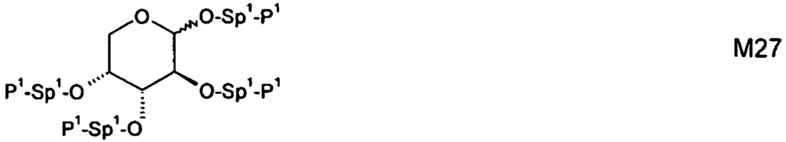 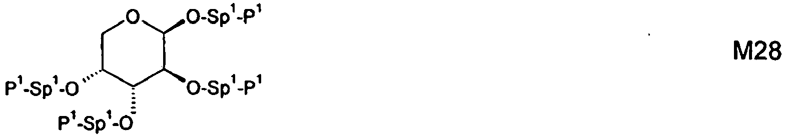 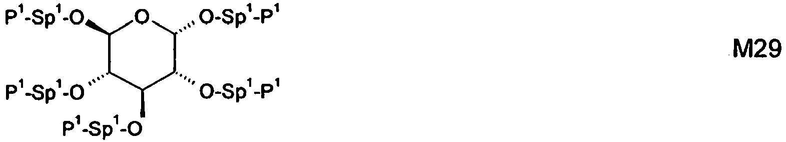 worin die einzelnen Reste folgende Bedeutung besitzen:
- P¹ und P²: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O-, worin p1 eine ganze Zahl von 1 bis 12 ist, und wobei in den letztgenannten Gruppen die Verknüpfung zur benachbarten Ring über das O-Atom erfolgt, wobei auch einer oder mehrere der Reste P¹-Sp¹- und P²-Sp²- einen Rest R^{aa} bedeuten können, mit der Maßgabe dass mindestens einer der vorhandenen Reste P¹-Sp¹- und P²-Sp²- nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-,-O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-,oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2,
- x: 0 oder 1.

Geeignete polymerisierbare Verbindungen sind beispielsweise in Tabelle D gelistet.

Bevorzugt enthalten die flüssigkristallinen Medien gemäß der vorliegenden Anmeldung insgesamt 0,1 bis 10 %, bevorzugt 0,2 bis 4,0 %, besonders bevorzugt 0,2 bis 2,0 %, an polymerisierbaren Verbindungen.

Insbesondere bevorzugt sind die polymerisierbaren Verbindungen der Formel M.

Die erfindungsgemäßen Mischungen können weiterhin übliche Zusätze oder Additive enthalten, wie z.B. Stabilisatoren, Antioxidantien, UV-Absorber, Nanopartikel, Mikropartikel, etc.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

In der gesamten Patentanmeldung werden 1,4-Cyclohexylenringe und 1,4-Phenylenringe wie folgt dargestellt:

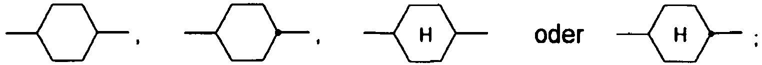

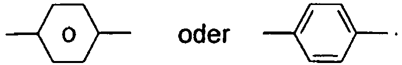

Vorzugsweise enthalten die erfindungsgemäßen Mischungen neben den Verbindungen der Formeln IIA und/oder IIB und/oder IIC, einer oder mehrerer Verbindungen der Formel I eine oder mehrere Verbindungen der nachfolgend genannten Verbindungen aus der Tabelle A.

**Tabelle A**

| |
|---|
| Folgende Abkürzungen werden verwendet: (n, m, m', z: jeweils unabhängig voneinander 1, 2, 3, 4, 5 oder 6; (O)CₘH₂ₘ₊₁ bedeutet OCₘH₂ₘ₊₁ oder CₘH₂ₘ₊₁) |
| 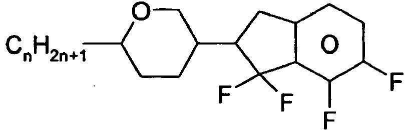 |
| **AIK-n-F** |
| 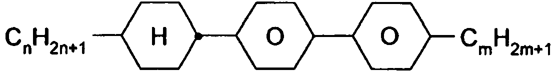 |
| **BCH-nm** |
| 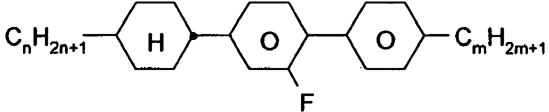 |
| **BCH-nmF** |
| 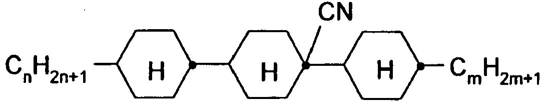 |
| **BCN-nm** |
| 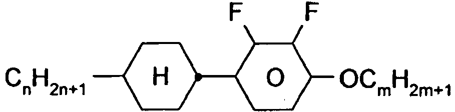 |
| **CY-n-Om** |
| 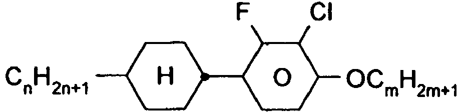 |
| **CY(F,Cl)-n-Om** |
| 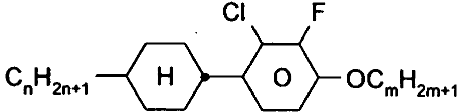 |
| **CY(Cl,F)-n-Om** |
| 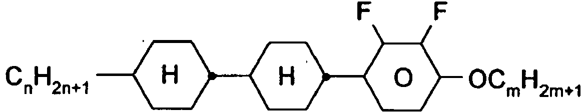 |
| **CCY-n-Om** |
| 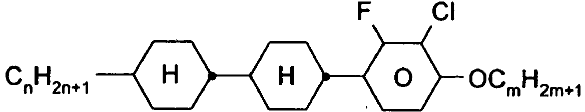 |
| **CCY(F,Cl)-n-Om** |
| 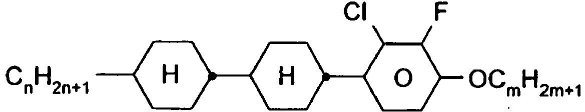 |
| **CCY(Cl,F)-n-Om** |
| 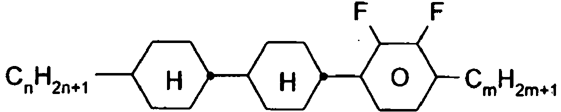 |
| **CCY-n-m** |
| 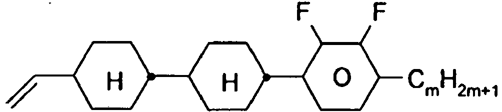 |
| **CCY-V-m** |
| 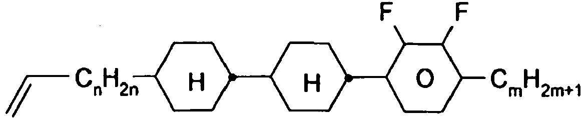 |
| **CCY-Vn-m** |
| 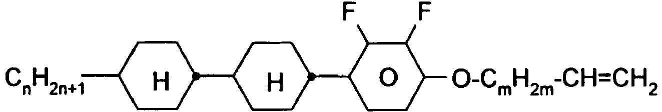 |
| **CCY-n-OmV** |
| 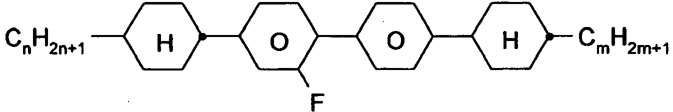 |
| **CBC-nmF** |
| 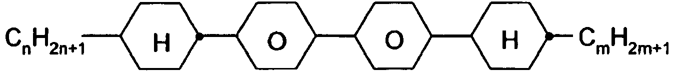 |
| **CBC-nm** |
| 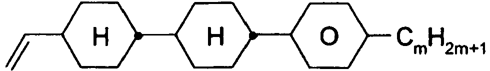 |
| **CCP-V-m** |
| 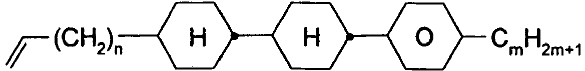 |
| **CCP-Vn-m** |
| 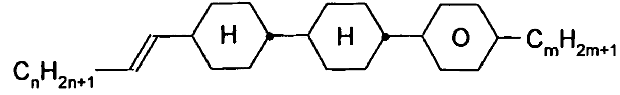 |
| **CCP-Vn-m** |
| 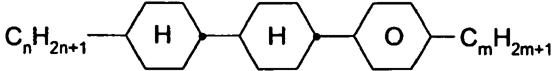 |
| **CCP-n-m** |
| 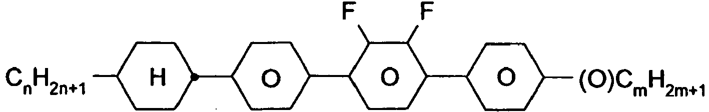 |
| **CPYP-n-(O)m** |
| 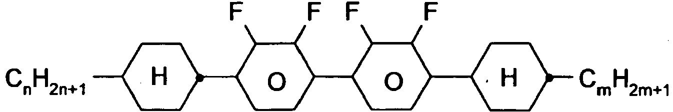 |
| **CYYC-n-m** |
| 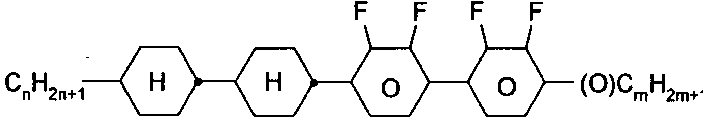 |
| **CCYY-n-(O)m** |
| 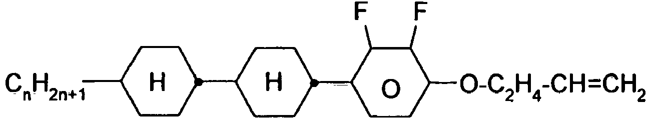 |
| **CCY-n-02V** |
| 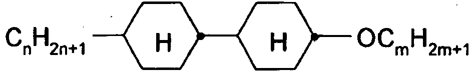 |
| **CCH-nOm** |
| 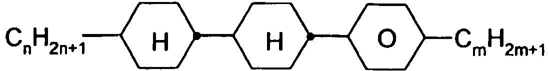 |
| **CCP-n-m** |
| 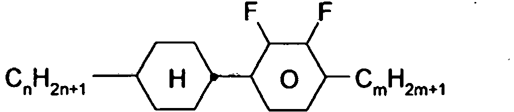 |
| **CY-n-m** |
| 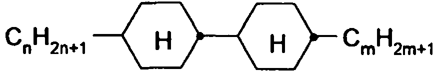 |
| **CCH-nm** |
| 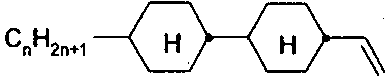 |
| **CC-n-V** |
| 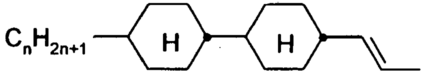 |
| **CC-n-V1** |
| 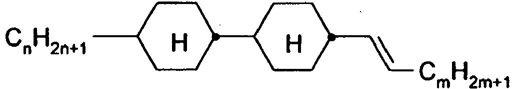 |
| **CC-n-Vm** |
| 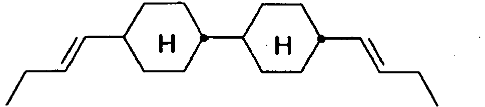 |
| **CC-2V-V2** |
| 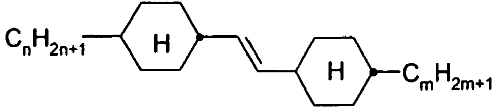 |
| **CVC-n-m** |
| 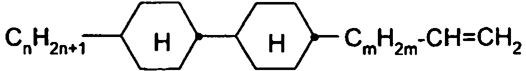 |
| **CC-n-mV** |
| 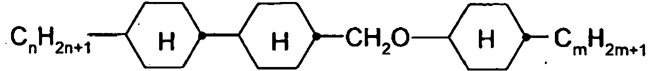 |
| **CCOC-n-m** |
| 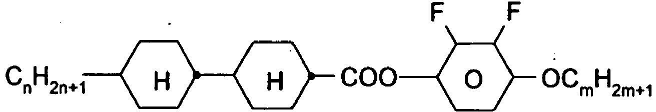 |
| **CP-nOmFF** |
| 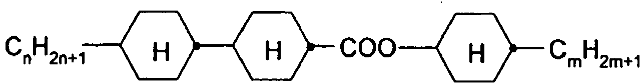 |
| **CH-nm** |
| 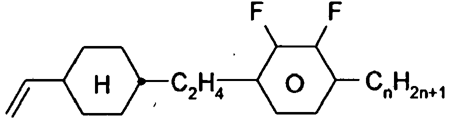 |
| **CEY-V-n** |
| 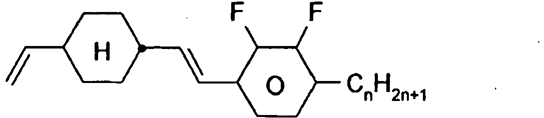 |
| **CVY-V-n** |
| 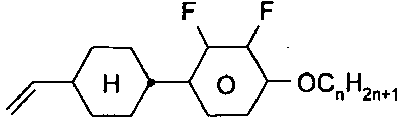 |
| **CY-V-On** |
| 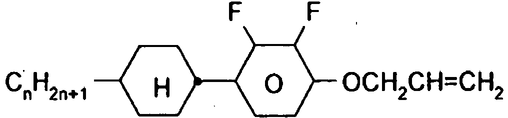 |
| **CY-n-O1V** |
| 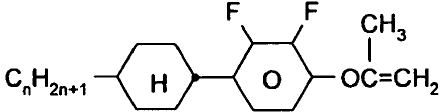 |
| **CY-n-OC(CH₃)=CH₂** |
| 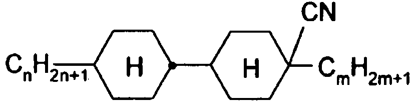 |
| **CCN-nm** |
| 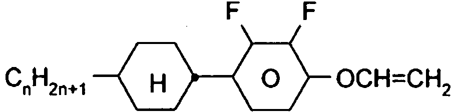 |
| **CY-n-OV** |
| 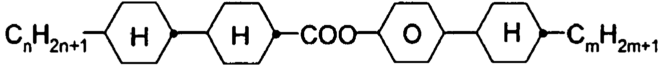 |
| **CCPC-nm** |
| 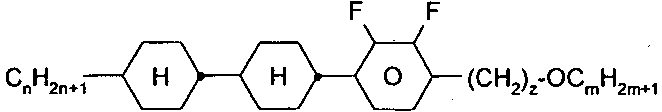 |
| **CCY-n-zOm** |
| 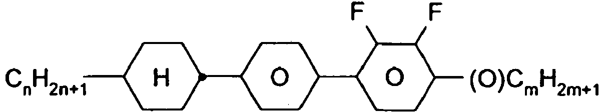 |
| **CPY-n-(O)m** |
| 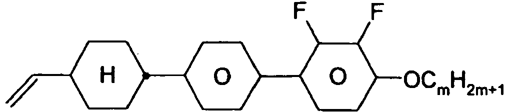 |
| **CPY-V-Om** |
| 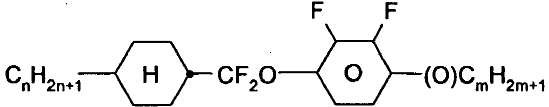 |
| **CQY-n-(O)m** |
| 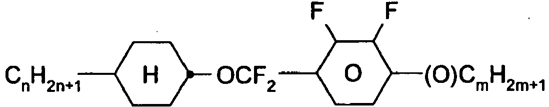 |
| **CQIY-n-(O)m** |
| 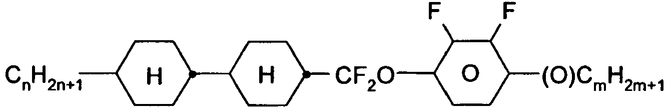 |
| **CCQY-n-(O)m** |
| 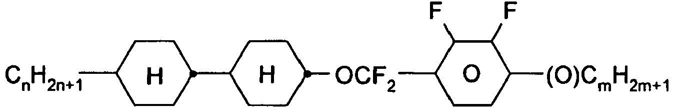 |
| **CCQIY-n-(O)m** |
| 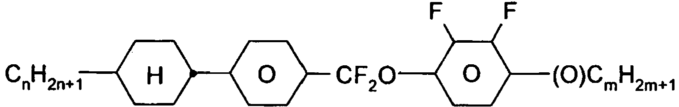 |
| **CPQY-n-(O)m** |
| 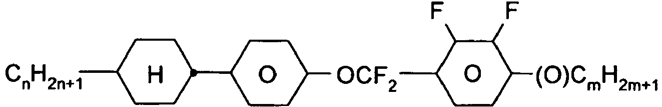 |
| **CPQIY-n-(O)m** |
| 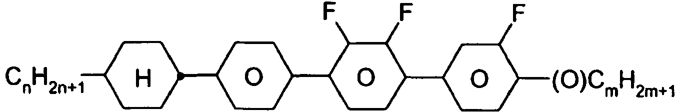 |
| **CPYG-n-(O)m** |
| 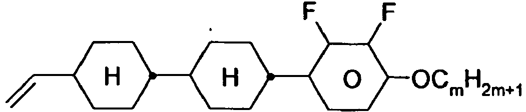 |
| **CCY-V-Om** |
| 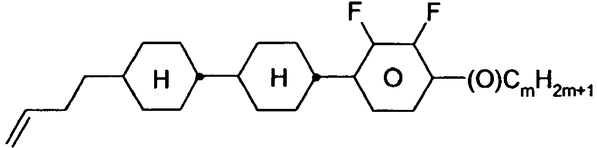 |
| **CCY-V2-(O)m** |
| 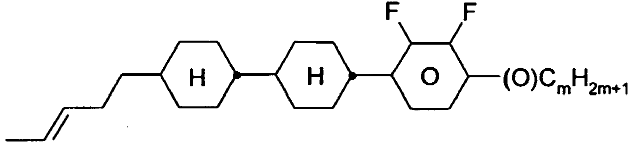 |
| **CCY-1V2-(O)m** |
| 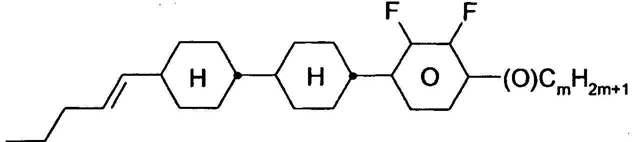 |
| **CCY-3V-(O)m** |
| 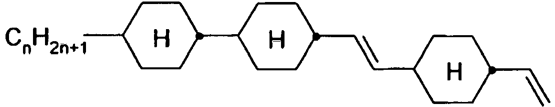 |
| **CCVC-n-V** |
| 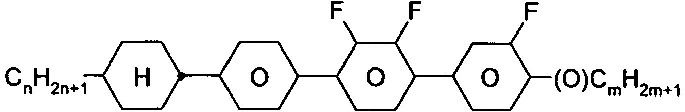 |
| **CPYG-n-(O)m** |
| 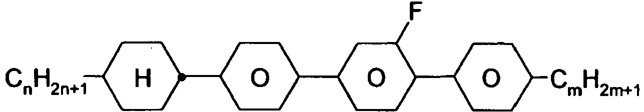 |
| **CPGP-n-m** |
| 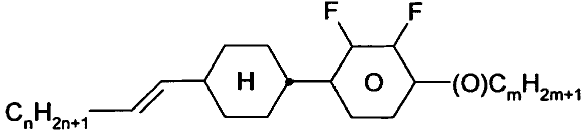 |
| **CY-nV-(O)m** |
| 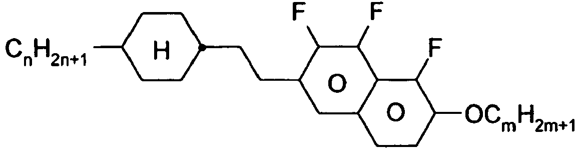 |
| **CENaph-n-Om** |
| 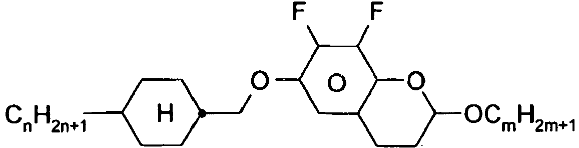 |
| **COChrom-n-Om** |
| 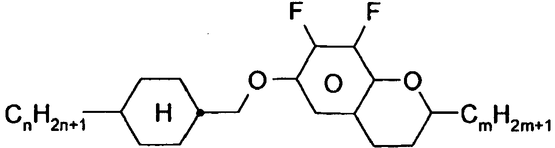 |
| **COChrom-n-m** |
| 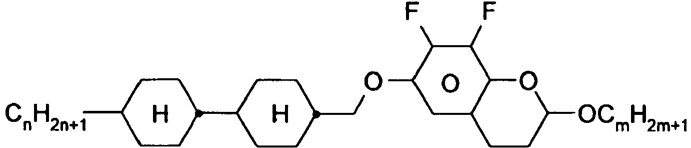 |
| **CCOChrom-n-Om** |
| 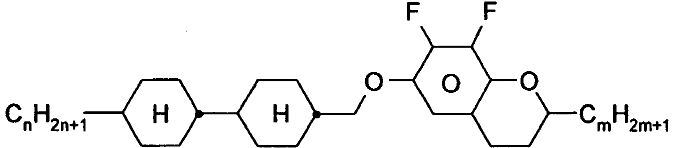 |
| **CCOChrom-n-m** |
| 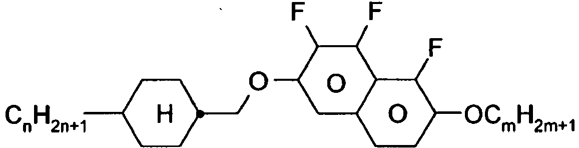 |
| **CONaph-n-Om** |
| 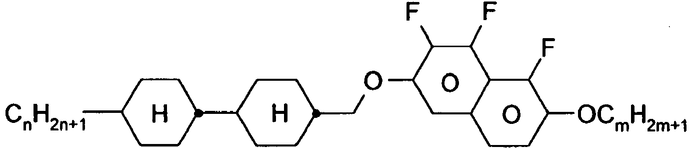 |
| **CCONaph-n-Om** |
| 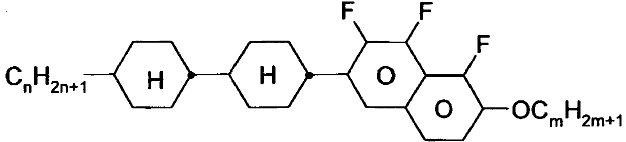 |
| **CCNaph-n-Om** |
| 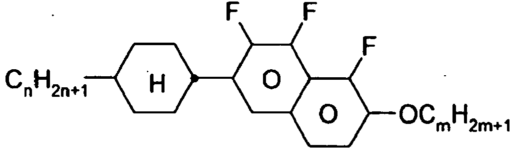 |
| **CNaph-n-Om** |
| 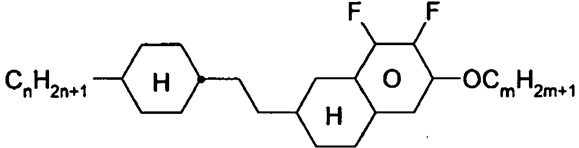 |
| **CETNaph-n-Om** |
| 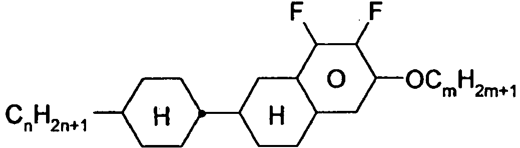 |
| **CTNaph-n-Om** |
| 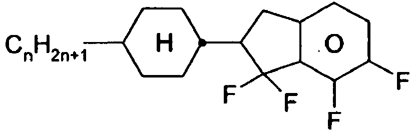 |
| **CK-n-F** |
| 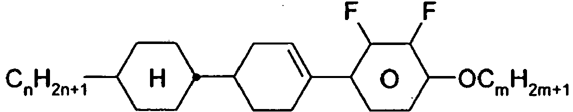 |
| **CLY-n-Om** |
| 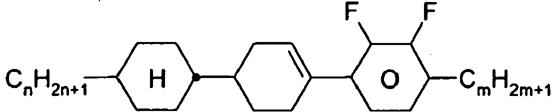 |
| **CLY-n-m** |
| 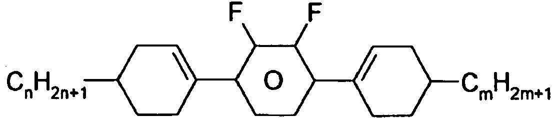 |
| **LYLI-n-m** |
| 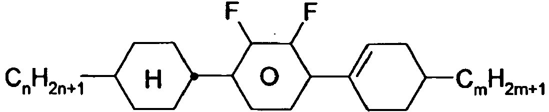 |
| **CYLI-n-m** |
| 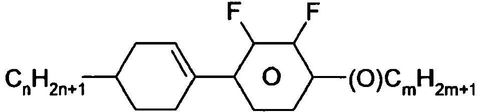 |
| **LY-n-(O)m** |
| 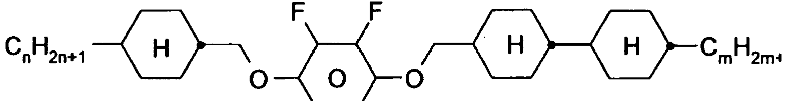 |
| **COYOICC-n-m** |
| 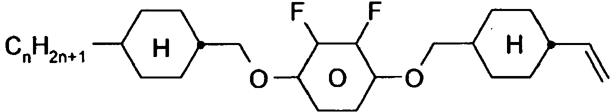 |
| **COYOIC-n-V** |
| 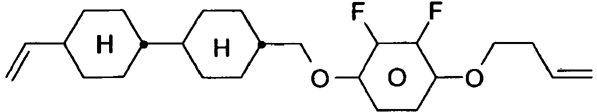 |
| **CCOY-V-O2V** |
| 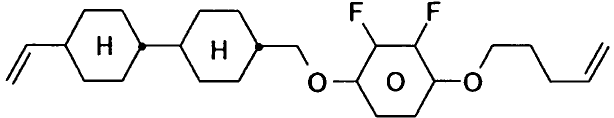 |
| **CCOY-V-O3V** |
| 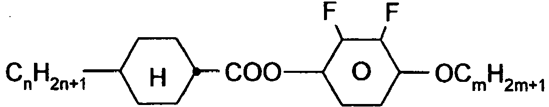 |
| **D-nOmFF** |
| 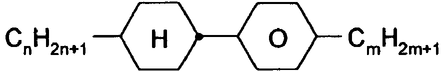 |
| **PCH-nm** |
| 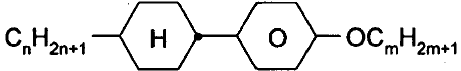 |
| **PCH-nOm** |
| 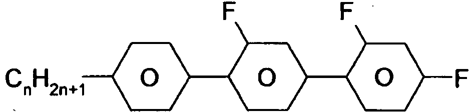 |
| **PGIGI-n-F** |
| 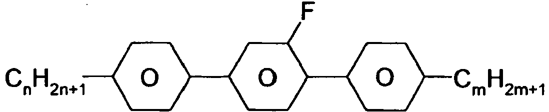 |
| **PGP-n-m** |
| 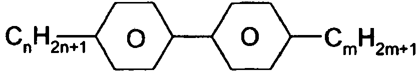 |
| **PP-n-m** |
| 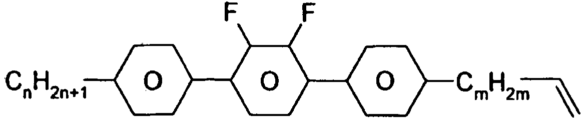 |
| **PYP-n-mV** |
| 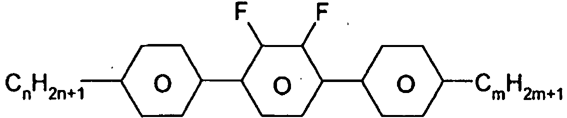 |
| **PYP-n-m** |
| 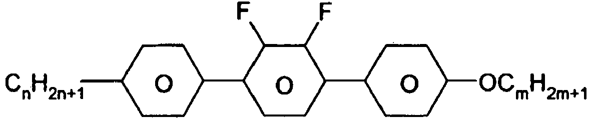 |
| **PYP-n-Om** |
| 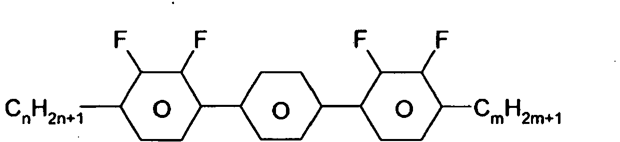 |
| **YPY-n-m** |
| 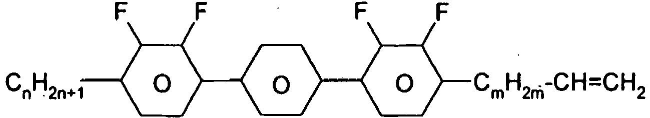 |
| **YPY-n-mV** |
| 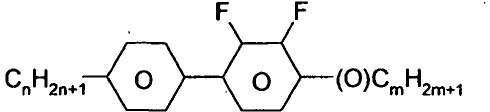 |
| **PY-n-(O)m** |
| 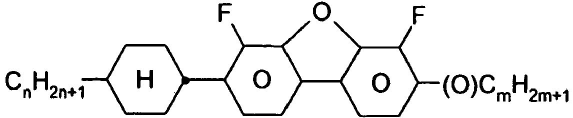 |
| **C-DFDBF-n-(O)m** |
| 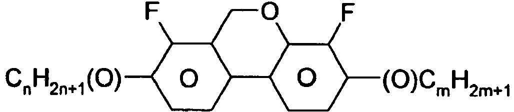 |
| **DFDBC-n(O)-(O)m** |
| 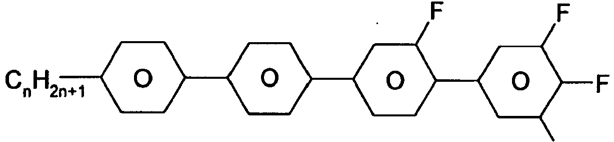 |
| **PPGU-n-F** |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden. Geeignete Stabilisatoren für die erfindungsgemäßen Mischungen sind insbesondere solche die in Tabelle B gelistet sind.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethem (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle B werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

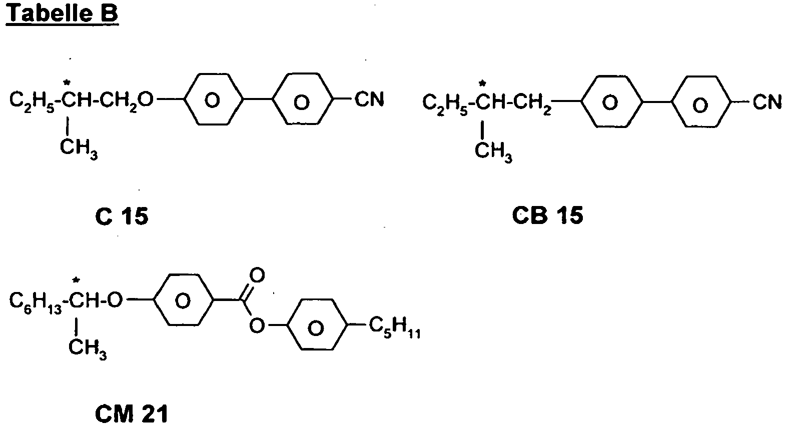

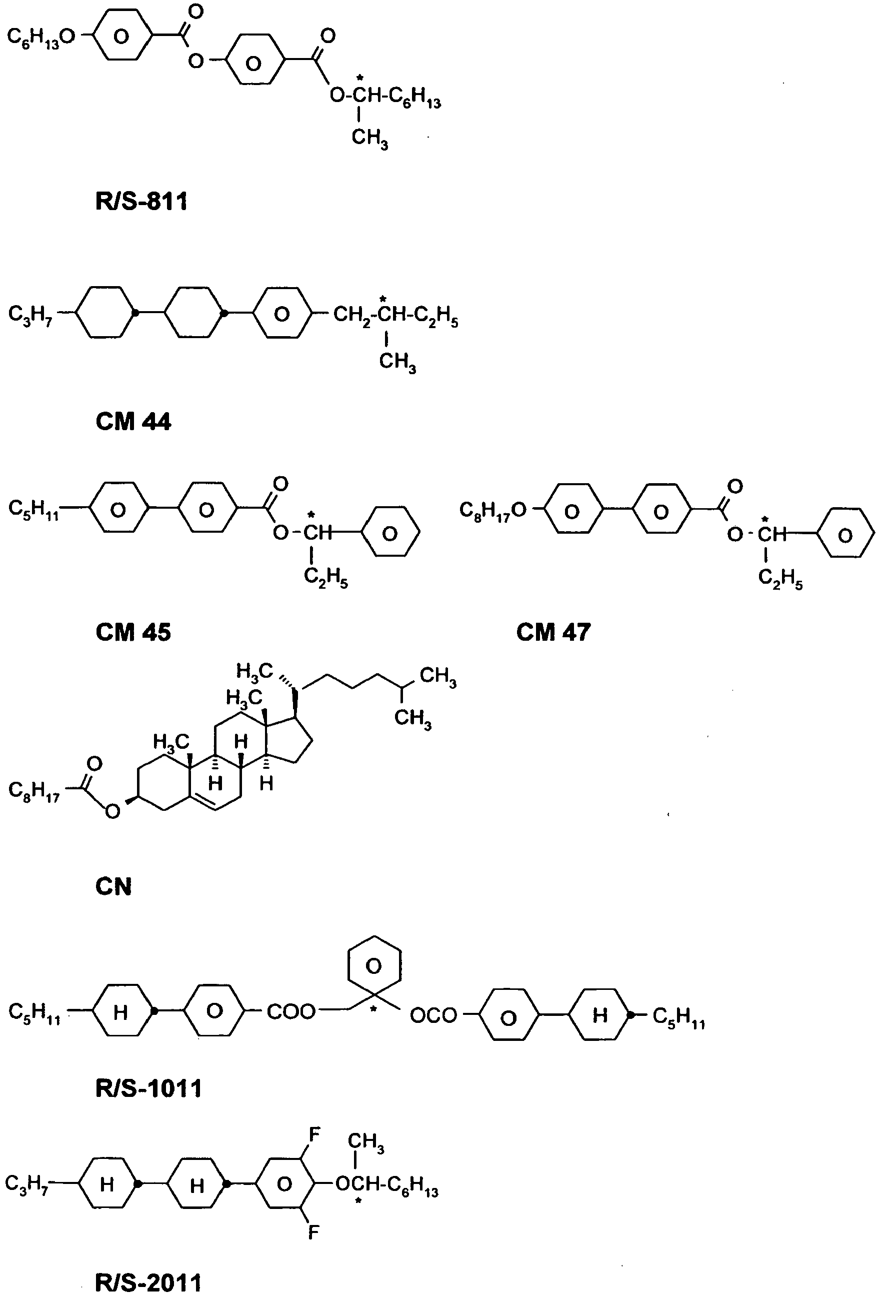

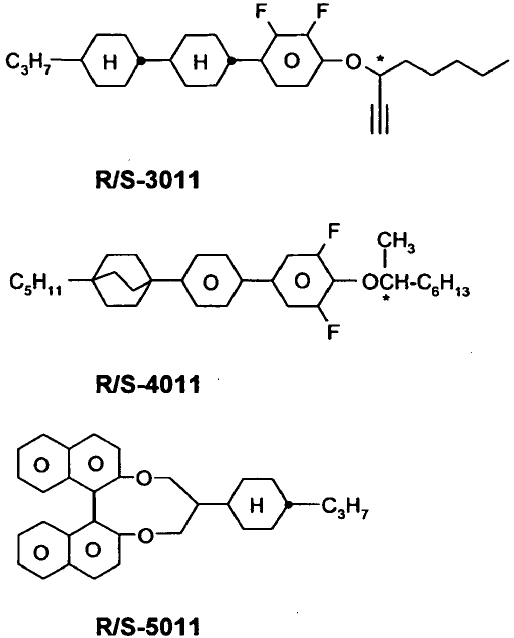

Stabilisatoren, die neben den Verbindungen der Formel I* beispielsweise den erfindungsgemäßen Mischungen in Mengen von bis zu 10 Gew.%, bezogen auf die gesamte Menge der Mischung, bevorzugt 0,01 bis 6 Gew.%, insbesondere 0,1 bis 3 Gew.%, zugesetzt werden können, werden nachfolgend in Tabelle C genannt.

Bevorzugte Stabilisatoren sind insbesondere BHT-Derivate, z.B. 2,6-Di-tert-butyl-4-alkylphenole und Tinuvin 770.

**Tabelle C**

| | | |
|---|---|---|
| (n = 1-12) | | |
| 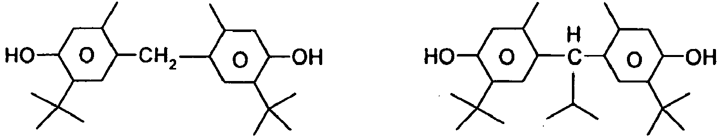 | | |
| 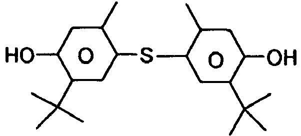 | 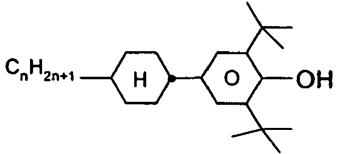 | |
| 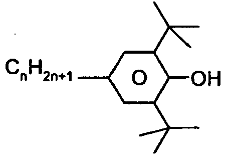 | 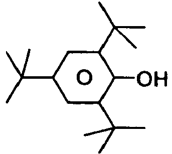 | |
| n = 1, 2, 3, 4, 5, 6 oder 7 | | |
| 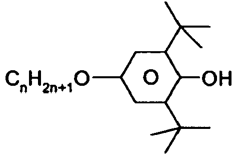 | 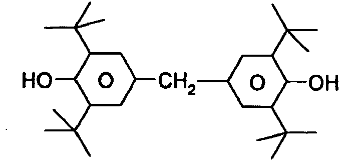 | |
| 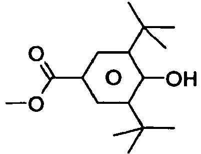 | 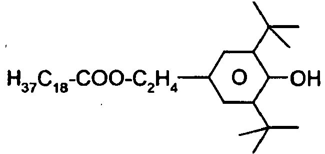 | |
| 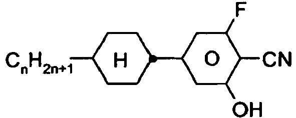 | 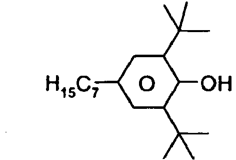 | |
| 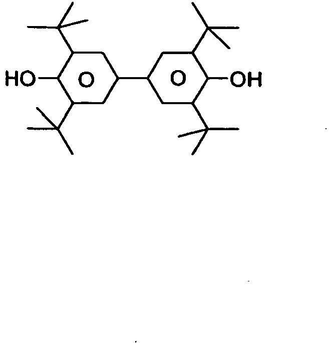 | 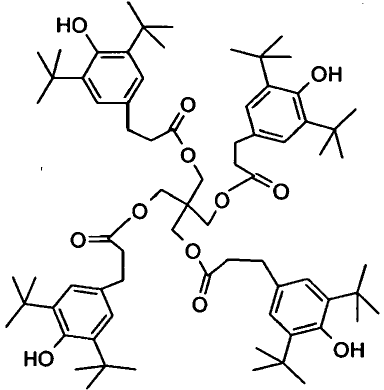 | |
| 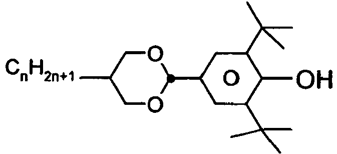 | | |
| n = 1, 2, 3, 4, 5, 6 oder 7 | | |
| 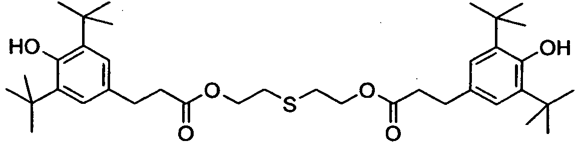 | | |
| 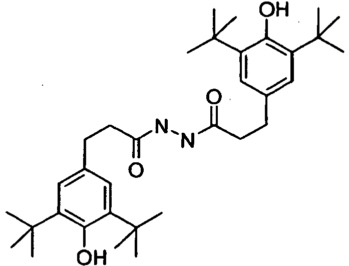 | 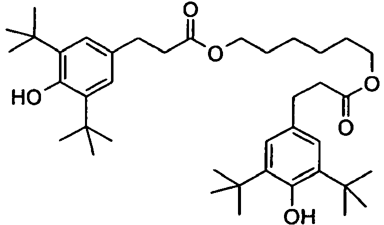 | |
| 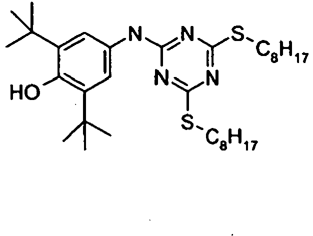 | 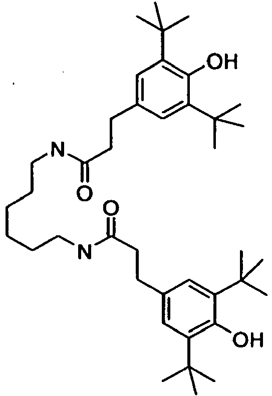 | |
| 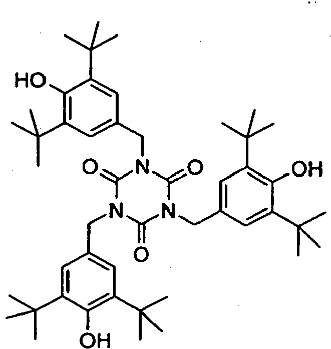 | 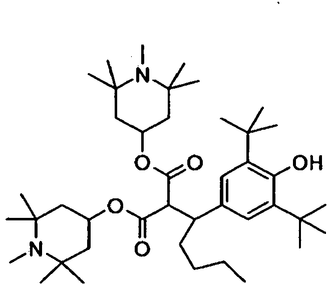 | |
| 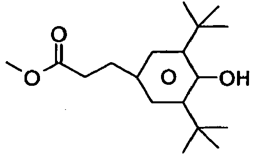 | 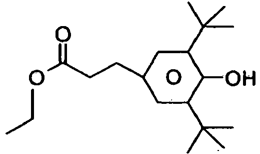 | |
| 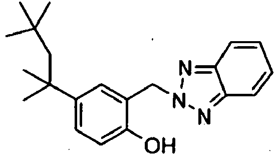 | 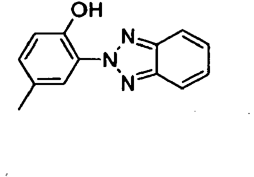 | |
| 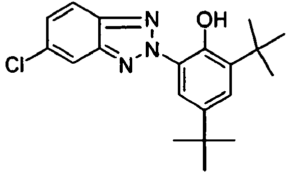 | 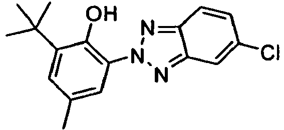 | |
| 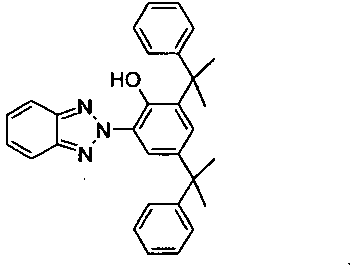 | 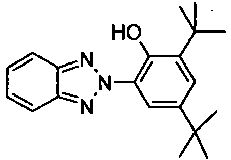 | |
| 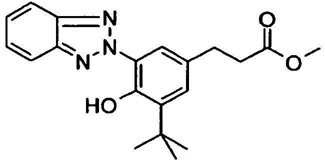 | 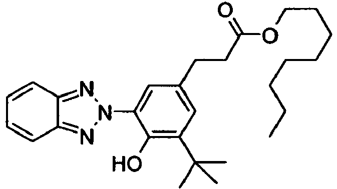 | |
| 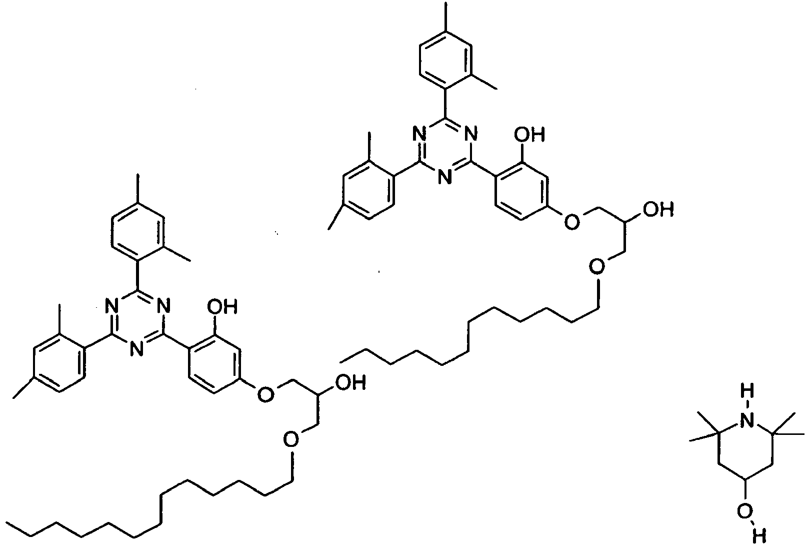 | | |
| 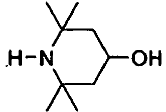 | 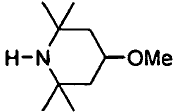 | 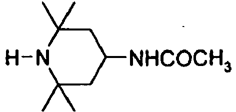 |
| 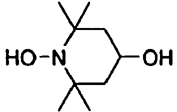 | 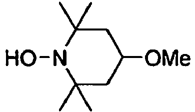 | 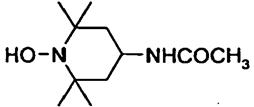 |
| 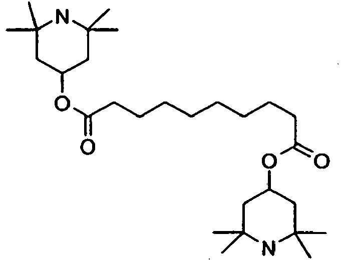 | 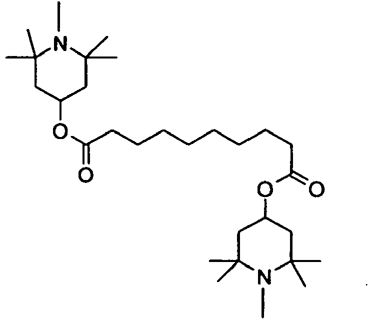 | |

Geeignete reaktive Mesogene für den Einsatz in den erfindungsgemäßen Mischungen, vorzugsweise in PSA- und PS-VA-Anwendungen, werden nachfolgend in Tabelle D genannt:

**Tabelle D**

| | |
|---|---|
| In der Tabelle D sind Beispielverbindungen zusammengestellt, die in den FK-Medien gemäß der vorliegenden Erfindung vorzugsweise als reaktive mesogene Verbindungen verwendet werden können. Sofern die erfindungsgemäßen Mischungen ein oder mehrere reaktive Verbindungen enthalten, werden sie vorzugsweise in Mengen von 0,01-5 Gew.% eingesetzt. Gegebenenfalls muss für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z. B. Irgacure (Fa. BASF) oder Irganox (Fa. BASF). | |
| 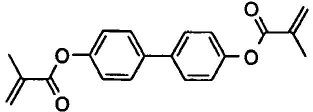 | RM-1 |
| 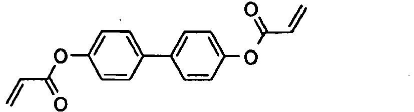 | RM-2 |
| 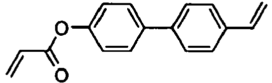 | RM-3 |
| 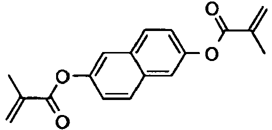 | RM-4 |
| 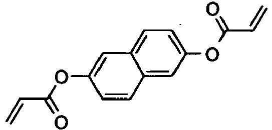 | RM-5 |
| 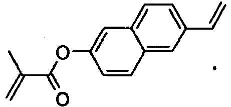 | RM-6 |
| 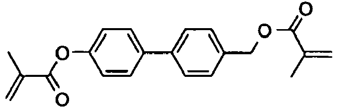 | RM-7 |
| 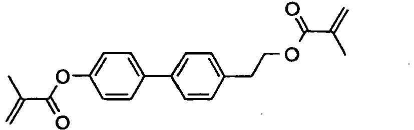 | RM-8 |
| 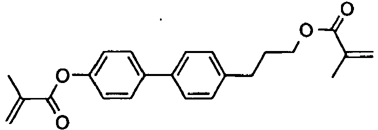 | RM-9 |
| 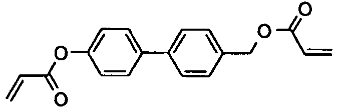 | RM-10 |
| 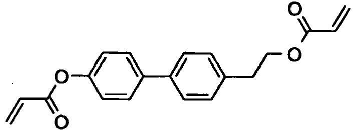 | RM-11 |
| 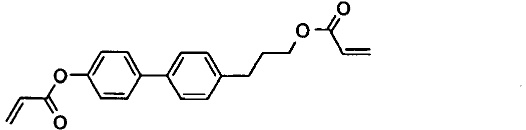 | RM-12 |
| 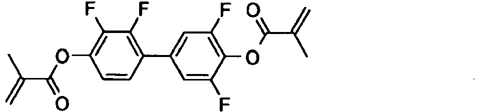 | RM-13 |
| 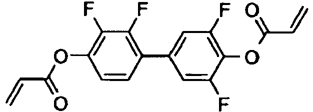 | RM-14 |
| 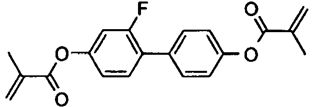 | RM-15 |
| 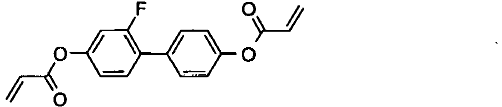 | RM-16 |
| 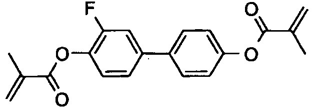 | RM-17 |
| 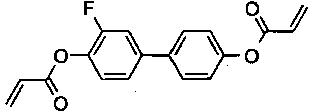 | RM-18 |
| 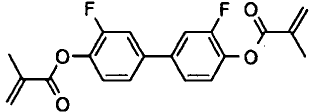 | RM-19 |
| 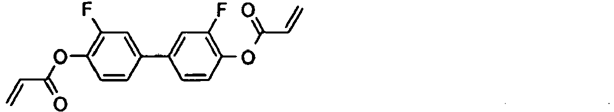 | RM-20 |
| 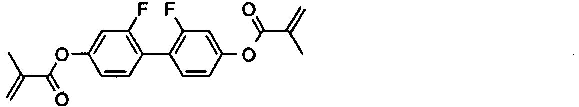 | RM-21 |
| 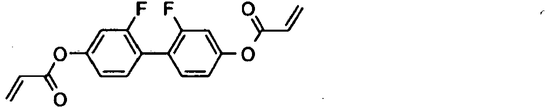 | RM-22 |
| 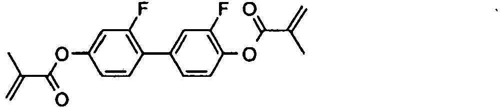 | RM-23 |
| 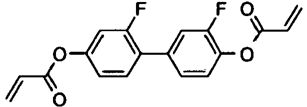 | RM-24 |
| 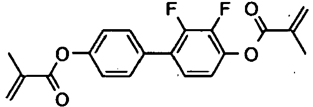 | RM-25 |
| 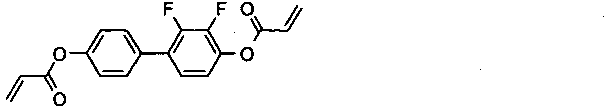 | Rom-26 |
| 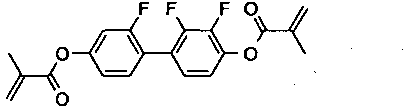 | RM-27 |
| 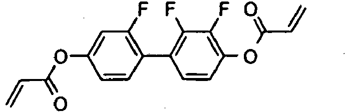 | RM-28 |
| 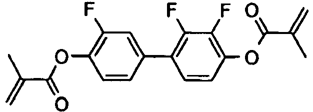 | RM-29 |
| 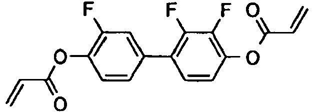 | RM-30 |
| 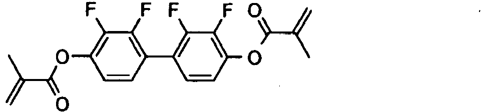 | RM-31 |
| 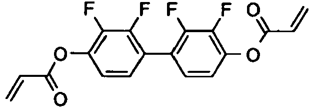 | RM-32 |
| 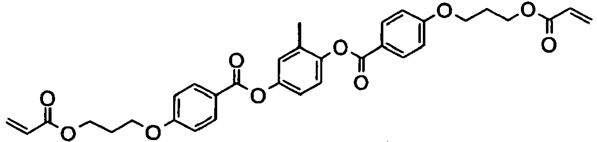 | RM-33 |
| 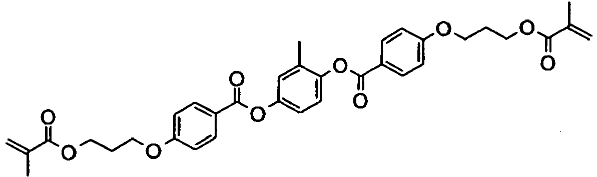 | RM-34 |
| 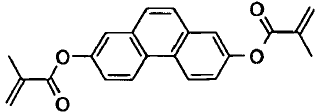 | RM-35 |
| 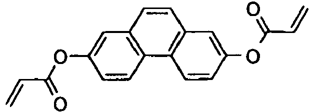 | RM-36 |
| 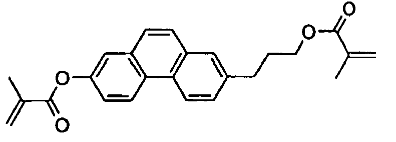 | RM-37 |
| 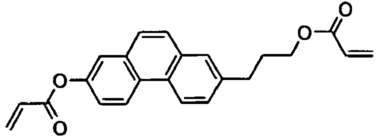 | RM-38 |
| 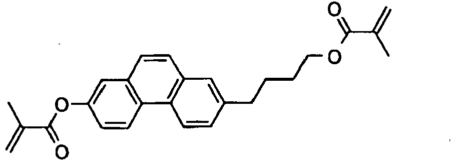 | RM-39 |
| 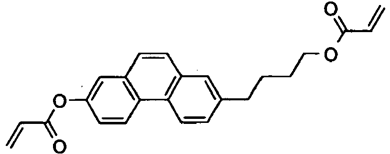 | RM-40 |
| 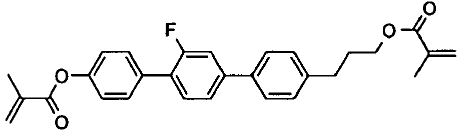 | RM-41 |
| 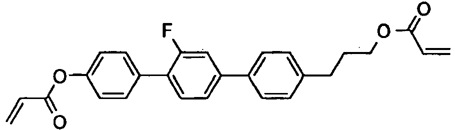 | RM-42 |
| 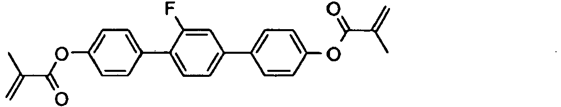 | RM-43 |
| 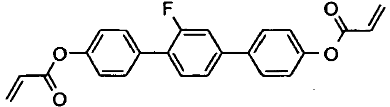 | RM-44 |
| 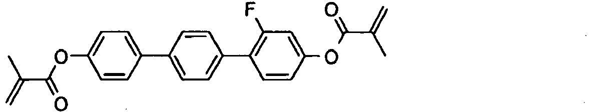 | RM-45 |
| 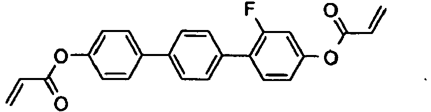 | RM-46 |
| 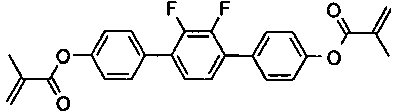 | RM-47 |
| 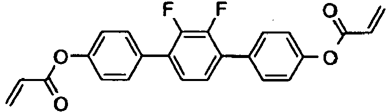 | RM-48 |
| 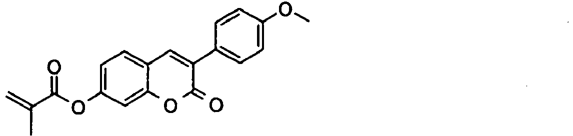 | RM-49 |
| 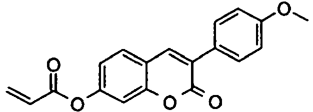 | RM-50 |
| 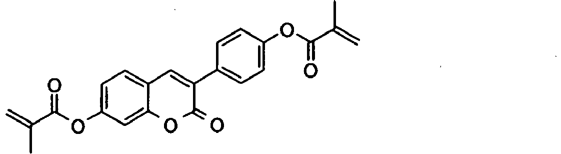 | RM-51 |
| 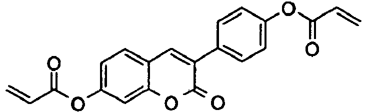 | RM-52 |
| 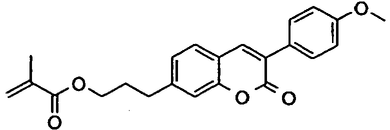 | RM-53 |
| 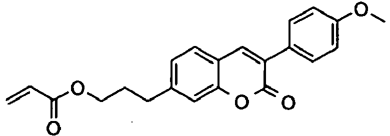 | RM-54 |
| 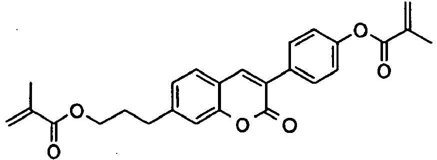 | RM-55 |
| 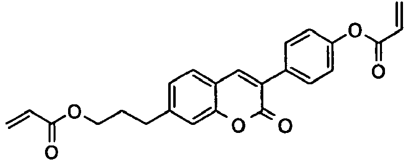 | RM-56 |
| 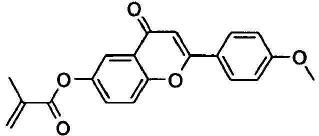 | RM-57 |
| 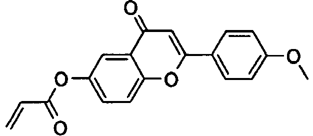 | RM-58 |
| 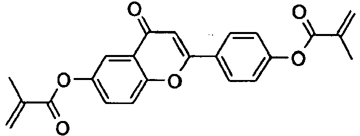 | RM-59 |
| 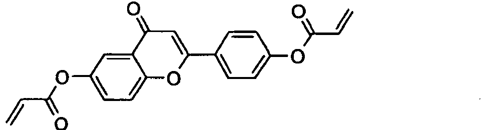 | RM-60 |
| 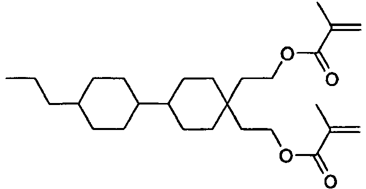 | RM-61 |
| 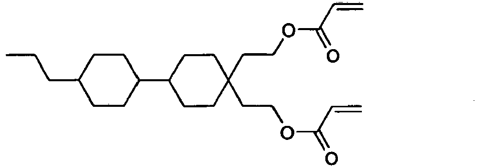 | RM-62 |
| 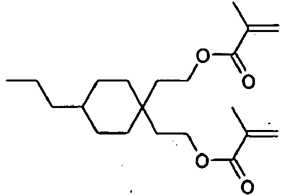 | RM-63 |
| 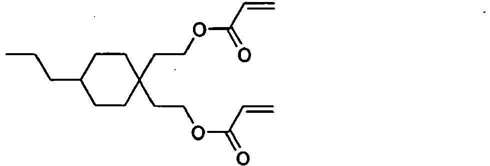 | RM-64 |
| 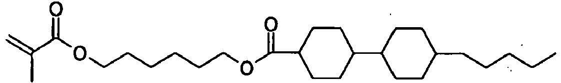 | RM-65 |
| 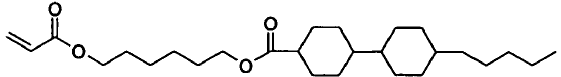 | RM-66 |
| 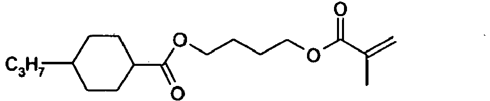 | RM-67 |
| 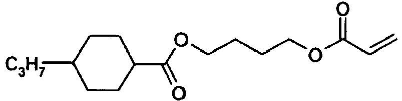 | RM-68 |
| 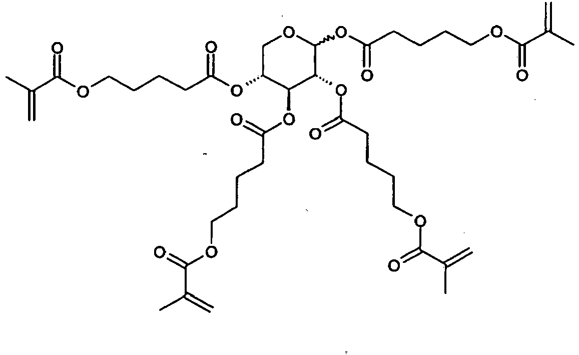 | RM-69 |
| 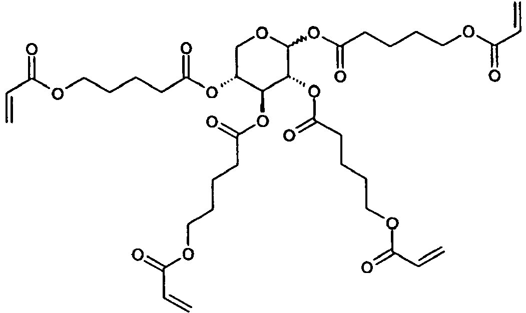 | RM-70 |
| 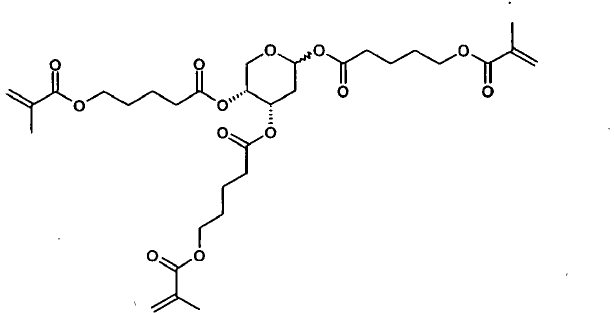 | RM-71 |
| 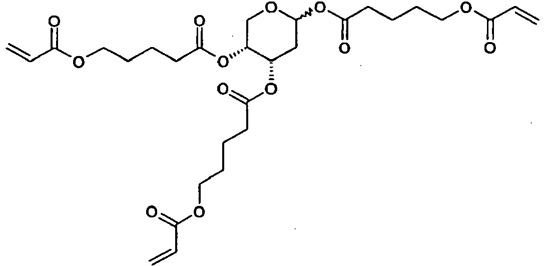 | RM-72 |
| 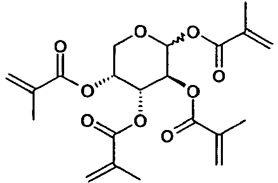 | RM-73 |
| 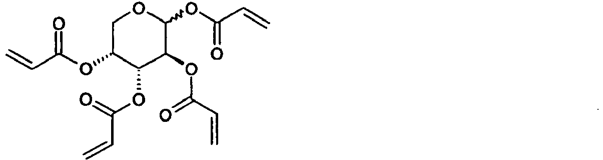 | RM-74 |

In einer bevorzugten Ausführungsform der vorliegenden Erfindung enthalten die mesogenen Medien eine oder mehrere Verbindungen ausgewählt aus der Gruppe der Verbindungen der Tabelle D.

### Ausführungsbeispiele:

Die folgenden Beispiele sollen die Erfindung erläutern, ohne sie zu begrenzen.

In den Beispielen bedeuten F. den Schmelzpunkt und K den Klärpunkt einer flüssigkristallinen Substanz in Grad Celsius; Siedetemperaturen sind mit Kp. bezeichnet. Es bedeuten ferner:

K: kristallin-fester Zustand, S: smektische Phase (der Index bezeichnet den Phasentyp), N: nematischer Zustand, Ch: cholesterische Phase, I: isotrope Phase, T_{g}: Glastemperatur. Die zwischen zwei Symbolen stehende Zahl gibt die Umwandlungstemperatur in Grad Celsius an.

Als Hostmischung zur Bestimmung der physikalischen Daten der Verbindungen der Formel I wird die Verkaufsmischung ZLI-4792 (Fa. Merck KGaA) verwendet. Aus der Änderung der Dielektrizitätskonstanten der Hostmischung nach Zugabe der zu untersuchenden Verbindung und Extrapolation auf 100 % der eingesetzten Verbindung werden die physikalischen Daten der zu untersuchenden Verbindung erhalten. Die zu untersuchende Verbindung wird in Abhängigkeit der Löslichkeit in der Regel zu 10 % in der Hostmischung gelöst.

Sofern nichts anderes angegeben ist, bedeuten Angaben von Teilen oder Prozent Gewichtsteile bzw. Gewichtsprozent.

Übliche Aufarbeitung bedeutet: man gibt Wasser hinzu, extrahiert mit Methylenchlorid, trennt ab, trocknet die organische Phase, dampft ein und reinigt das Produkt durch Kristallisation und/oder Chromatographie.

### Beispiel 1: 2,6-Di-tert-butyl-4-(5-propyl-(1,3)dioxan-2-yl)-phenol

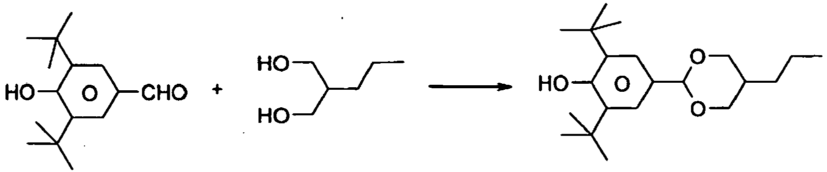

6,0 g (25 mmol) 3,5-Di-tert.-butyl-4-hydroxy-benzaldehyd, 3,0 g (25 mmol) 2-Propyl-propan-1,3-diol, 0,1 g p-Toluolsulfonsäure werden in 60 ml Toluol am Wasserabscheider über Nacht unter Rückfluss erhitzt. Der Ansatz wird auf Raumtemperatur abkühlen gelassen, mit gesättigter NaHCO₃-Lösung und mit Wasser gewaschen, über Natriumsulfat getrocknet, filtriert, das Lösungsmittel im Vakuum entfernt und der Rückstand mit Heptan/Dichlormethan (1:1) über Kieselgel filtriert. Kristallisation des Rohprodukts aus Heptan liefert 2,6-Di-tert-butyl-4-(5-propyl-(1,3)dioxan-2-yl)-phenol als farblosen Feststoff.
Schmelzpunkt: 110 °C

Analog werden die folgenden Verbindungen der Formel 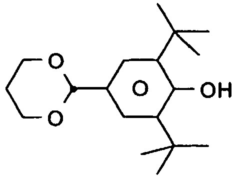 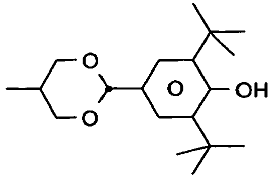 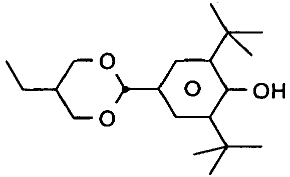 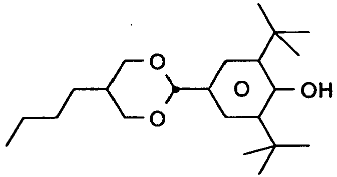 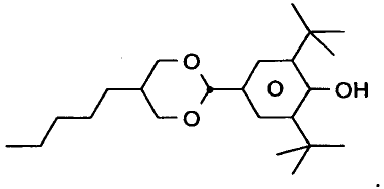 hergestellt.

### Beispiel 2: 2,6-Di-tert-butyl-4-(5-pentyl-(1,3)dioxan-2-yl)-phenol

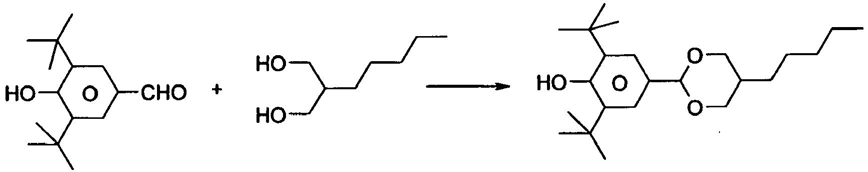

40,0 g (167 mmol) 3,5-Di-tert-butyl-4-hydroxy-benzaldehyd, 80,0 g (669 mmol) 2-Pentyl-propan-1,3-diol, 6,4 g (37 mmol) p-Toluolsulfonsäure werden in 250 ml Toluol vorgelegt und unter Eiskühlung 67 g Molekularsieb 0,4 nm portionsweise zugegeben. Der Ansatz wird über Nacht bei Raumtemperatur gerührt, über Celite filtriert, mit gesättigter NaHCO₃-Lösung und mit Wasser gewaschen, über Natriumsulfat getrocknet, filtriert, das Lösungsmittel im Vakuum entfernt und der Rückstand mit Heptan/Dichlormethan (1:1) über Kieselgel filtriert. Kristallisation des Rohprodukts aus Heptan liefert 2,6-Di-tert-butyl-4-(5-pentyl-(1,3)dioxan-2-yl)-phenol.

Analog werden die folgenden Verbindungen der Formel 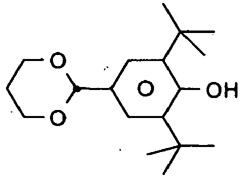 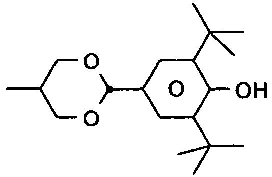 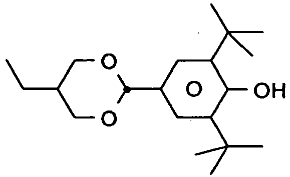 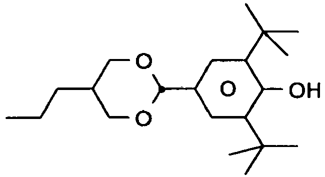 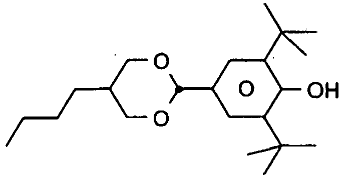 hergestellt.

### Beispiel 3

### 2,6-Di-tert-butyl-4-(5-(4-propyl-cyclohexyl)-(1,3)dioxan-2-yl)-phenol

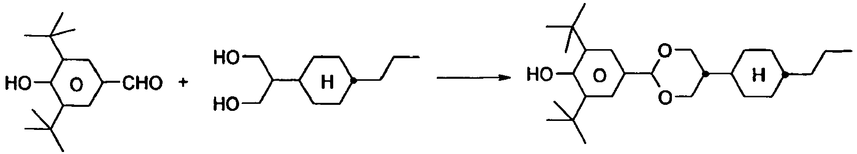

10,0 g (42 mmol) 3,5-Di-tert-butyl-4-hydroxy-benzaldehyd, 8,4 g (42 mmol) 2-(4-Propyl-Cyclohexyl)-propan-1,3-diol, 0,7 g p-Toluolsulfonsäure werden in 100 ml Toluol am Wasserabscheider über Nacht unter Rückfluss erhitzt. Der Ansatz wird auf Raumtemperatur abkühlen gelassen, mit gesättigter NaHCO₃-Lösung und mit Wasser gewaschen, über Natriumsulfat getrocknet, filtriert, das Lösungsmittel im Vakuum entfernt und der Rückstand mit Heptan/Dichlormethan (1:1) über Kieselgel filtriert. Kristallisation des Rohprodukts aus Heptan liefert 2,6-Di-tert-butyl-4-(5-(4-propyl-cyclohexyl)-(1,3)dioxan-2-yl)-phenol als farblosen Feststoff. Schmelzpunkt: 144 °C.

Analog werden die folgenden Verbindungen der Formel 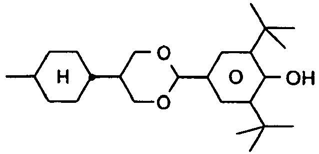 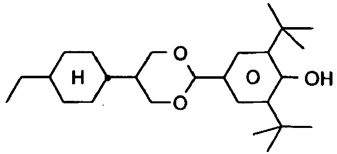 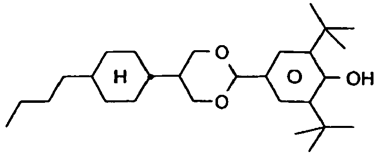 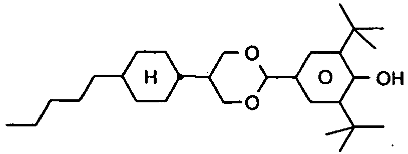 hergestellt.

### Beispiel 4

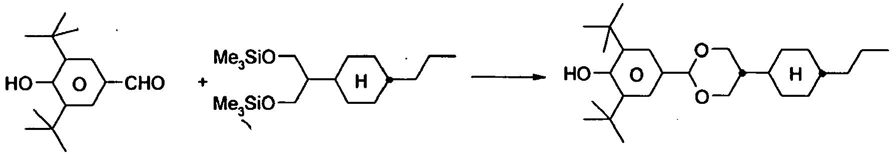

7, g (20 mmol) 1-Propyl-4-(2-trimethylsilanyloxy-1-trimethylsilanyloxy-methyl-ethyl)-cyclohexan und 0,6 g (3 mmol) Trimethylsilyltrifluormethansulfonat werden in 65 ml Dichlormethan gelöst und bei -70 °C eine Lösung von 5,3 g (22 mmol) 3,5-Di-tert-butyl-4-hydroxy-benzaldehyd, in 15 ml Dichlormethan zutropfen gelassen. Der Ansatz wird 2 Stunden bei -70 °C gerührt, 2.3 g Pyridin zugegegeben und auf Raumtemperatur ansteigen gelassen, mit gesättigter NaHCO₃-Lösung versetzt, mit Wasser gewaschen, über Natriumsulfat getrocknet, filtriert, das Lösungsmittel im Vakuum entfernt und der Rückstand mit Dichloromethan über Kieselgel filtriert. Kristallisation des Rohprodukts aus Heptan liefert 2,6-Di-tert-butyl-4-(5-(4-propyl-cyclohexyl)-(1,3)dioxan-2-yl)-phenol als farblosen Feststoff. Schmelzpunkt: 144 °C

Analog werden die folgenden Verbindungen der Formel 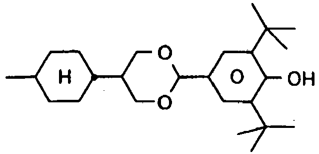 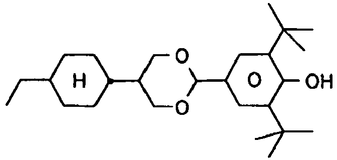 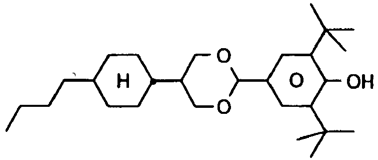 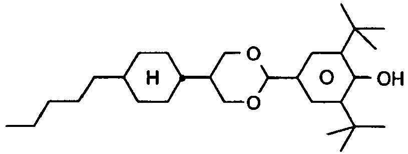 hergestellt.

### Beispiel 5: 1,9-bis(2,6-di-tert-butyl-1-hydroxy-phenyl)-2,4,8,10-tetraoxaspiro(5.5.)undecane

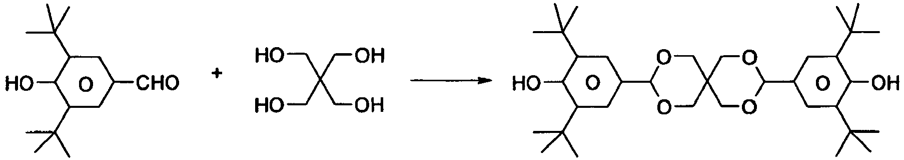

10,0 g (42 mmol) 3,5-Di-tert-butyl-4-hydroxy-benzaldehyd, 2,95 g (21 mmol) 2,2-Bis-hydroxymethyl-propan-1,3-diol, 0.7 g p-Toluolsulfonsäure werden in 100 ml Toluol am Wasserabscheider über Nacht unter Rückfluss erhitzt. Der Ansatz wird auf Raumtemperatur abkühlen gelassen, mit gesättigter NaHCO₃-Lösung und mit Wasser gewaschen, über Natriumsulfat getrocknet, filtriert, das Lösungsmittel im Vakuum entfernt und der Rückstand mit Heptan/Dichlormethan (1:1) über Kieselgel filtriert. Kristallisation des Rohprodukts aus Toluol liefert 1,9-bis(2,6-di-tert-butyl-1-hydroxy-phenyl)-2,4,8,10-tetraoxa-spiro(5.5.)undecane als farblosen Feststoff.
Schmelzpunkt: 256 °C

Vor- und nachstehend bedeuten:
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa•s], bestimmt nach dem Rotationsverfahren in einem magnetischen Feld
- LTS: Tieftemperaturstabilität [Low temperature stability (nematische Phase)], bestimmt in Testzellen.

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

### Mischungsbeispiele

In den nachfolgenden Mischungsbeispielen werden folgende Stabilisatoren eingesetzt:

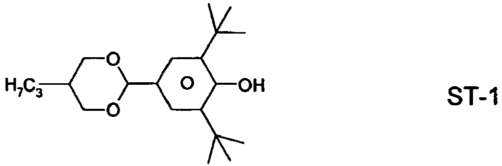

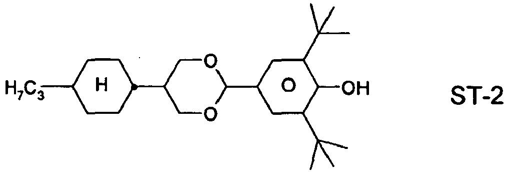

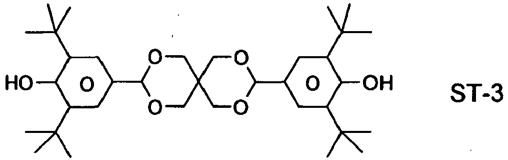

### Beispiel M1

| | | | |
|---|---|---|---|
| CY-5-O2 | 17,00 % | Klärpunkt [°C]: | 75,5 |
| CCY-3-03 | 5,00 % | Δn [589 nm, 20 °C]: | 0,0951 |
| CPY-2-02 | 8,00 % | ε_{∥} [1 kHz, 20 °C]: | 3,7 |
| CPY-3-O2 | 8,00 % | ε⊥ [1 kHz, 20 °C]: | 6,6 |
| PYP-2-3 | 5,00 % | Δε [1 kHz, 20 °C]: | -2,9 |
| CC-3-V1 | 9,00 % | K₁ [20°C]: | 12,9 |
| CC-3-V | 28,00 % | K₃ [20 °C]: | 14,8 |
| CCP-V-1 | 10,00 % | K₃/K₁ [20 °C]: | 1,15 |
| CK-3-F | 3,00 % | V₀ [V]: | 2,39 |
| CK-4-F | 4,00 % | γ₁ [mPa•s, 20 °C]: | 86 |
| CK-5-F | 3,00 % | LTS Cells -20 °C: | >1000 h |
| | | LTS Cells -30 °C: | >1000 h |
| | | LTS Cells -40 °C: | >1000 h |
| | | LTS Bulk -20 °C: | >1000 h |
| | | LTS Bulk -30 °C: | >1000 h |

Der Wärmestress-Test erfolgt in dieser Patentanmeldung in der Weise, dass jeweils 3 g der Mischung M1 in eine Glasflasche abgefüllt und mit einem Objektträger verschlossen werden. Anschließend wird die Mischung 2 Stunden bei 160 °C in einem Laborofen der Firma Memmert erhitzt. Vor sowie nach der Hitzebelastung wird die Holding Ratio mit dem VHRM 105 Gerät von Autronic bei 100 °C gemessen.

| | Konzentration Stabilisator | VHR (100 °C) | Verfärbung nach Stresstest | VHR (160 °C, 2h) |
|---|---|---|---|---|
| Mischung M1 ohne Stabilisator | | 98 % | gelb | 51 % |
| Mischung M1 mit Stabilisator ST1 | 500 ppm | 98 % | farblos | 98 % |
| Mischung M1 mit Stabilisator ST1 | 750 ppm | 98 % | farblos | 98 % |
| Mischung M1 mit Stabilisator ST1 | 1000 ppm | 98 % | farblos | 98 % |

### Beispiel M2

| | | | |
|---|---|---|---|
| CY-5-O2 | 3,00 % | Klärpunkt [°C]: | 95,5 |
| CCY-4-O2 | 5,00 % | Δn [589 nm, 20 °C]: | 0,0994 |
| CCY-3-O3 | 4,00 % | ε_{∥} [1 kHz, 20 °C]: | 3,6 |
| CCY-3-O2 | 11,00 % | ε⊥ [1 kHz, 20 °C]: | 6,9 |
| CPY-2-02 | 2,00 % | Δε [1 kHz, 20 °C]: | -3,2 |
| CPY-3-02 | 10,00 % | K₁ [pN, 20 °C]: | 15,8 |
| CCP-V-1 | 7,00 % | K₃ [pN, 20 °C]: | 16,7 |
| CCH-301 | 5,00 % | K₃/K₁ [20 °C]: | 1,06 |
| CC-3-V1 | 11,00 % | Δε [1 kHz, 20 °C]: | -3,2 |
| CC-4-V | 19,00 % | γ₁ [mPa•s, 20 °C]: | 124 |
| PYP-2-3 | 8,00 % | LTS Cells -20 °C: | >1000 h |
| CCH-34 | 2,00 % | LTS Cells -30 °C: | >1000 h |
| CK-3-F | 4,00 % | LTS Cells -40 °C: | >1000 h |
| CK-4-F | 5,00 % | LTS Bulk -20 °C: | >1000 h |
| CK-5-F | 4,00 % | LTS Bulk -30 °C: | 216 h |
| | | LTS Bulk -40 °C: | 168 h |
| | | VHR [100 °C] | 98 % |
| | | VHR [160 °C, 2 h] | 98 % |

Die Mischung M2 ist mit 500 ppm ST-1 stabilisiert.

### Beispiel M3

| | | | |
|---|---|---|---|
| CY-3-02 | 12,00 % | Klärpunkt [°C]: | 75 |
| CCY-3-O2 | 5,00 % | Δn [589 nm, 20 °C]: | 0,0958 |
| CPY-2-O2 | 9,00 % | ε_{∥} [1 kHz, 20 °C]: | 3,7 |
| CPY-3-O2 | 8,00 % | ε⊥ [1 kHz, 20 °C]: | 6,9 |
| PYP-2-3 | 3,00 % | Δε [1 kHz, 20 °C]: | -3,1 |
| PYP-2-4 | 4,00 % | VHR [100 °C] | 97% |
| CCH-23 | 21,00 % | VHR [160 °C, 2 h] | 97% |
| CCH-34 | 10,00 % | | |
| PCH-301 | 5,00 % | | |
| CCP-31 | 10,00 % | | |
| CK-3-F | 4,00 % | | |
| CK-4-F | 4,00 % | | |
| CK-5-F | 5,00 % | | |

Die Mischung M3 ist mit 500 ppm ST-1 stabilisiert.

### Beispiel M4

| | | | |
|---|---|---|---|
| CC-3-V | 25,95 % | Klärpunkt [°C]: | 75,3 |
| CC-3-V1 | 5,00 % | Δn [589 nm, 20 °C]: | 0,0929 |
| CCP-V-1 | 8,00 % | ε_{∥} [1 kHz, 20 °C]: | 3,7 |
| CCY-3-02 | 8,00 % | ε⊥ [1 kHz, 20 °C]: | 7,1 |
| CCY-3-03 | 6,50 % | Δε [1 kHz, 20 °C]: | -3,4 |
| CK-3-F | 2,00 % | K₁ [20°C]: | 12,6 |
| CK-4-F | 3,00 % | K₃ [20 °C]: | 13,8 |
| CK-5-F | 2.00 % | V₀ [20 °C]: | 2,13 |
| CPY-3-02 | 12,00 % | γ₁ [mPa•s, 20 °C]: | 110 |
| CY-3-04 | 16,00 % | | |
| CY-5-04 | 7,00 % | | |
| PYP-2-3 | 4,50 % | | |
| ST-1 | 0,05 % | | |

### Beispiel M5

| | | | |
|---|---|---|---|
| CCY-3-O2 | 6,00 % | Klärpunkt [°C]: | 78,5 |
| CCY-3-O3 | 4,00 % | Δn [589 nm, 20 °C]: | 0,0822 |
| CCY-4-O2 | 6,00 % | Δε [1 kHz, 20 °C]: | -3,5 |
| CPY-3-O2 | 9,00 % | V₀ [V]: | 2,20 |
| CPY-2-O2 | 10,00 % | γ₁ [mPa•s, 20 °C]: | 78 |
| CC-3-V | 54,00 % | | |
| AIK-5-F | 11,00 % | | |

Die Mischung M5 ist mit 500 ppm ST-2 stabilisiert.

### Beispiel M6

| | | | |
|---|---|---|---|
| CY-3-O2 | 8,00 % | Klärpunkt [°C]: | 80,5 |
| CCY-3-03 | 8,00 % | Δn [589 nm, 20 °C]: | 0,0833 |
| CCY-4-O2 | 7,00 % | ε_{∥} [1 kHz, 20 °C]: | 3,6 |
| CPY-2-02 | 8,00 % | ε⊥ [1 kHz, 20 °C] | 7,3 |
| CPY-3-02 | 9,00 % | Δε [1 kHz, 20 °C]: | -3,7 |
| CC-5-V | 14,00 % | K₁ [20°C]: | 14,7 |
| CC-4-V | 16,00 % | K₃ [20 °C]: | 14,0 |
| CC-3-V1 | 12,00 % | K₃/K₁ [20 °C]: | 0,95 |
| CCH-34 | 8,00 % | V₀ [20 °C, V]: | 2,05 |
| AIK-5-F | 10,00 % | γ₁ [mPa • s, 20 °C]: | 98 |

Die Mischung M6 ist mit 500 ppm ST-1 stabilisiert.

### Beispiel M7

| | | | |
|---|---|---|---|
| CCY-3-03 | 10,00 % | Klärpunkt [°C]: | 78 |
| CPY-2-O2 | 12,00 % | Δn [589 nm, 20 °C]: | 0,0855 |
| CPY-3-O2 | 11,00 % | ε_{∥} [1 kHz, 20 °C]: | 3,4 |
| CC-5-V | 12,00 % | ε⊥ [1 kHz, 20 °C]: | 6,4 |
| CC-4-V | 16,00 % | Δε [1 kHz, 20 °C]: | -3,0 |
| CC-3-V1 | 12,00 % | K₁ [pN, 20 °C]: | 14,9 |
| CCH-34 | 9,00 % | K₃ [pN, 20 °C]: | 13,4 |
| PCH-53 | 8,00 % | K₃/K₁ [20 °C]: | 0,90 |
| AlK-5-F | 10,00 % | V₀ [20 °C, V]: | 2,24 |
| | | γ₁ [mPa • s, 20 °C]: | 91 |

Die Mischung M7 ist mit 1000 ppm ST-1 stabilisiert

### Beispiel M8

| | | | |
|---|---|---|---|
| AIK-5-F | 10,00 % | Klärpunkt [°C]: | 78 |
| CY-3-02 | 10,00 % | Δn [589 nm, 20 °C]: | 0,0987 |
| CPY-2-02 | 10,00 % | ε_{∥} [1 kHz, 20 °C]: | 3,5 |
| CPY-3-02 | 10,00 % | ε⊥ [1 kHz, 20 °C]: | 6,6 |
| CCH-34 | 6,00 % | Δε [1 kHz, 20 °C]: | -3,1 |
| CCH-23 | 22,00 % | K₁ [pN, 20 °C]: | 14,1 |
| CCP-3-3 | 9,00 % | K₃ [pN, 20 °C]: | 14,2 |
| CCP-3-1 | 8,00 % | K₃/K₁ [20 °C]: | 1,01 |
| BCH-32 | 6,00 % | V₀ [20 °C, V]: | 2,26 |
| PCH-301 | 9,00 % | γ₁ [mPa • s, 20 °C]: | 103 |

Die Mischung M8 ist mit 750 ppm ST-1 stabilisiert.

### Beispiel M9

| | | | |
|---|---|---|---|
| CY-3-O4 | 7,00 % | Klärpunkt [°C]: | 85 |
| CCY-3-O3 | 8,00 % | Δn [589 nm, 20 °C]: | 0,0952 |
| CCY-4-O2 | 5,00 % | Δε [1 kHz, 20 °C]: | -3,8 |
| CPY-2-02 | 12,00 % | γ₁ [mPa • s, 20 °C]: | 130 |
| CPY-3-O2 | 12,00 % | | |
| CC-4-V | 13,00 % | | |
| CC-3-V1 | 16,00 % | | |
| CCP-V-1 | 4,00 % | | |
| PCH-301 | 12,00 % | | |
| AIK-5-F | 11,00 % | | |

Die Mischung M9 ist mit 500 ppm ST-2 stabilisiert.

### Beispiel M10

| | | | |
|---|---|---|---|
| CC-3-V | 34,45 % | Klärpunkt [°C]: | 75,3 |
| CC-3-V1 | 5,00 % | Δn [589 nm, 20 °C]: | 0,1000 |
| CCY-3-O2 | 10,00 % | ε_{∥} [1 kHz, 20 °C]: | 3,8 |
| CK-3-F | 3,00 % | ε⊥ [1 kHz, 20 °C]: | 7,0 |
| CK-4-F | 3,00 % | Δε [1 kHz, 20 °C]: | -3,2 |
| CK-5-F | 2,00 % | K₁ [pN, 20 °C]: | 12,7 |
| CPY-2-02 | 12,00 % | K₃ [pN, 20 °C]: | 13,9 |
| CPY-3-02 | 10,00 % | V₀ [20 °C]: | 2,19 |
| CY-3-O4 | 13,50 % | γ₁ [mPa • s, 20 °C]: | 96 |
| PYP-2-4 | 4,00 % | LTS Bulk -20 °C: | 216 h |
| PYP-2-3 | 3,00 % | | |
| ST-1 | 0,05 % | | |

### Beispiel M11

| | | | |
|---|---|---|---|
| CC-3-V | 25,95 % | Klärpunkt [°C]: | 75,1 |
| CC-3-V1 | 8,50 % | Δn [589 nm, 20 °C]: | 0,0928 |
| CCP-V-1 | 9,00 % | ε_{∥} [1 kHz, 20 °C]: | 3,7 |
| CCY-3-02 | 6,50 % | ε⊥ [1 kHz, 20 °C]: | 7,0 |
| CK-3-F | 3,00 % | Δε [1 kHz, 20 °C]: | -3,3 |
| CK-4-F | 3,00 % | K₁ [pN, 20 °C]: | 12,6 |
| CK-5-F | 2,00 % | K₃ [pN, 20 °C]: | 14,4 |
| CPY-2-O2 | 11,00 % | K₃/K₁ [20 °C]: | 1,14 |
| CPY-3-02 | 11,00 % | V₀ [20 °C]: | 2,20 |
| CY-3-04 | 20,00 % | γ₁ [mPa • s, 20 °C]: | 101 |
| ST-1 | 0,05 % | | |

### Beispiel M12

| | | | |
|---|---|---|---|
| CY-3-04 | 7,00 % | Klärpunkt [°C]: | 85 |
| CCY-3-03 | 8,00 % | Δn [589 nm, 20 °C]: | 0,0952 |
| CCY-4-02 | 5,00 % | Δε [1 kHz, 20 °C]: | -3,8 |
| CPY-2-02 | 12,00 % | γ₁ [mPa • s, 20 °C]: | 130 |
| CPY-3-02 | 12,00 % | | |
| CC-4-V | 13,00 % | | |
| CC-3-V1 | 16,00 % | | |
| CCP-V-1 | 4,00 % | | |
| PCH-301 | 12,00 % | | |
| AIK-5-F | 11,00 % | | |

Die Mischung M12 ist mit 500 ppm ST-2 stabilisiert.

Die stabilisierten Mischungen M1 - M12 sind im Stress-Test, wie unter Beispiel 1 beschrieben, alle stabil und weisen Holding Ratio Werte von ≥ 97 % auf.

### Beispiel M13

| | | | |
|---|---|---|---|
| PY-3-02 | 9,00 % | Klärpunkt [°C]: | 101,5 |
| CLY-3-02 | 10,00 % | Δn [589 nm, 20 °C]: | 0,1156 |
| CCY-3-O2 | 10,00 % | ε_{∥} [1 kHz, 20 °C]: | 4,0 |
| CCY-3-03 | 3,00 % | ε⊥ [1 kHz, 20 °C]: | 9,1 |
| CCY-4-O2 | 9,00 % | Δε [1 kHz, 20 °C]: | -5,1 |
| CPY-2-02 | 10,00 % | K₁ [pN, 20 °C]: | 17,4 |
| CPY-3-02 | 8,00 % | K₃ [pN, 20 °C]: | 18,9 |
| PYP-2-3 | 4,00 % | K₃/K₁ [20 °C]: | 1,09 |
| CC-3-V | 24,50 % | V₀ [20 °C]: | 2,03 |
| CCP-V-1 | 2,00 % | γ₁ [mPa • s, 20 °C]: | 183 |
| CK-3-F | 4,50 % | | |
| CK-4-F | 3,00 % | | |
| CK-5-F | 3,00 % | | |

Die Mischung M13 ist mit 500 ppm ST-1 stabilisiert.

Zur Herstellung einer PS-VA Mischung werden 99,7 % der Mischung gemäß Beispiel M-13 mit 0,3 % der polymerisierbaren Verbindung der Formel 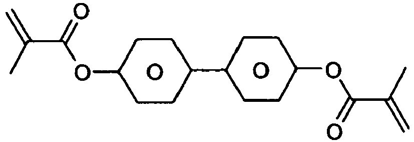 versetzt.

Die PS-VA Mischung wird in eine Zelle mit homeotroper Orientierung gefüllt. Nach Anlegen einer Spannung von 24 V wird mit einer Leistung von 100 mW/cm² mit UV-Licht bestrahlt. Danach sind folgende Tiltwinkel eingestellt:

| Bestrahlungsdauer | Tiltwinkel |
|---|---|
| 0 min | 89° |
| 1 min | 84° |
| 4 min | 68°. |

## Patentansprüche

1. Flüssigkristallines Medium auf der Basis eines Gemisches von polaren Verbindungen mit negativer dielektrischer Anisotropie, **dadurch gekennzeichnet, dass** es mindestens eine Verbindung der Formel I, 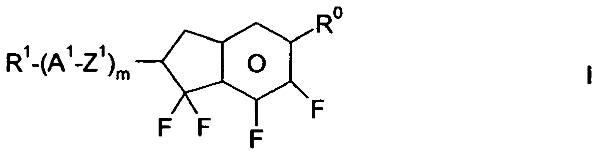 und mindestens eine Verbindung ausgewählt aus der Gruppe der Verbindungen der Formeln IA*, IB*, IC* und ID*, 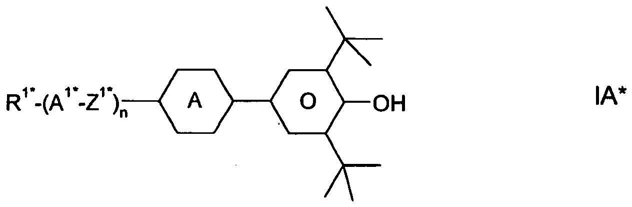 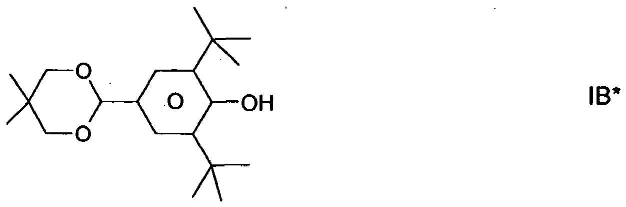 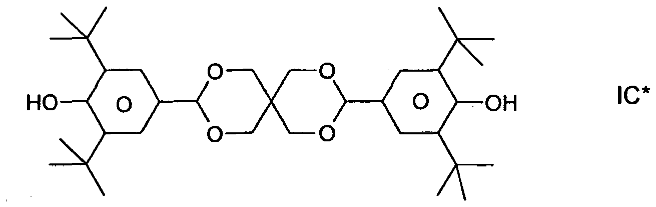 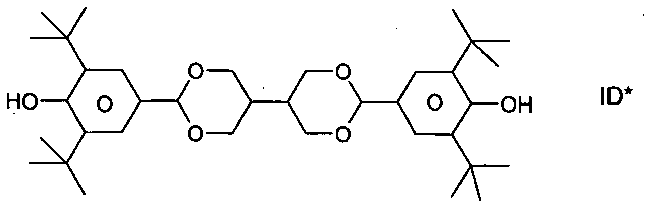 worin
R¹, R^{1*} und R⁰ jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 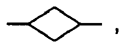 -C≡C-, -OC-O- oder -O-CO-so ersetzt sein können, dass O-Atome nicht direkt miteinander verknüpft sind,
A¹ und A^{1*} jeweils unabhängig voneinander
a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH-Gruppen durch N ersetzt sein können,
c) einen Rest aus der Gruppe Piperidin-1,4-diyl-, 1,4-Bicyclo[2,2,2]-octylen-, Naphthalin-2,6-diyl, Decahydronaphthalin-2,6-diyl, 1,2,3,4-Tetrahydronaphthalin-2,6-diyl, Phenanthren-2,7-diyl, Fluoren-2,7-diyl,
wobei die Reste a), b) und c) ein oder mehrfach durch Halogenatome substituiert sein können,
Z¹ und Z^{1*} jeweils unabhängig voneinander -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- oder eine Einfachbindung,
m und n jeweils unabhängig voneinander 0, 1 oder 2, 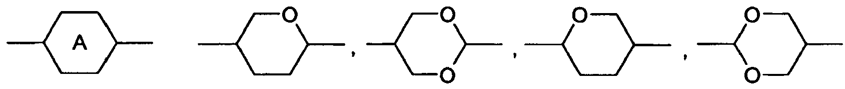 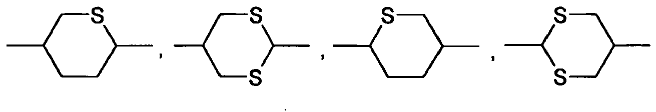 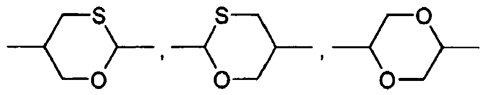
bedeuten,
enthält.

2. Flüssigkristallines Medium nach Anspruch 1, **dadurch gekennzeichnet, dass** es mindestens eine Verbindung ausgewählt aus den Formeln I1 bis I18, 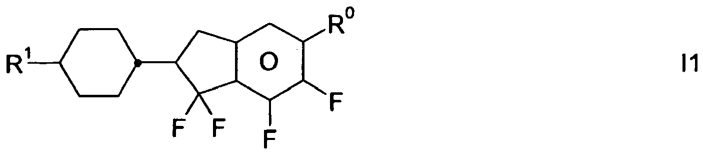 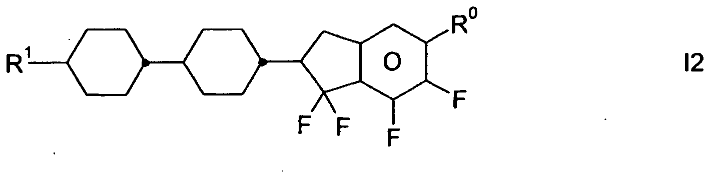 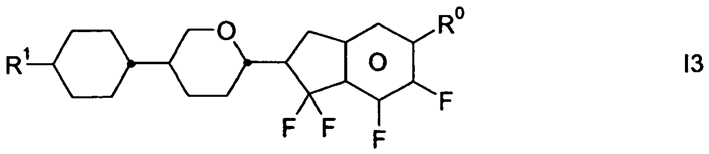 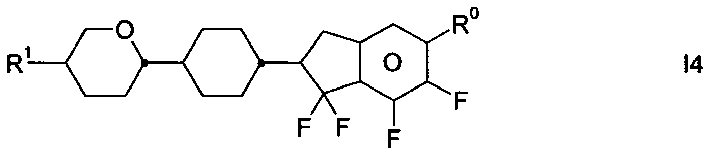 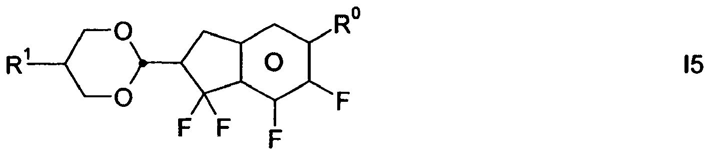 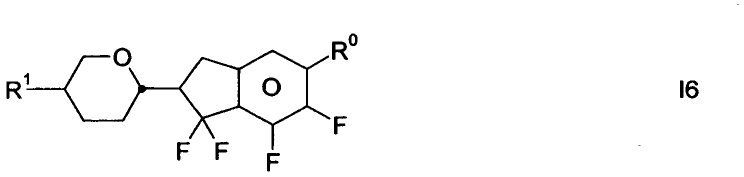 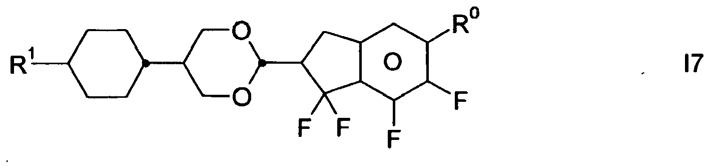 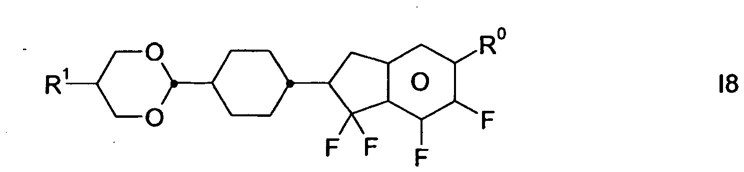 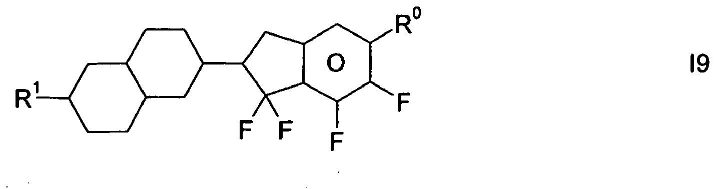 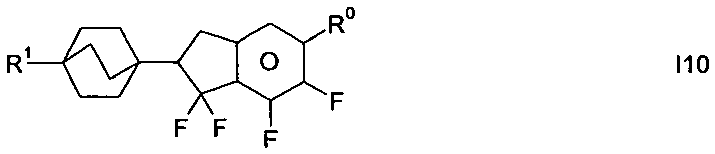 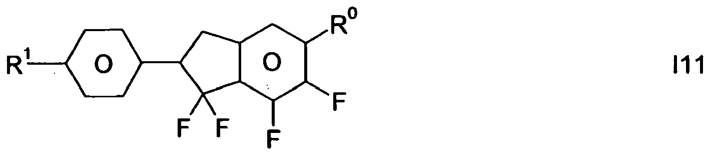 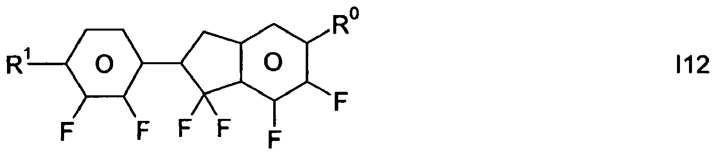 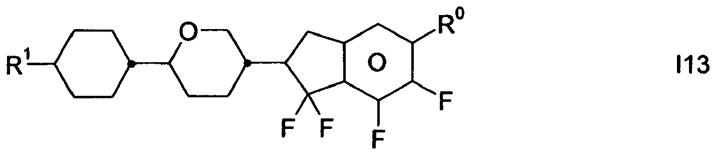 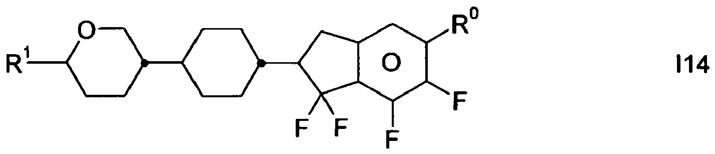 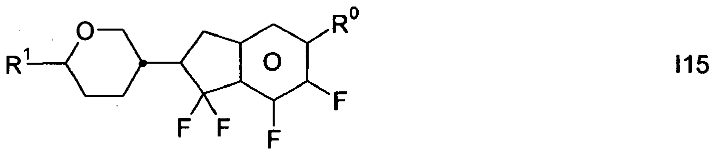 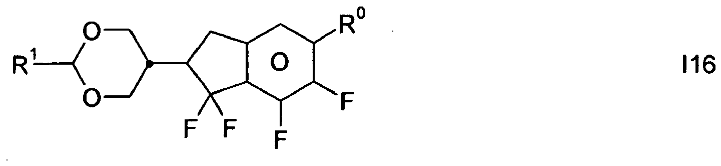 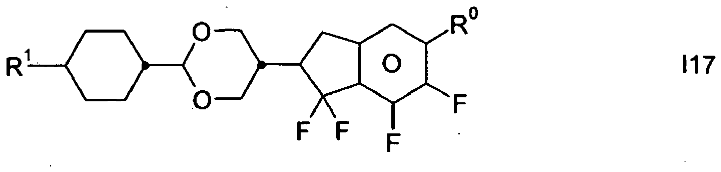 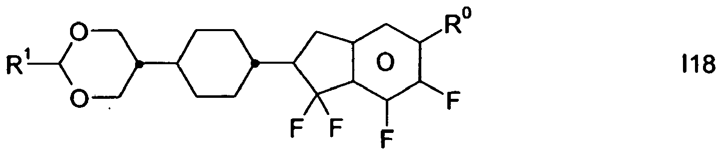 worin
R⁰ und R¹ die in Anspruch 1 angegebenen Bedeutungen haben,
enthält.

3. Flüssigkristallines Medium nach Anspruch 1 oder 2, **dadurch gekennzeichnet, dass** R⁰ H ist.

4. Flüssigkristallines Medium nach einem oder mehreren der Ansprüche 1 bis 3, **dadurch gekennzeichnet, dass** es mindestens eine Verbindung der Formel I1 und/oder I15 enthält.

5. Flüssigkristallines Medium nach einem oder mehreren der Ansprüche 1 bis 4, **dadurch gekennzeichnet, dass** es mindestens eine Verbindung der Formel IA*-1 bis IA*-6, 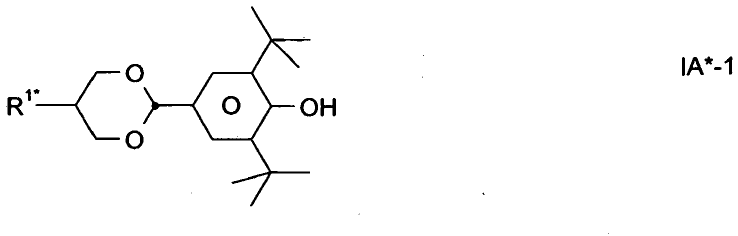 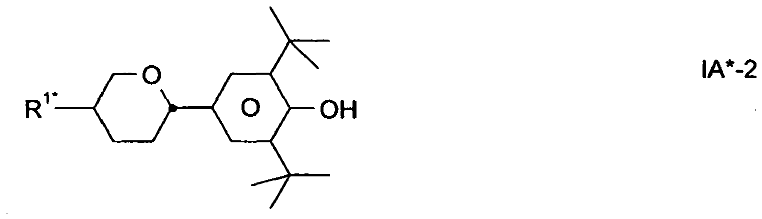 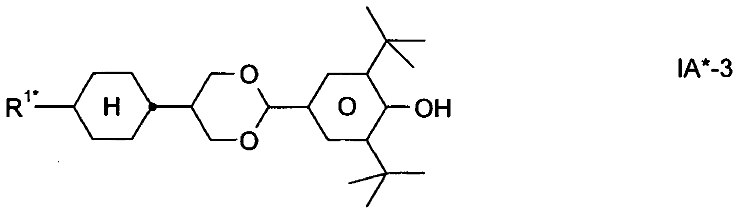 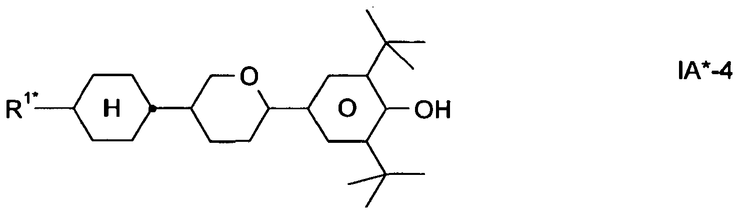 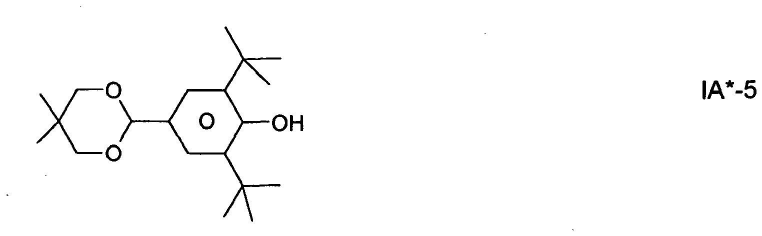 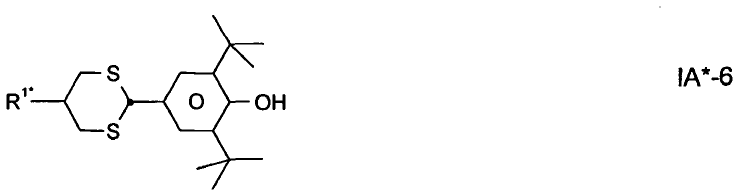 worin
R^{1*} die in Anspruch 1 angegebenen Bedeutungen hat,
enthält.

6. Flüssigkristallines Medium nach einem oder mehreren der Ansprüche 1 bis 5, **dadurch gekennzeichnet, dass** es zusätzlich eine oder mehrere Verbindungen ausgewählt aus der Gruppe der Verbindungen der Formeln IIA, IIB und IIC, 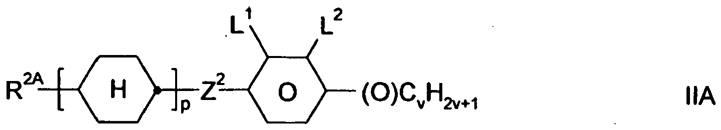 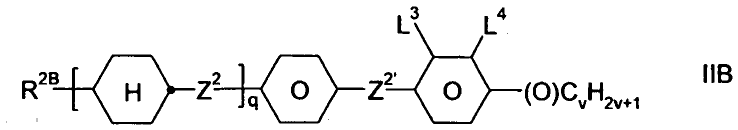 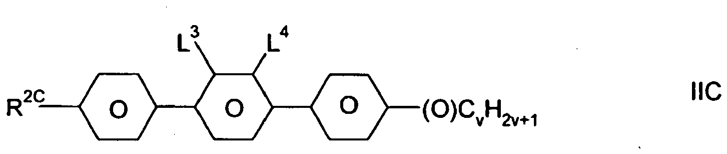 worin
R^{2A}, R^{2B} und R^{2C} jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 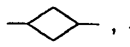 -C≡C-, -CF₂O- -OCF₂-, -OC-O- oder -O-CO- so ersetzt sein können, dass O-Atome nicht direkt miteinander verknüpft sind,
L¹⁻⁴ jeweils unabhängig voneinander F oder Cl,
Z² und Z^{2'} jeweils unabhängig voneinander Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p 1 oder 2, und im Fall Z² = Einfachbindung kann p auch 0 bedeuten,
q 0 oder 1, und
v 1 bis 6
bedeuten,
enthält.

7. Flüssigkristallines Medium nach einem oder mehreren der Ansprüche 1 bis 6, **dadurch gekennzeichnet, dass** es zusätzlich eine oder mehrere Verbindungen der Formel III, 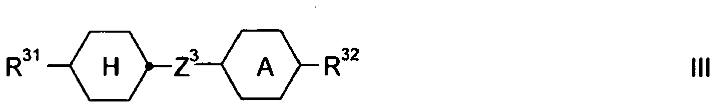 worin
R³¹ und R³² jeweils unabhängig voneinander einen geradkettigen Alkyl-, Alkoxyalkyl- oder Alkoxyrest mit bis zu 12 C-Atomen, und 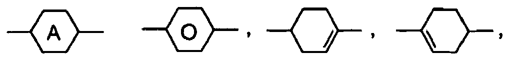 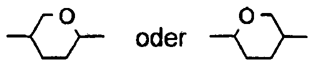
Z³ Einfachbindung, -CH₂CH₂-, -CH=CH-, -CF₂O-, -OCF₂-, -CH₂O-, -OCH₂-, -COO-, -OCO-, -C₂F₄-, -C₄H₉-, -CF=CF-
bedeuten,
enthält.

8. Flüssigkristallines Medium nach einem oder mehreren der Ansprüche 1 bis 7, **dadurch gekennzeichnet, dass** das Medium zusätzlich eine oder mehrere Verbindungen der Formeln L-1 bis L-11, 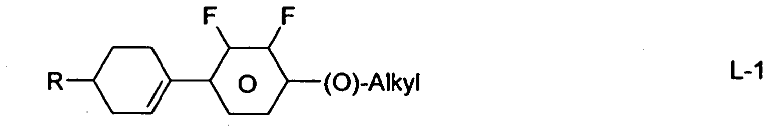 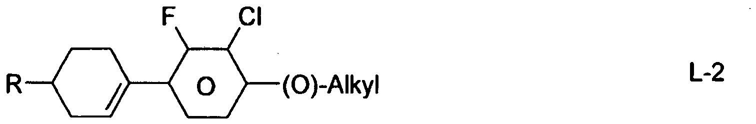 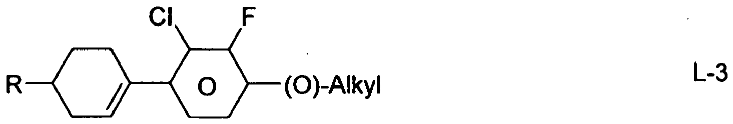 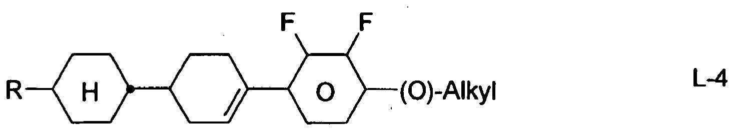 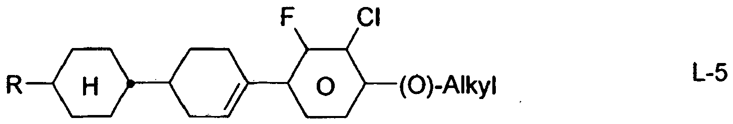 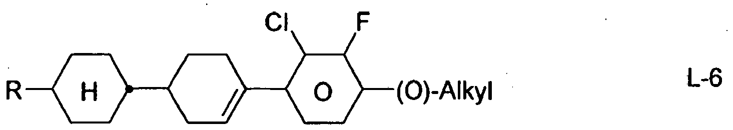 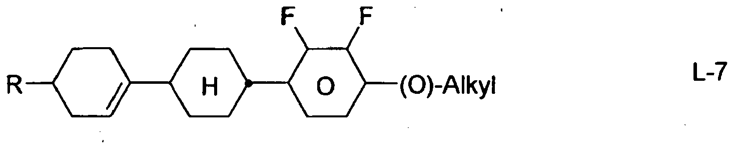 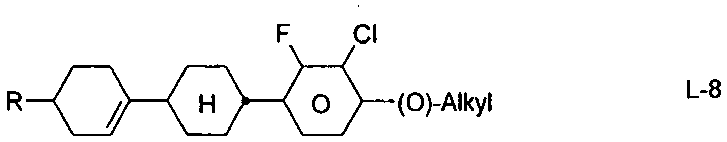 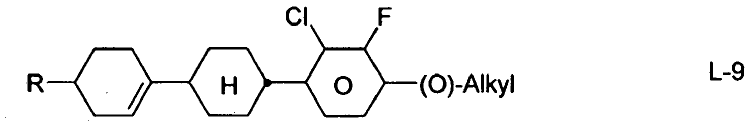 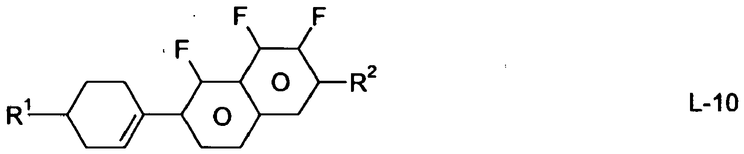 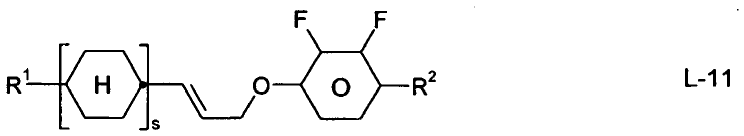 worin
R, R¹ und R² jeweils unabhängig voneinander die für R^{2A} in Anspruch 6 angegebenen Bedeutungen haben und Alkyl ein Alkylrest mit 1-6 C-Atomen, und
s 1 oder 2
bedeuten,
enthält.

9. Flüssigkristallines Medium nach einem oder mehreren der Ansprüche 1 bis 8, **dadurch kennzeichnet, dass** das Medium zusätzlich eine oder mehrere Terphenyle der Formeln T-1 bis T-21, 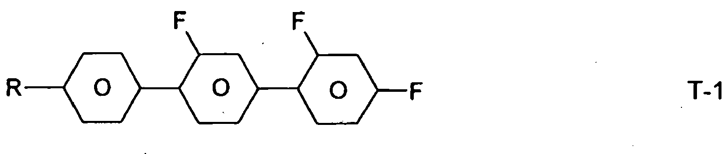 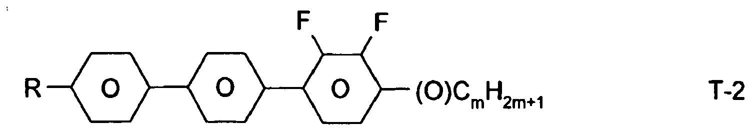 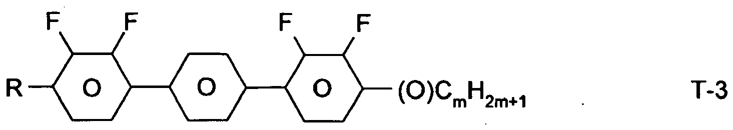 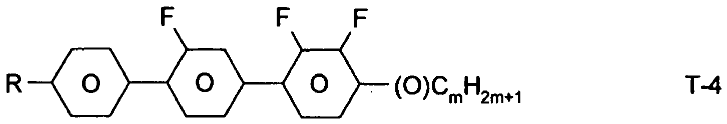 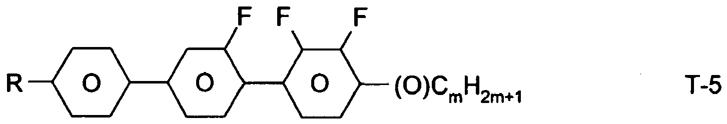 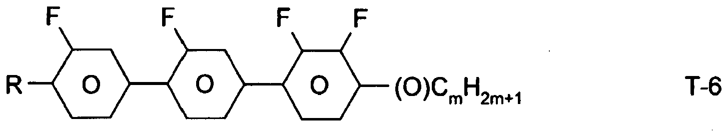 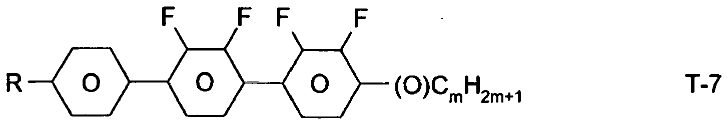 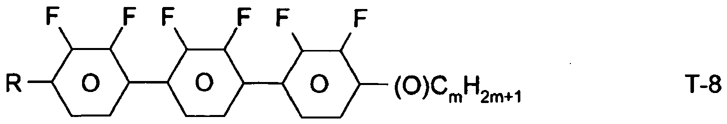 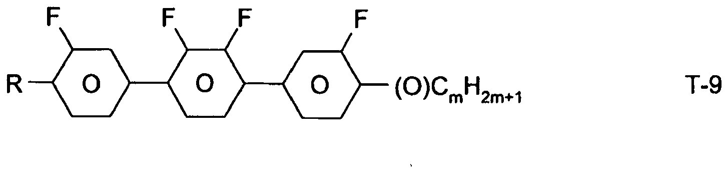 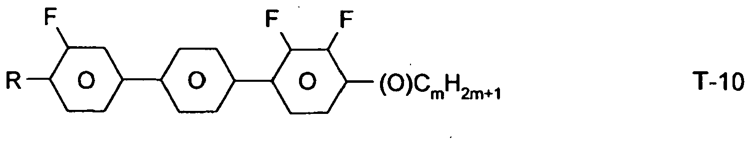 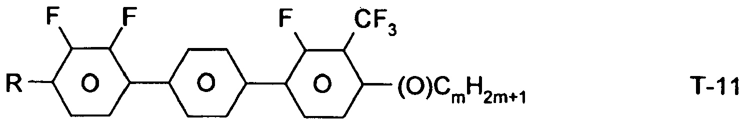 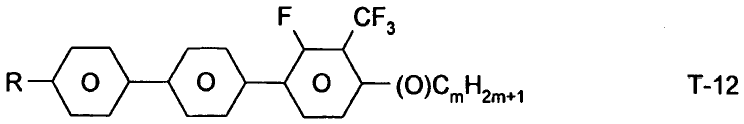 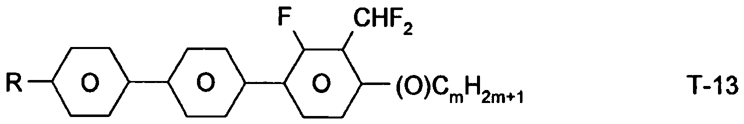 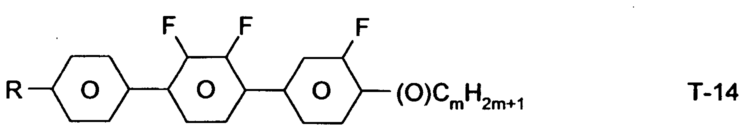 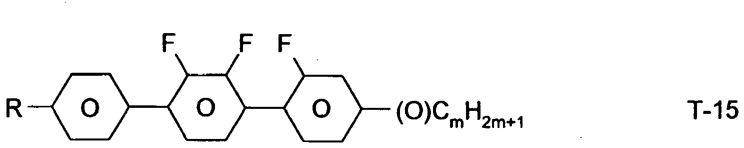 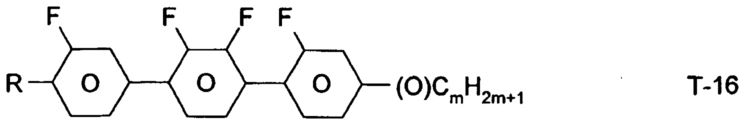 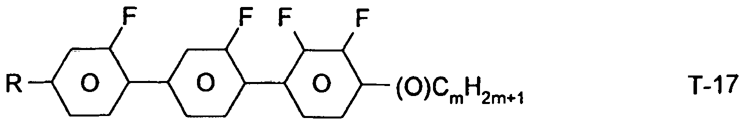 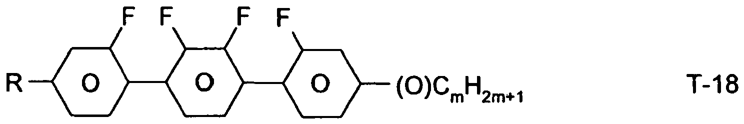 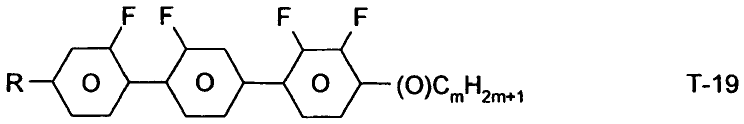 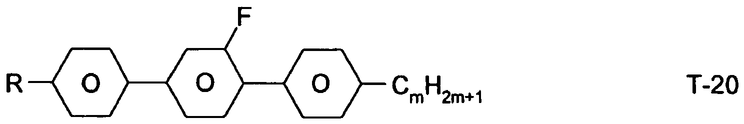 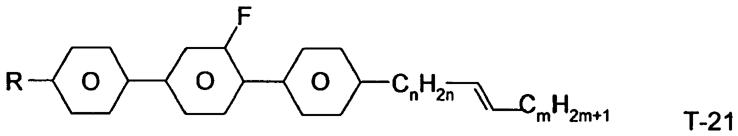 worin
R geradkettiger Alkyl- oder Alkoxyrest mit 1-7 C-Atomen bedeutet, und
m 1-6
bedeuten,
enthält.

10. Flüssigkristallines Medium nach einem oder mehreren der Ansprüche 1 bis 9, **dadurch gekennzeichnet, dass** das Medium zusätzlich eine oder mehrere Verbindungen der Formeln O-1 bis O-16, 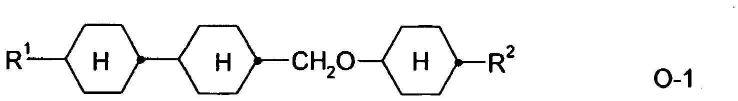 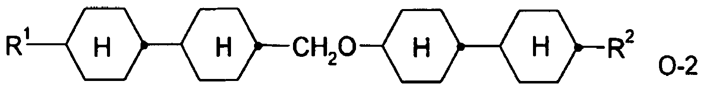 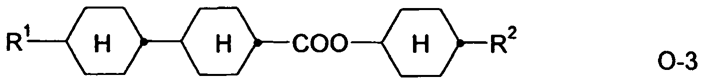 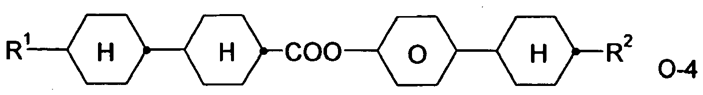 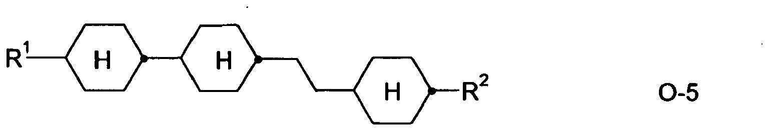 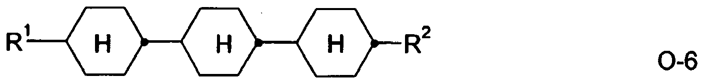 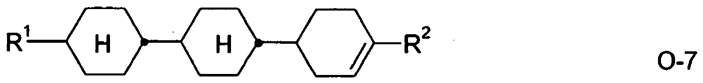 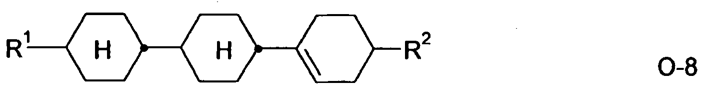 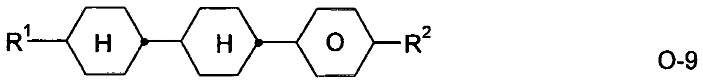 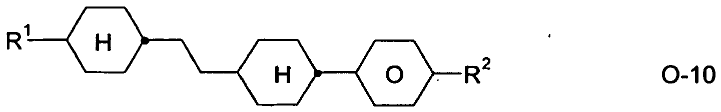 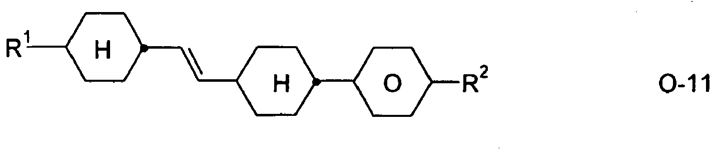 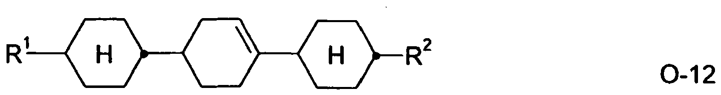 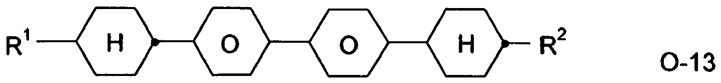 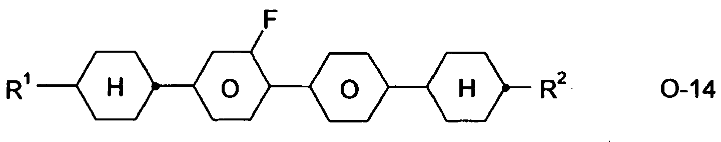 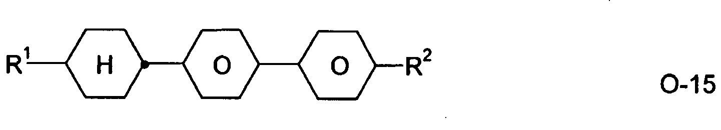 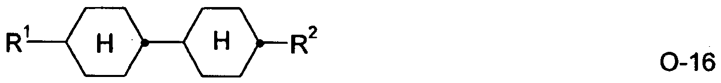 worin
R¹ und R² jeweils unabhängig voneinander die für R^{2A} in Anspruch 6 angegebenen Bedeutungen haben,
enthält.

11. Flüssigkristallines Medium nach einem oder mehreren der Ansprüche 1 bis 10, **dadurch gekennzeichnet, dass** der Anteil an Verbindungen der Formel I im Gesamtgemisch ≥ 5 Gew.% beträgt.

12. Flüssigkristallines Medium nach einem oder mehreren der Ansprüche 1-11, **dadurch gekennzeichnet, dass** der Anteil einer oder mehrerer Verbindungen der Formeln IA*-ID* im Gesamtgemisch 0,001 - 6 Gew.% beträgt.

13. Flüssigkristallines Medium nach einem oder mehreren der Ansprüche 1-12, **dadurch gekennzeichnet, dass** das Medium ein oder mehrere Additive enthält.

14. Flüssigkristallines Medium nach einem oder mehreren der Ansprüche 1-13, **dadurch gekennzeichnet, dass** das Additiv ausgewählt ist aus der Gruppe UV-Absorber, Antioxidantien, Nanoteilchen, Radikalfänger, pleochroitische Farbstoffe oder chirale Dotierstoffe.

15. Flüssigkristallines Medium nach einem oder mehreren der Ansprüche 1-14, **dadurch gekennzeichnet, dass** das Medium mindestens eine polymerisierbare Verbindung und gegebenenfalls einen Initiator enthält.

16. Verfahren zur Herstellung eines flüssigkristallinen Mediums nach einem oder mehreren der Ansprüche 1 bis 15, **dadurch gekennzeichnet, dass** man mindestens eine Verbindung der Formel I und mindestens eine Verbindung ausgewählt aus der Gruppe der Verbindungen der Formel IA*, IB*, IC* und ID*, mit mindestens einer weiteren flüssigkristallinen Verbindung mischt und gegebenenfalls ein oder mehrere Additive zusetzt.

17. Verfahren nach Anspruch 15, **dadurch gekennzeichnet, dass** man die Verbindungen zusätzlich mit einer polymerisierbaren Verbindung und gegebenenfalls mit einem Initiator mischt.

18. Verwendung des flüssigkristallinen Mediums nach einem oder mehreren der Ansprüche 1 bis 15 in elektrooptischen Anzeigen.

19. Elektrooptische Anzeige mit einer Aktivmatrix-Addressierung,
**dadurch gekennzeichnet, dass** sie als Dielektrikum ein flüssigkristallines Medium nach einem oder mehreren der Ansprüche 1 bis 15 enthält.

20. Elektrooptische Anzeige nach Anspruch 15, **dadurch gekennzeichnet, dass** es sich um eine ECB-, VA-, PSA-, PS-VA-, PALC-, FFS-, PS-FFS-, IPS- oder PS-IPS-Anzeige handelt.

## Claims

1. Liquid-crystalline medium based on a mixture of polar compounds having negative dielectric anisotropy, **characterised in that** it comprises at least one compound of the formula I, 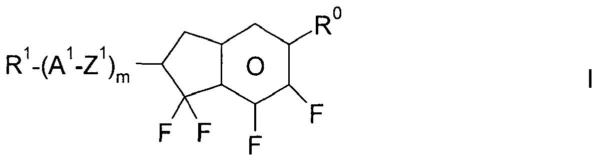 and at least one compound selected from the group of the compounds of the formulae IA*, IB*, IC* and ID*, 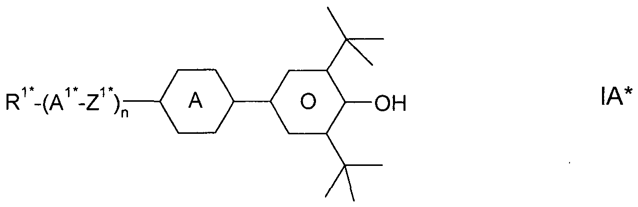 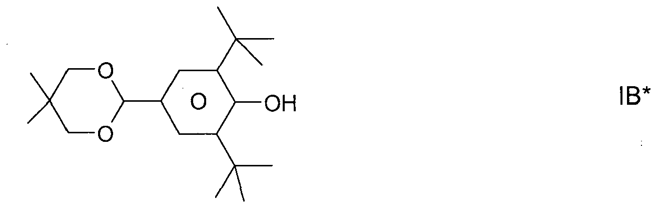 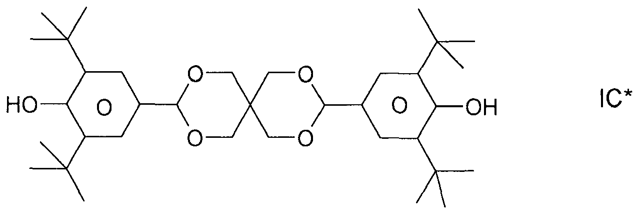 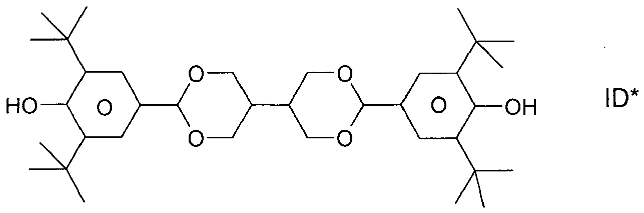 in which
R¹, R^{1*} and R⁰ each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 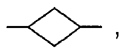 -OC≡O- or -O-CO- in such a way that O atoms are not linked directly to one another,
A¹ and A^{1*} each, independently of one another, denote
a) a 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N,
c) a radical from the group piperidine-1,4-diyl, 1,4-bicyclo[2.2.2]octylene, naphthalene-2,6-diyl, decahydronaphthalene-2,6-diyl, 1,2,3,4-tetrahydronaphthalene-2,6-diyl, phenanthrene-2,7-diyl, fluorene-2,7-diyl, where the radicals a), b) and c) may be mono- or polysubstituted by halogen atoms,
Z¹ and Z¹ each, independently of one another, denote -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -≡C- or a single bond,
m and n each, independently of one another, denote 0, 1 or 2,

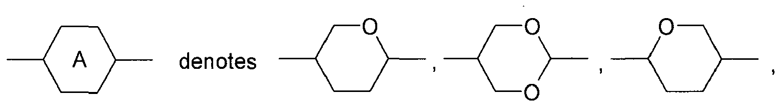

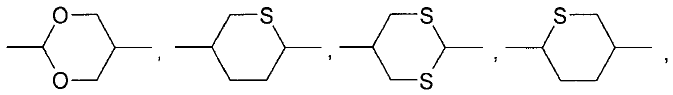

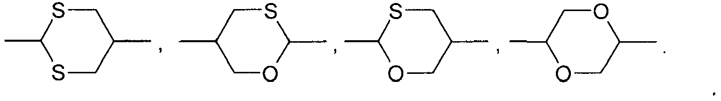

2. Liquid-crystalline medium according to Claim 1, **characterised in that** it comprises at least one compound selected from the formulae 11 to 118, 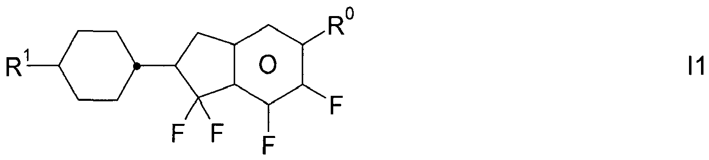 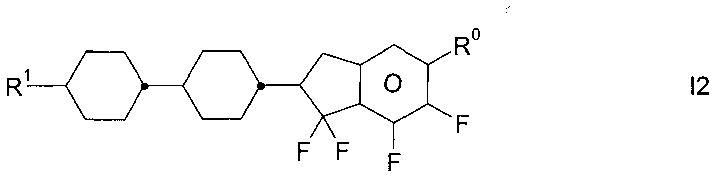 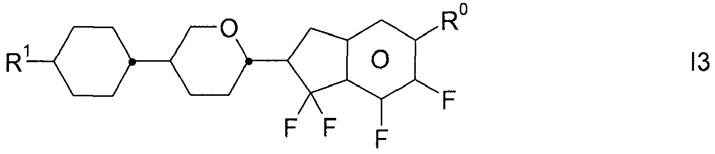 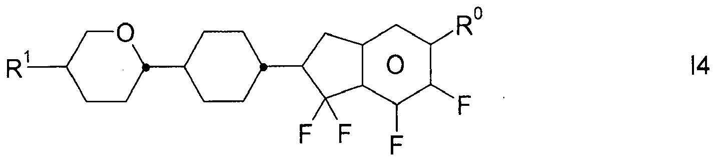 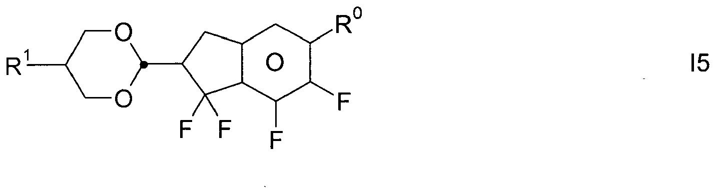 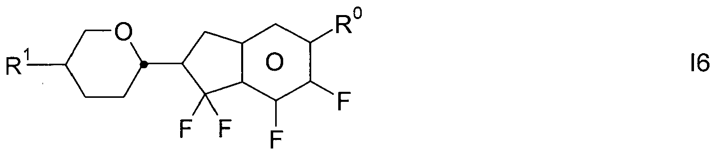 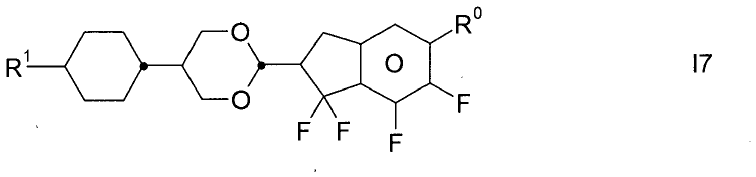 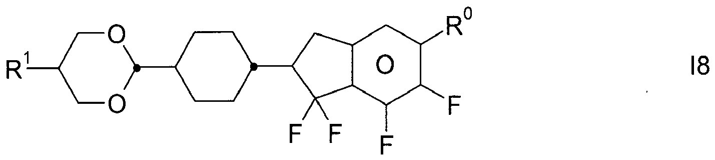 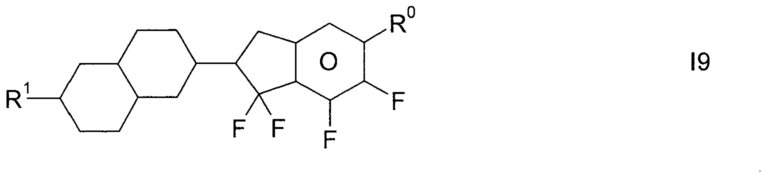 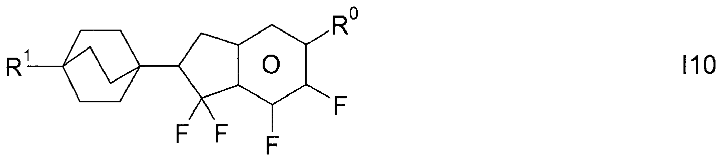 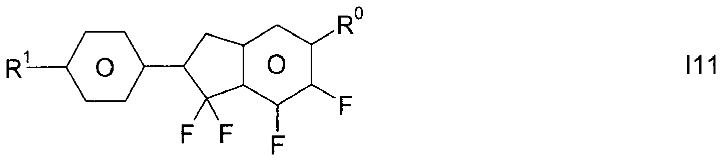 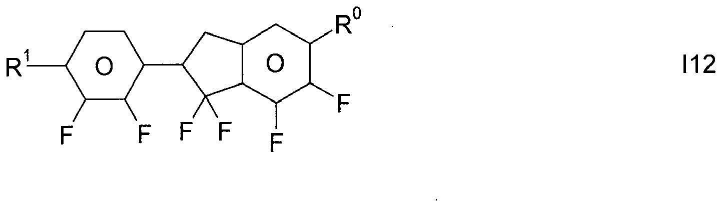 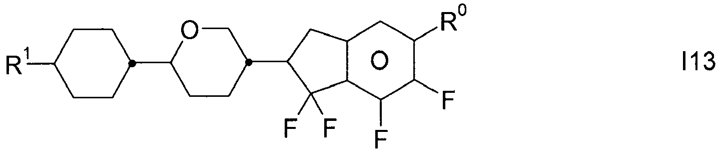 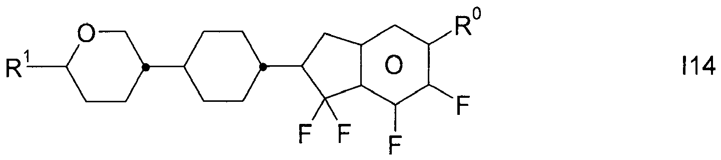 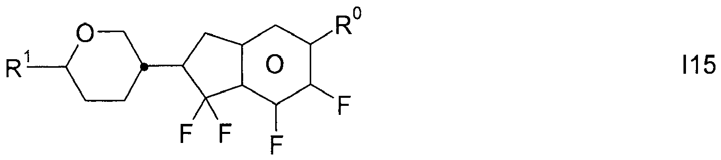 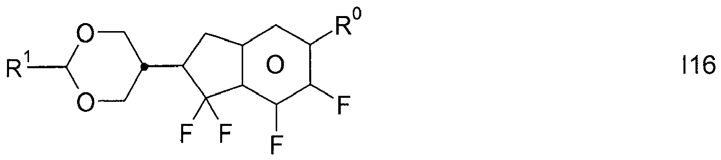 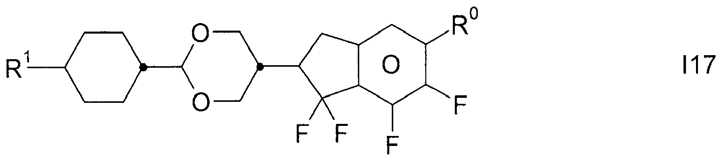 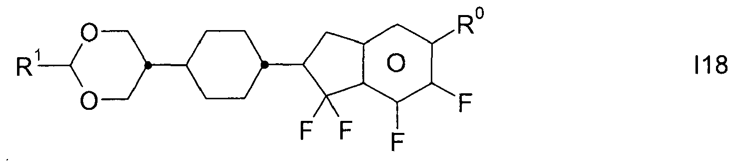 in which
R⁰ and R¹ have the meanings indicated in Claim 1.

3. Liquid-crystalline medium according to Claim 1 or 2, **characterised in that** R⁰ is H.

4. Liquid-crystalline medium according to one or more of Claims 1 to 3, **characterised in that** it comprises at least one compound of the formulae I1 and/or 115.

5. Liquid-crystalline medium according to one or more of Claims 1 to 4, **characterised in that** it comprises at least one compound of the formulae IA*-1 to IA*-6, 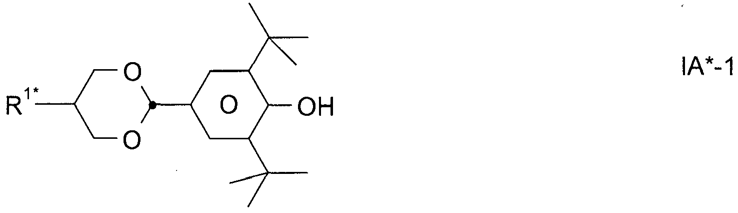 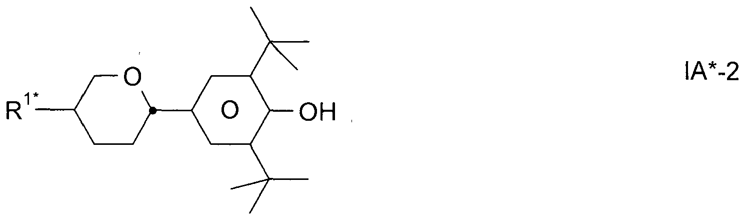 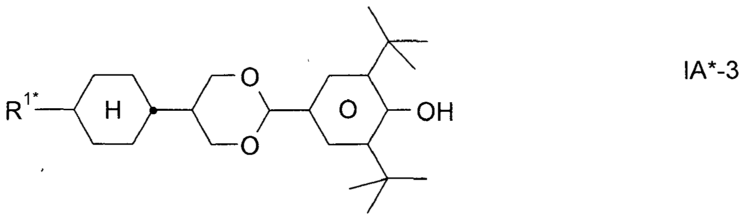 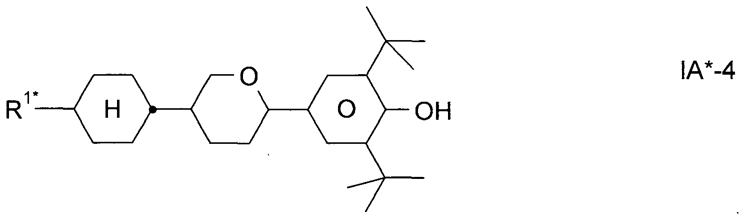 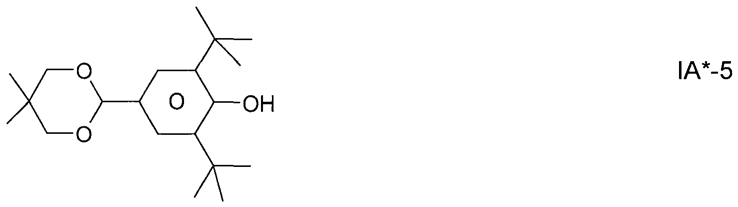 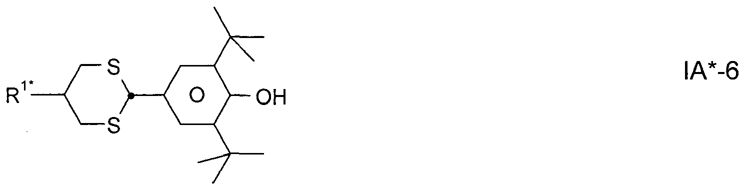 in which
R^{1*} has the meanings indicated in Claim 1.

6. Liquid-crystalline medium according to one or more of Claims 1 to 5, **characterised in that** it additionally comprises one or more compounds selected from the group of the compounds of the formulae IIA, IIB and IIC, 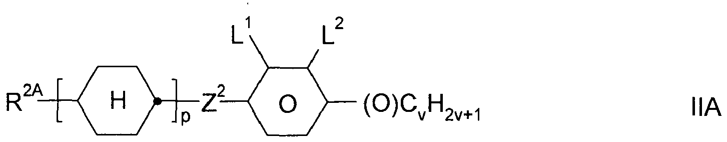 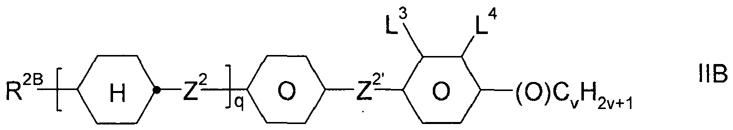 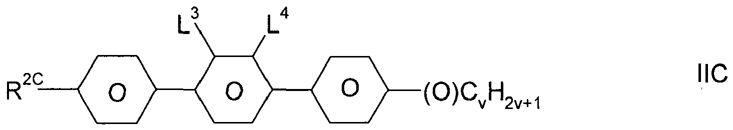 in which
R^{2A}, R^{2B} and R^{2C} each, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 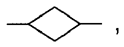 -C≡C-, -CF₂O-, -OCF₂-, -OC-O- or -O-CO- in such a way that O atoms are not linked directly to one another,
L¹⁻⁴ each, independently of one another, denote F or Cl,
Z² and Z^{2'} each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p denotes 1 or 2, and, in the case where Z² = single bond, p may also denote 0,
q denotes 0 or 1, and
v denotes 1 to 6.

7. Liquid-crystalline medium according to one or more of Claims 1 to 6, **characterised in that** it additionally comprises one or more compounds of the formula III, 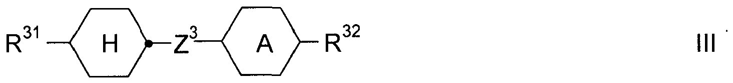 in which
R³¹ and R³² each, independently of one another, denote a straight-chain alkyl, alkoxyalkyl or alkoxy radical having up to 12 C atoms, and
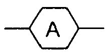 denotes 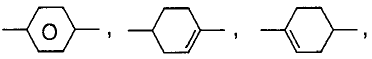 or 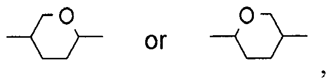
Z³ denotes a single bond, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

8. Liquid-crystalline medium according to one or more of Claims 1 to 7, **characterised in that** the medium additionally comprises one or more compounds of the formulae L-1 to L-11, 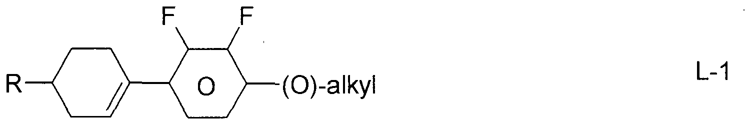 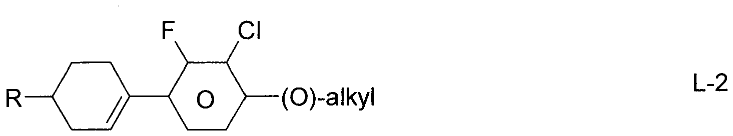 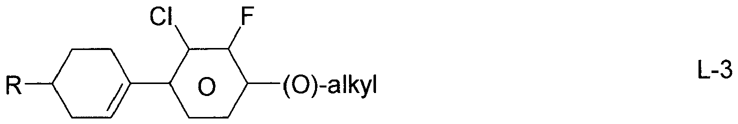 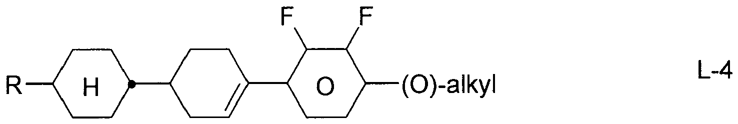 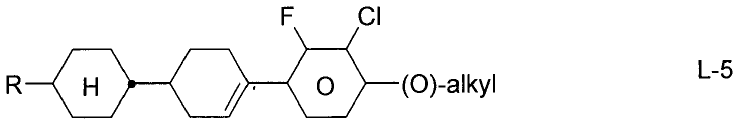 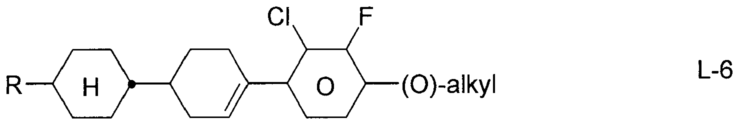 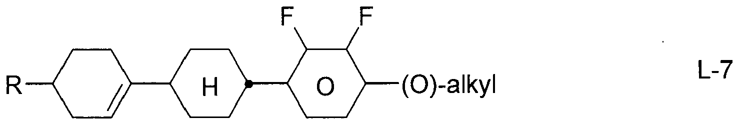 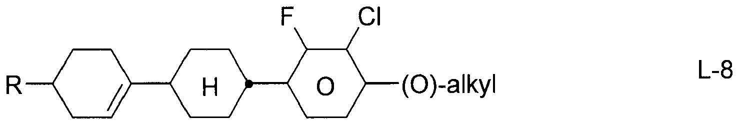 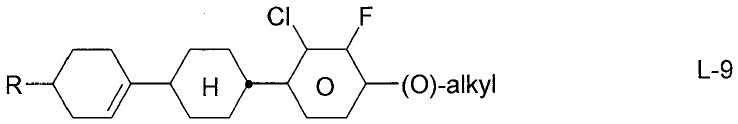 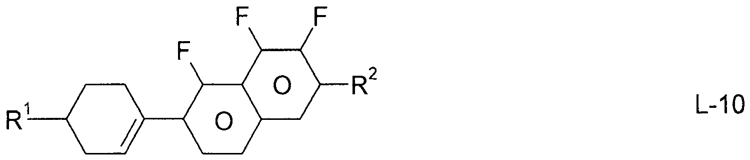 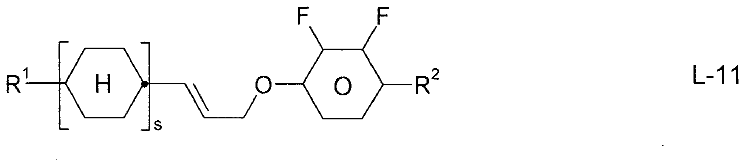 in which
R, R¹ and R² each, independently of one another, have the meanings indicated for R^{2A} in Claim 6, and alkyl denotes an alkyl radical having 1-6 C atoms, and
s denotes 1 or 2.

9. Liquid-crystalline medium according to one or more of Claims 1 to 8, **characterised in that** the medium additionally comprises one or more terphenyls of the formulae T-1 to T-21, 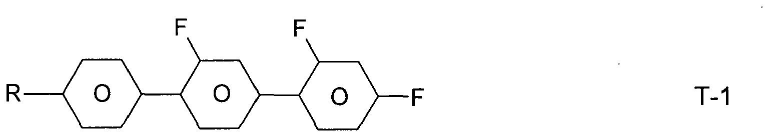 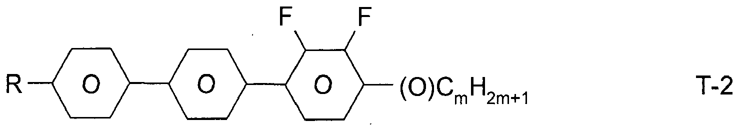 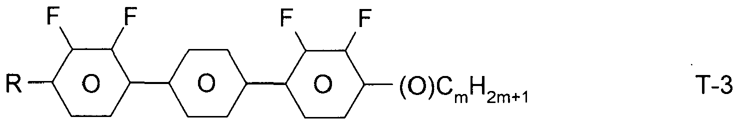 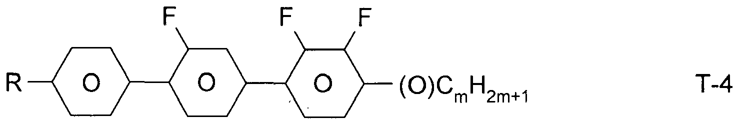 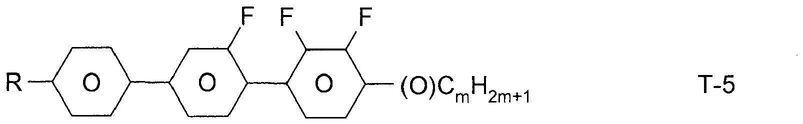 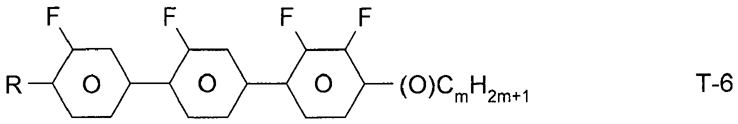 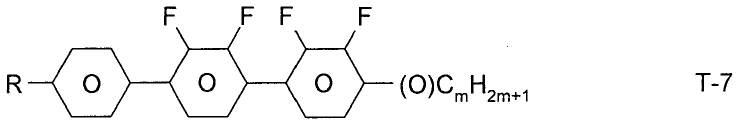 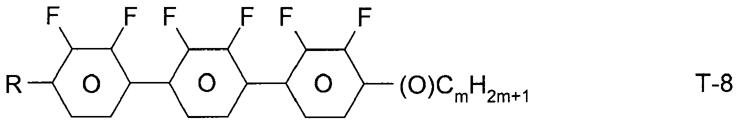 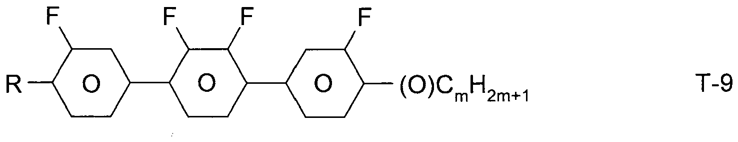 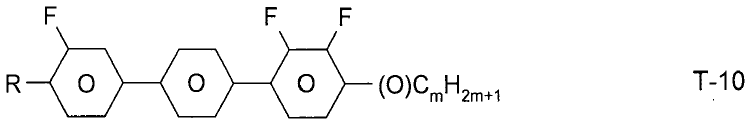 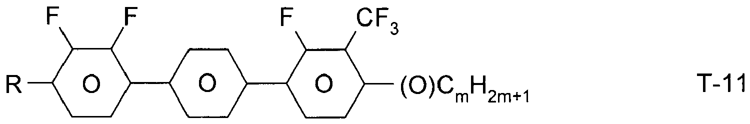 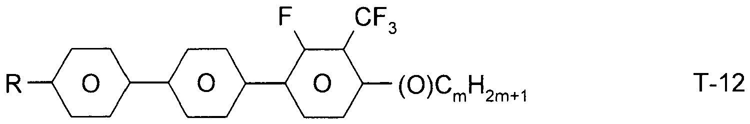 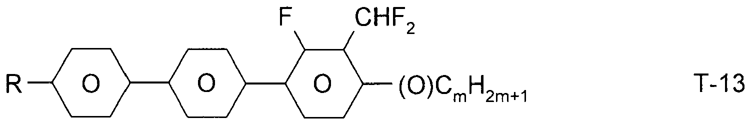 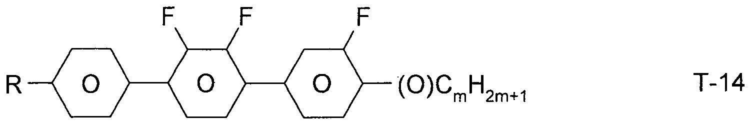 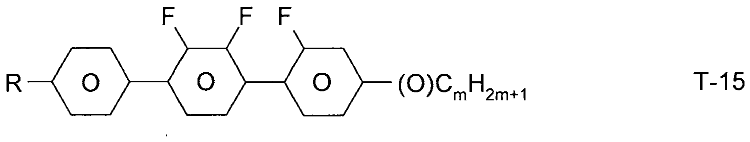 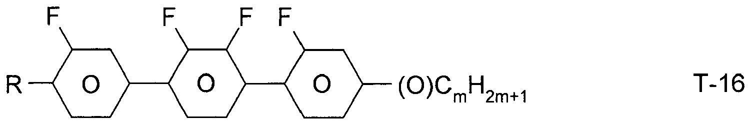 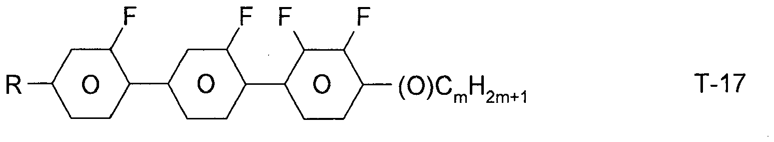 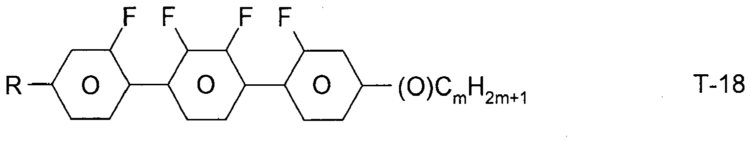 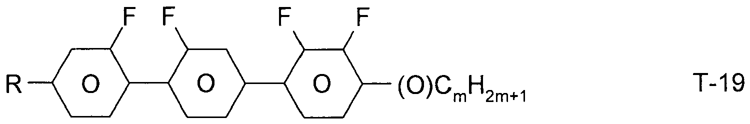 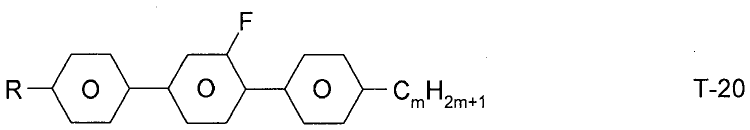 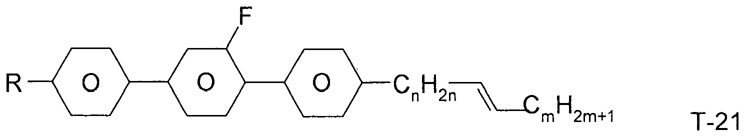 in which
R denotes a straight-chain alkyl or alkoxy radical having 1-7-C atoms, and
m denotes 1-6.

10. Liquid-crystalline medium according to one or more of Claims 1 to 9, **characterised in that** the medium additionally comprises one or more compounds of the formulae O-1 to O-16, 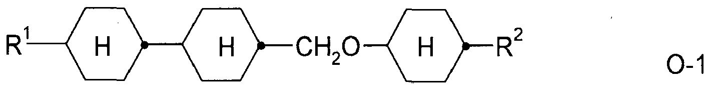 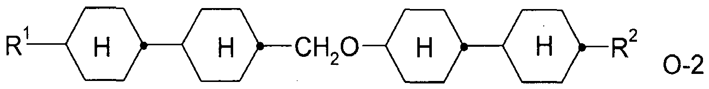 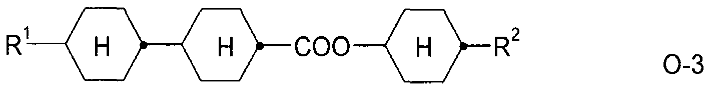 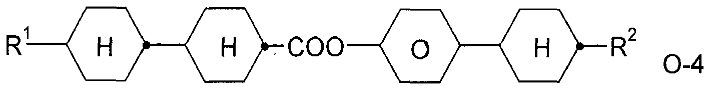 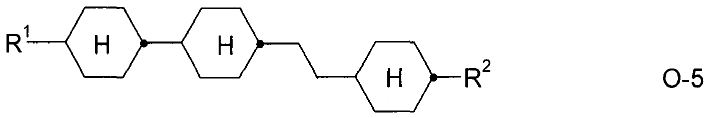 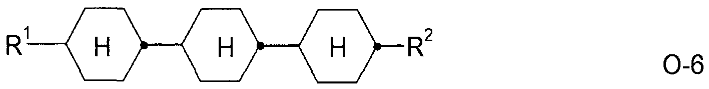 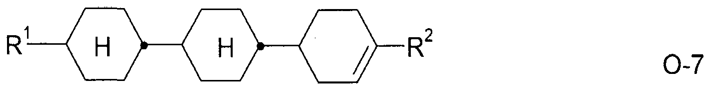 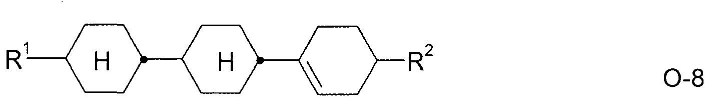 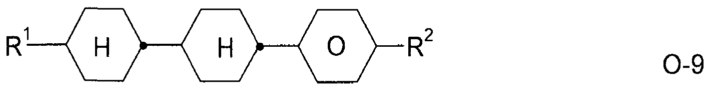 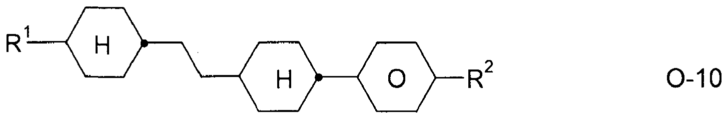 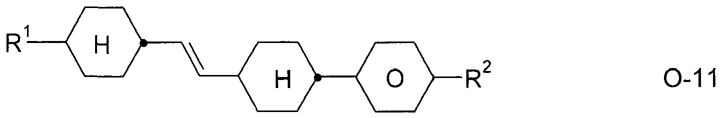 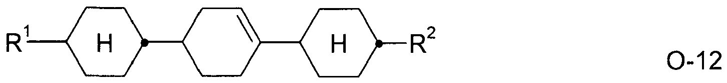 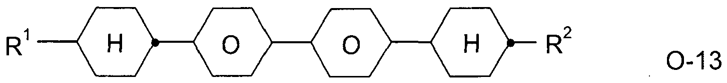 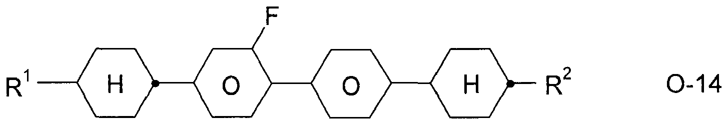 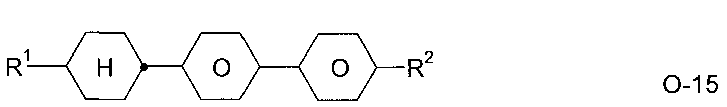 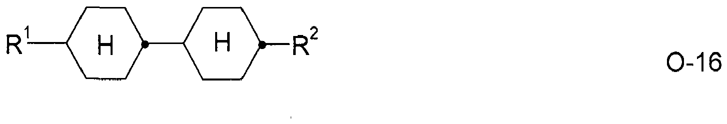 in which
R¹ and R² each, independently of one another, have the meanings indicated for R^{2A} in Claim 6.

11. Liquid-crystalline medium according to one or more of Claims 1 to 10, **characterised in that** the proportion of compounds of the formula I in the mixture as a whole is ≥ 5% by weight.

12. Liquid-crystalline medium according to one or more of Claims 1-11, **characterised in that** the proportion of one or more compounds of the formulae IA*-ID* in the mixture as a whole is 0.001 - 6% by weight.

13. Liquid-crystalline medium according to one or more of Claims 1-12, **characterised in that** the medium comprises one or more additives.

14. Liquid-crystalline medium according to one or more of Claims 1-13, **characterised in that** the additive is selected from the group UV absorbers, antioxidants, nanoparticles, free-radical scavengers, pleochroic dyes or chiral dopants.

15. Liquid-crystalline medium according to one or more of Claims 1-14, **characterised in that** the medium comprises at least one polymerisable compound and optionally an initiator.

16. Process for the preparation of a liquid-crystalline medium according to one or more of Claims 1 to 15, **characterised in that** at least one compound of the formula I and at least one compound selected from the group of the compounds of the formulae IA*, IB*, IC* and ID* are mixed with at least one further liquid-crystalline compound, and one or more additives are optionally added.

17. Process according to Claim 16, **characterised in that** the compounds are additionally mixed with a polymerisable compound and optionally with an initiator.

18. Use of the liquid-crystalline medium according to one or more of Claims 1 to 15 in electro-optical displays.

19. Electro-optical display having active-matrix addressing, **characterised in that** it contains, as dielectric, a liquid-crystalline medium according to one or more of Claims 1 to 15.

20. Electro-optical display according to Claim 19, **characterised in that** it is an ECB, VA, PSA, PS-VA, PALC, FFS, PS-FFS, IPS or PS-IPS display.

## Revendications

1. Milieu cristallin liquide basé sur un mélange de composés polaires présentant une anisotropie diélectrique négative, **caractérisé en ce qu'**il comprend au moins un composé de la formule I : 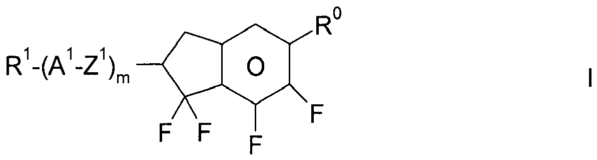 et au moins un composé choisi parmi le groupe des composés des formules IA*, IB*, IC* et ID* : 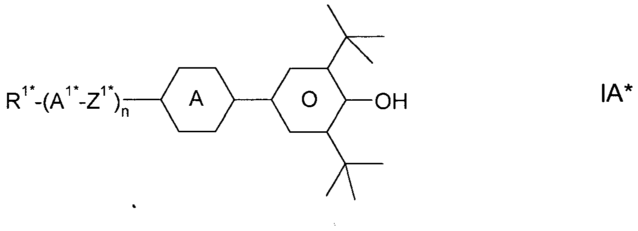 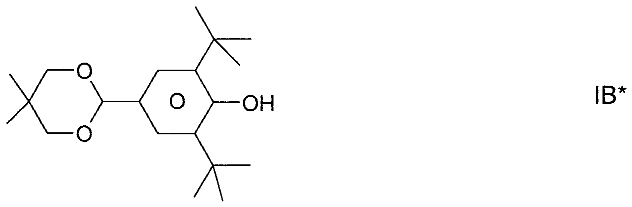 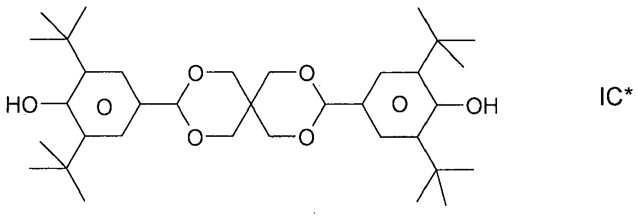 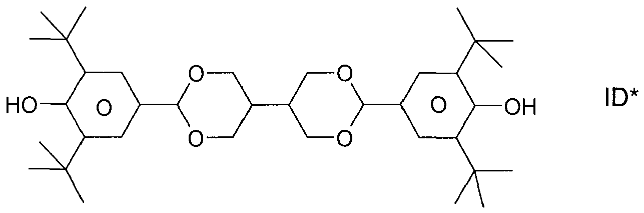 dans lesquelles :
R¹, R^{1*} et R⁰ représentent, chacun indépendamment des autres, H, un radical alkyle ou alkényle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/peuvent être remplacé(s) par -O-, -S-, 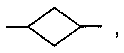 -C≡C-, -OC-O- ou -O-CO- de telle sorte que des atomes de O ne soient pas liés directement les uns aux autres,
A¹ et A^{1*} représentent, chacun indépendamment de l'autre,
a) un radical 1,4-cyclohexénylène ou 1,4-cyclohexylène, où un ou deux groupe(s) CH₂ non adjacents peut/peuvent être remplacé(s) par -O- ou -S-,
b) un radical 1,4-phénylène, où un ou deux groupe(s) CH peut/peuvent être remplacé(s) par N,
c) un radical pris parmi le groupe constitué par pipéridine-1,4-diyle, 1,4-bicyclo[2.2.2]octylène, naphtalène-2,6-diyle, décahydronaphtalène-2,6-diyle, 1,2,3,4-tétrahydronaphtalène-2,6-diyle, phénanthrène-2,7-diyle, fluorène-2,7-diyle, où les radicaux a), b) et c) peuvent être mono-substitués ou polysubstitués par des atomes d'halogène,
Z¹ et Z^{1*} représentent, chacun indépendamment de l'autre, -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C=C- ou une liaison simple,
m et n représentent, chacun indépendamment de l'autre, 0, 1 ou 2,

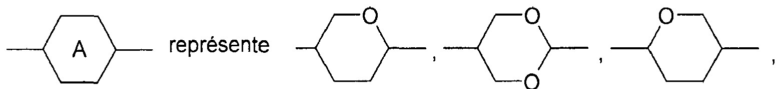

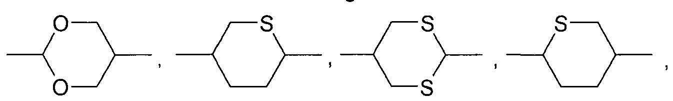

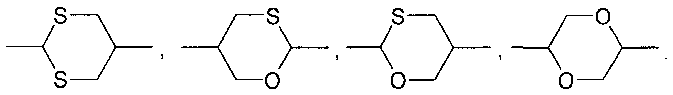

2. Milieu cristallin liquide selon la revendication 1, **caractérisé en ce qu'**il comprend au moins un composé choisi parmi les formules I1 à I18 : 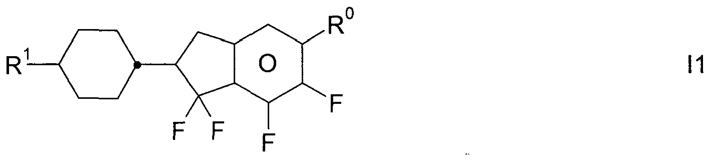 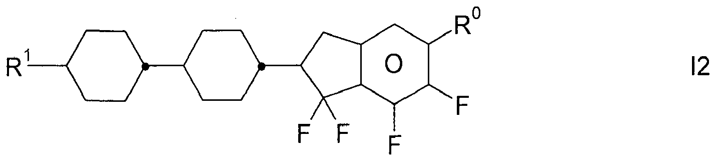 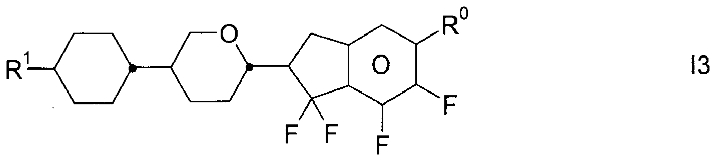 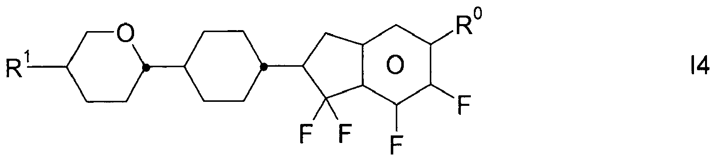 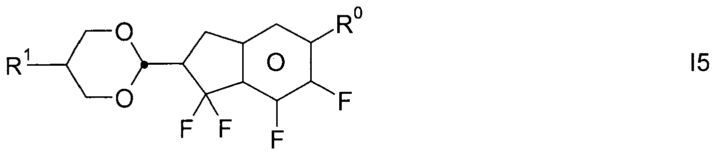 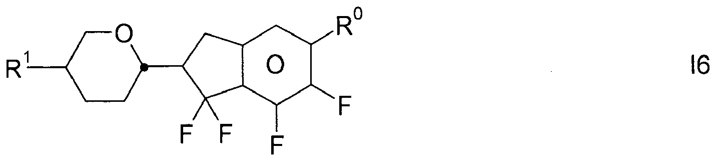 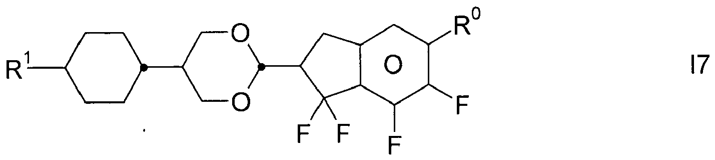 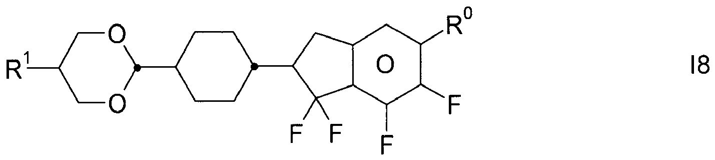 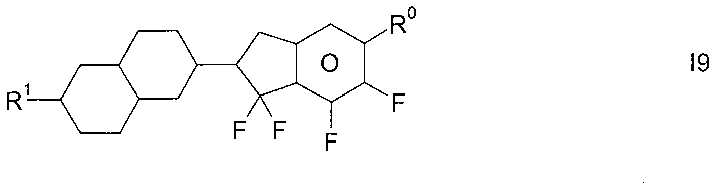 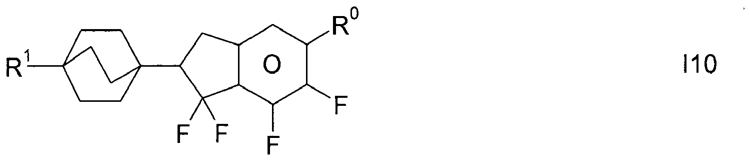 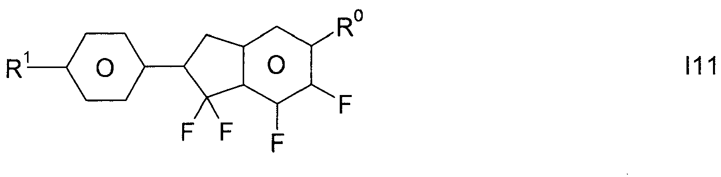 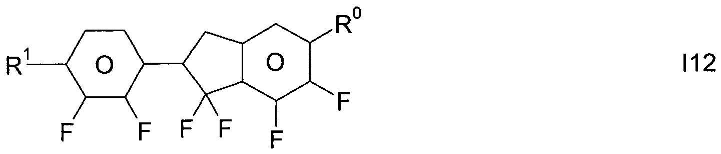 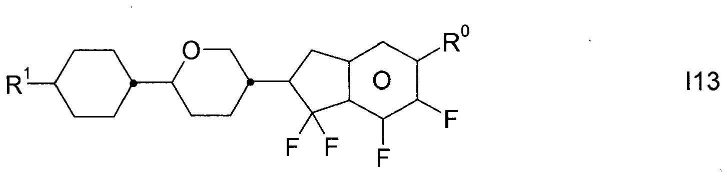 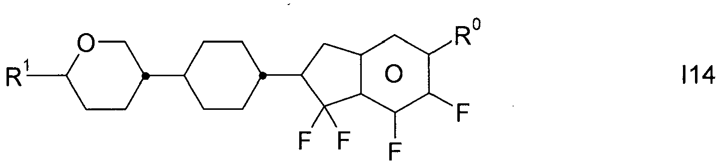 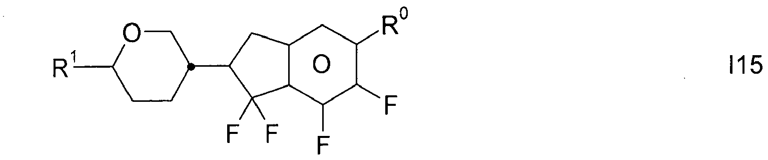 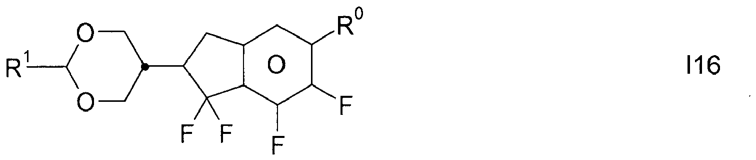 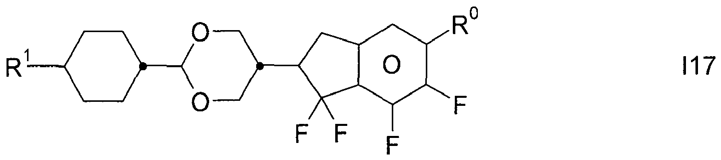 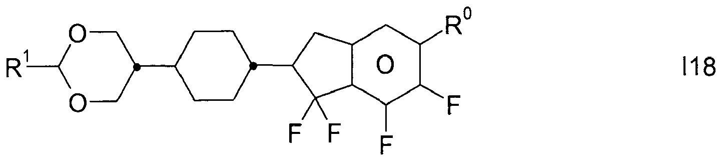 dans lesquelles :
R⁰ et R¹ présentent les significations indiquées selon la revendication 1.

3. Milieu cristallin liquide selon la revendication 1 ou 2, **caractérisé en ce que** R⁰ est H.

4. Milieu cristallin liquide selon une ou plusieurs des revendications 1 à 3, **caractérisé en ce qu'**il comprend au moins un composé des formules I1 et/ou 115.

5. Milieu cristallin liquide selon une ou plusieurs des revendications 1 à 4, **caractérisé en ce qu'**il comprend au moins un composé des formules IA*-1 à IA*-6 : 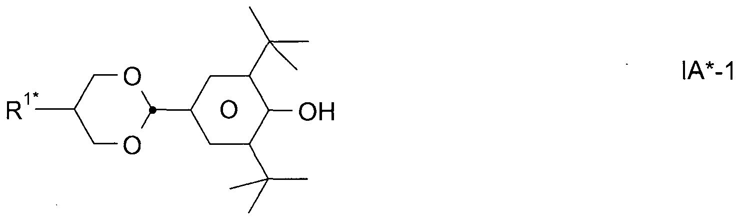 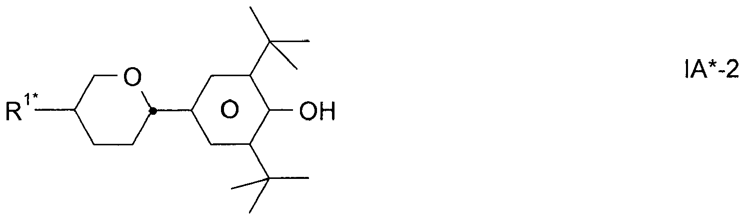 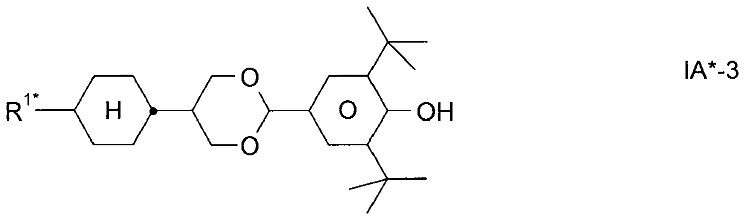 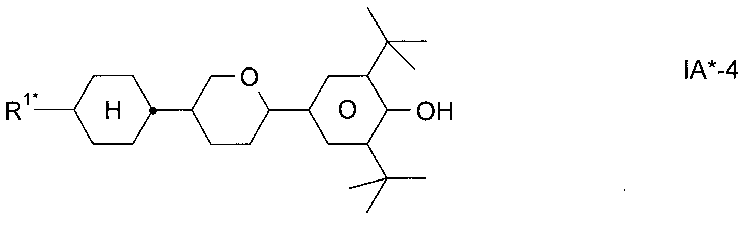 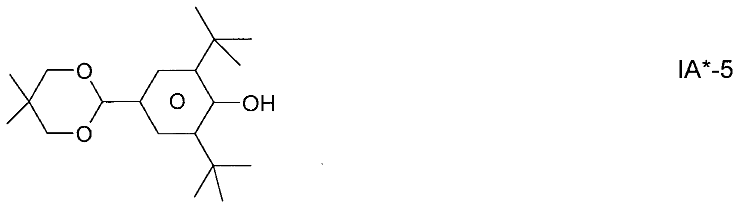 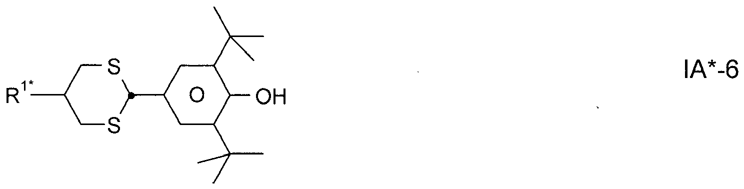 dans lesquelles :
R^{1*} présente les significations indiquées selon la revendication 1.

6. Milieu cristallin liquide selon une ou plusieurs des revendications 1 à 5, **caractérisé en ce qu'**il comprend additionnellement un ou plusieurs composé(s) choisi(s) parmi le groupe des composés des formules IIA, IIB et IIC : 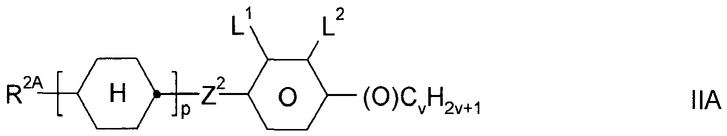 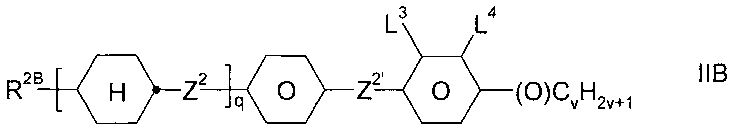 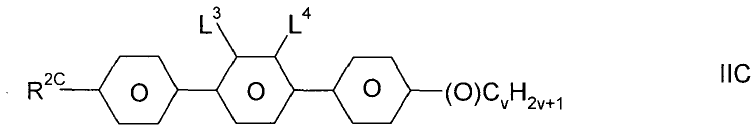 dans lesquelles :
R^{2A}, R^{2B} et R^{2C} représentent, chacun indépendamment des autres, H, un radical alkyle comportant jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/peuvent être remplacé(s) par -O-, -S-, 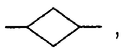 -C≡C-, -CF₂O-, -OCF₂-, -OC-O- ou -O-CO- de telle sorte que des atomes de O ne soient pas liés directement les uns aux autres,
L¹⁻⁴ représentent, chacun indépendamment des autres, F ou Cl,
Z² et Z^{2'} représentent, chacun indépendamment des autres, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-,
p représente 1 ou 2, et dans le cas où Z² = liaison simple, p peut également représenter 0,
q représente 0 ou 1, et
v représente 1 à 6.

7. Milieu cristallin liquide selon une ou plusieurs des revendications 1 à 6, **caractérisé en ce qu'**il comprend additionnellement un ou plusieurs composé(s) de la formule III : 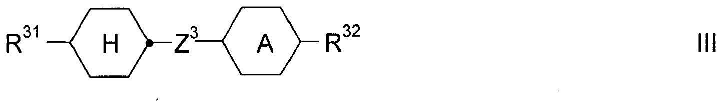 dans laquelle :
R³¹ et R³² représentent, chacun indépendamment de l'autre, un radical alkyle, alcoxyalkyle ou alcoxy en chaîne droite comportant jusqu'à 12 atomes de C, et 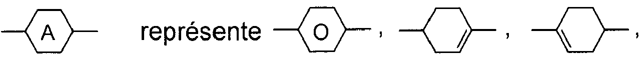 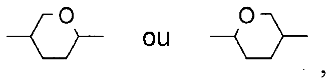
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₉-, -CF=CF-.

8. Milieu cristallin liquide selon une ou plusieurs des revendications 1 à 7, **caractérisé en ce que** le milieu comprend additionnellement un ou plusieurs composés des formules L-1 à L-11 : 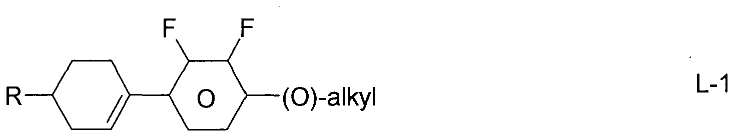 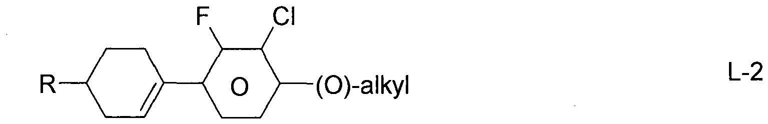 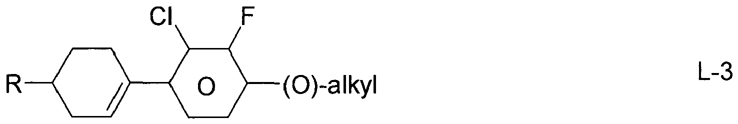 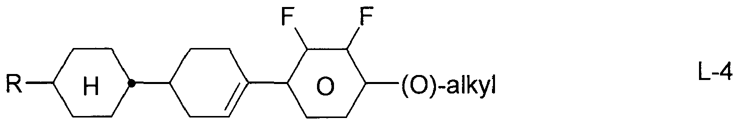 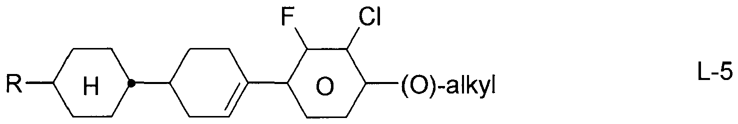 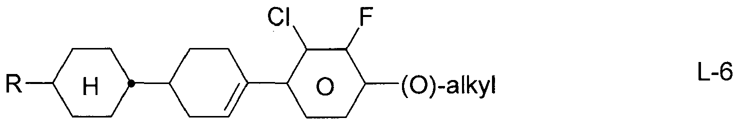 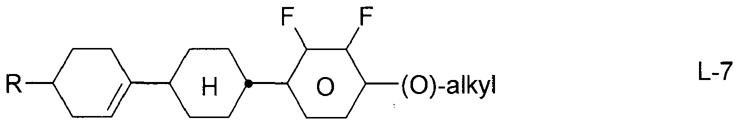 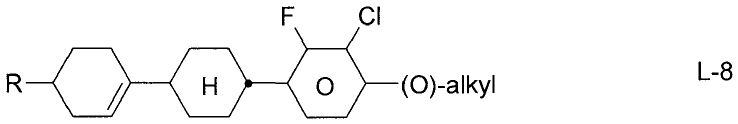 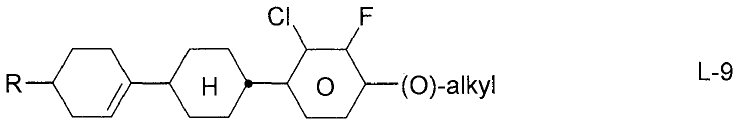 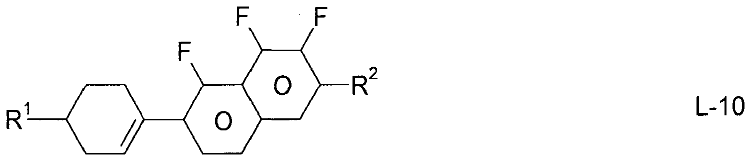 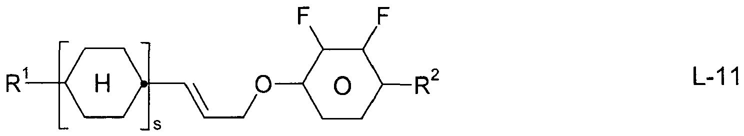 dans lesquelles :
R, R¹ et R² présentent, chacun indépendamment des autres, les significations indiquées pour R^{2A} selon la revendication 6, et alkyl représente un radical alkyle comportant 1-6 atomes de C, et
s représente 1 ou 2.

9. Milieu cristallin liquide selon une ou plusieurs des revendications 1 à 8, **caractérisé en ce que** le milieu comprend additionnellement un ou plusieurs terphényls des formules T-1 à T-21 : 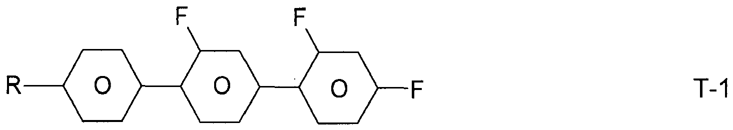 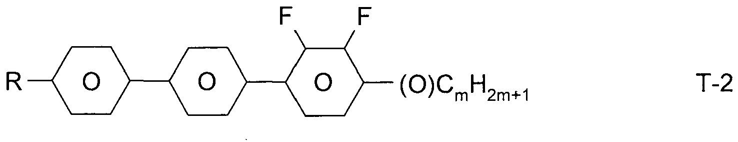 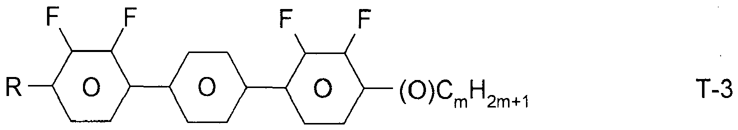 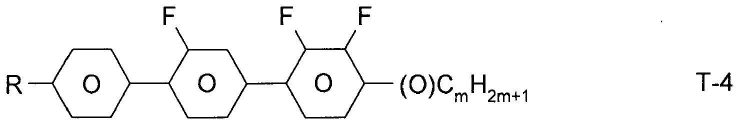 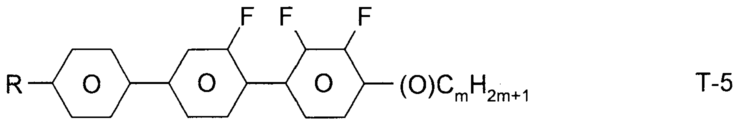 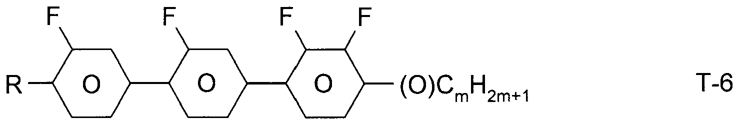 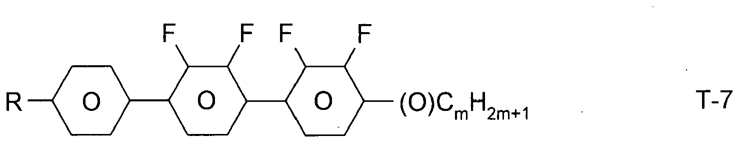 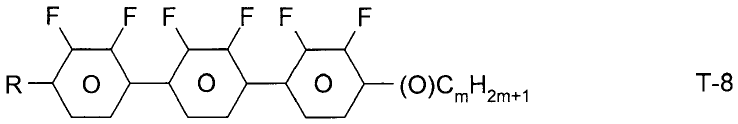 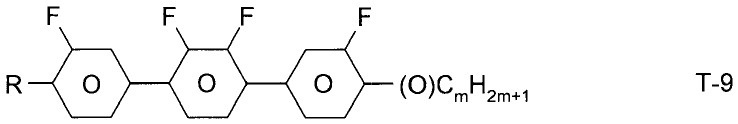 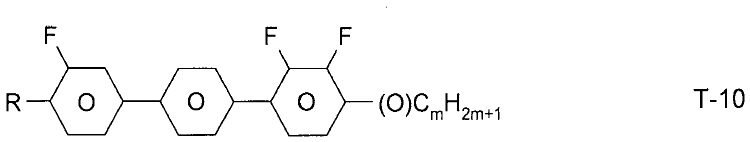 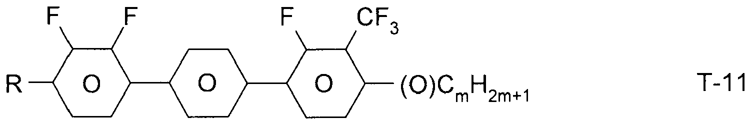 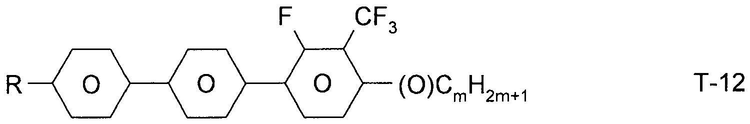 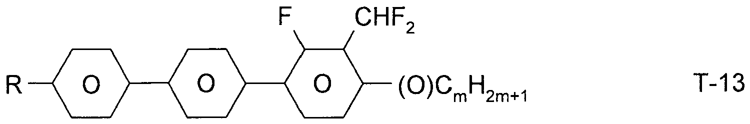 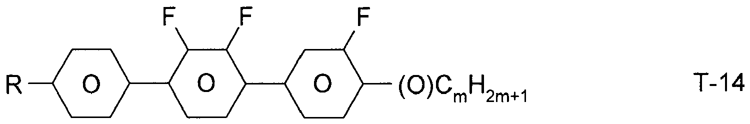 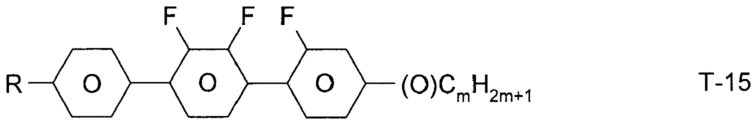 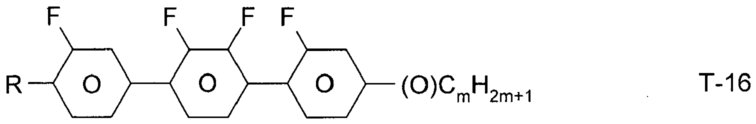 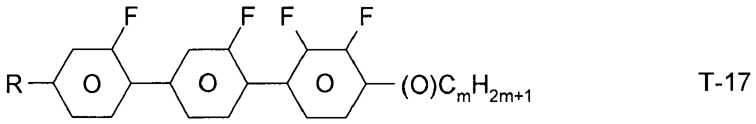 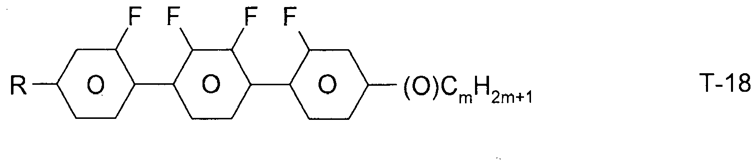 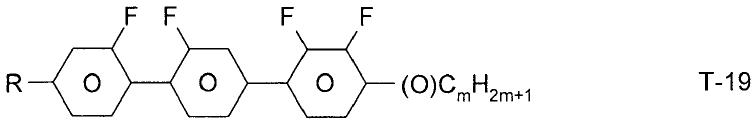 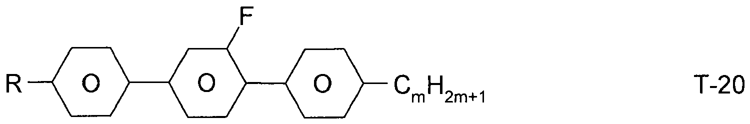 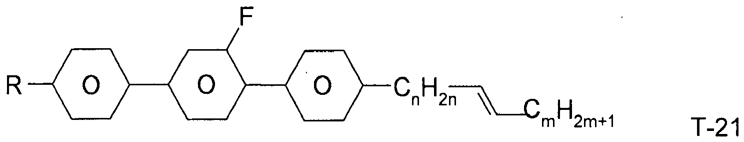 dans lesquelles :
R représente un radical alkyle ou alcoxy en chaîne droite comportant 1-7 atomes de C, et
m représente 1-6.

10. Milieu cristallin liquide selon une ou plusieurs des revendications 1 à 9, **caractérisé en ce que** le milieu comprend additionnellement un ou plusieurs composés des formules O-1 à O-16 : 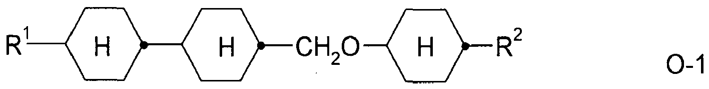 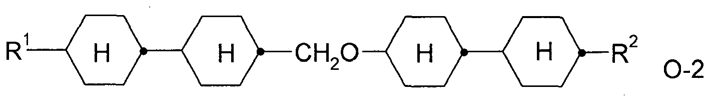 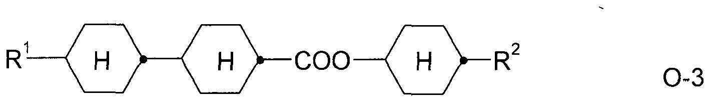 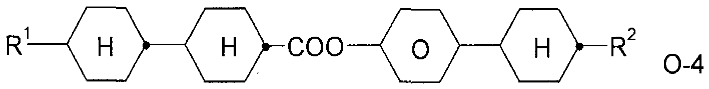 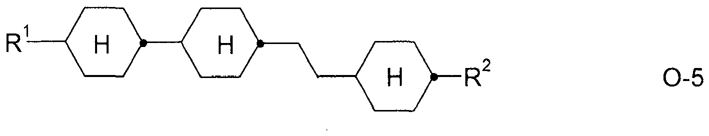 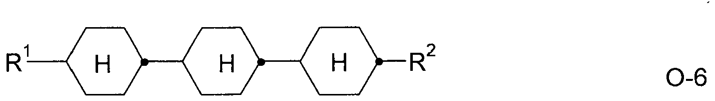 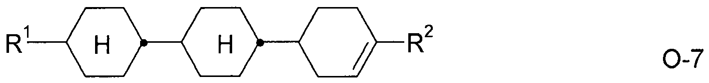 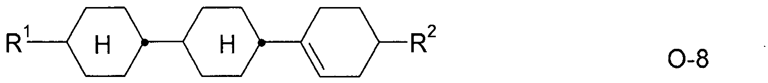 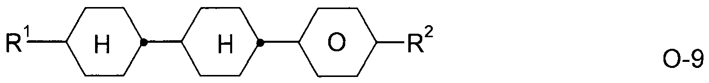 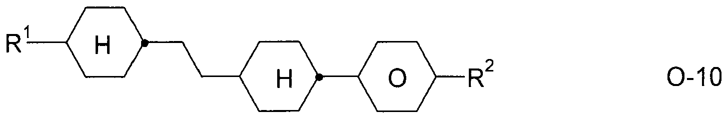 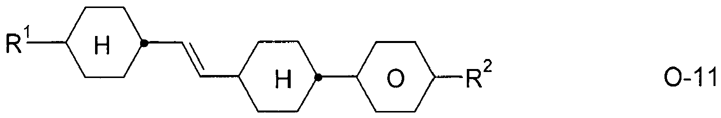 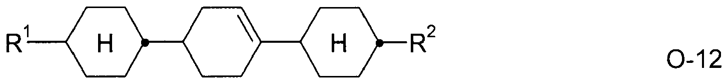 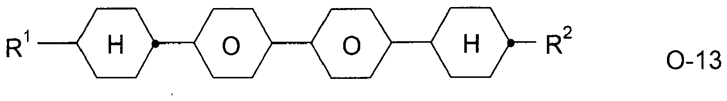 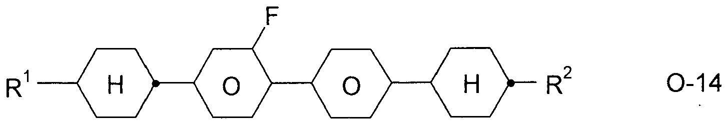 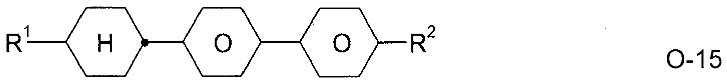 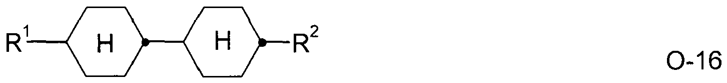 dans lesquelles :
R¹ et R² présentent, chacun indépendamment de l'autre, les significations indiquées pour R^{2A} selon la revendication 6.

11. Milieu cristallin liquide selon une ou plusieurs des revendications 1 à 10, **caractérisé en ce que** la proportion de composés de la formule I dans le mélange pris dans sa globalité est ≥ 5% en poids.

12. Milieu cristallin liquide selon une ou plusieurs des revendications 1 à 11, **caractérisé en ce que** la proportion d'un ou de plusieurs composé(s) des formules IA*-ID* dans le mélange pris dans sa globalité est de 0,001 - 6% en poids.

13. Milieu cristallin liquide selon une ou plusieurs des revendications 1 à 12, **caractérisé en ce que** le milieu comprend un ou plusieurs additif(s).

14. Milieu cristallin liquide selon une ou plusieurs des revendications 1 à 13, **caractérisé en ce que** l'additif est choisi parmi le groupe des absorbeurs UV, des antioxydants, des nanoparticules, des agents séquestrants de radicaux libres, des colorants pléochroïques ou des dopants chiraux.

15. Milieu cristallin liquide selon une ou plusieurs des revendications 1 à 14, **caractérisé en ce que** le milieu comprend au moins un composé polymérisable et en option, un initiateur.

16. Procédé pour la préparation d'un milieu cristallin liquide selon une ou plusieurs des revendications 1 à 15, **caractérisé en ce qu'**au moins un composé de la formule I et au moins un composé choisi parmi le groupe des composés des formules IA*, IB*, IC* et ID* sont mélangés avec au moins un autre composé cristallin liquide, et un ou plusieurs additif(s) est/sont en option ajouté(s).

17. Procédé selon la revendication 16, **caractérisé en ce que** les composés sont additionnellement mélangés avec un composé polymérisable et en option, avec un initiateur.

18. Utilisation du milieu cristallin liquide selon une ou plusieurs des revendications 1 à 15 dans des affichages électro-optiques.

19. Affichage électro-optique présentant un adressage par matrice active, **caractérisé en ce qu'**il contient, en tant que diélectrique, un milieu cristallin liquide selon une ou plusieurs des revendications 1 à 15.

20. Affichage électro-optique selon la revendication 19, **caractérisé en ce qu'**il s'agit d'un affichage ECB, VA, PSA, PS-VA, PALC, FFS, PS-FFS, IPS ou PS-IPS.
